(19) Europäisches Patentamt / European Patent Office / Office européen des brevets

(11) **EP 3 458 701 B1**

(12) **FASCICULE DE BREVET EUROPEEN**

(45) Date de publication et mention de la délivrance du brevet:
**06.05.2020 Bulletin 2020/19**

(51) Int Cl.:
*F02G 5/02* *(2006.01)* *F02B 29/04* *(2006.01)*
*F02M 31/083* *(2006.01)* *F02M 26/25* *(2016.01)*

(21) Numéro de dépôt: **16735905.8**

(22) Date de dépôt: **18.05.2016**

(86) Numéro de dépôt international:
**PCT/FR2016/051169**

(87) Numéro de publication internationale:
**WO 2017/198911 (23.11.2017 Gazette 2017/47)**

(54) **MOTEUR À COMBUSTION INTERNE ET PROCÉDÉ POUR AMÉLIORER LE RENDEMENT D'UN MOTEUR À COMBUSTION INTERNE**

VERBRENNUNGSMOTOR UND VERFAHREN ZUR VERBESSERUNG DER EFFIZIENZ EINES VERBRENNUNGSMOTORS

INTERNAL COMBUSTION ENGINE AND METHOD FOR IMPROVING THE EFFICIENCY OF AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**27.03.2019 Bulletin 2019/13**

(73) Titulaires:
• **Kyrdyn**
**91190 Gif-sur-Yvette (FR)**
• **Pontet, Maguelone**
**91510 Lardy (FR)**
• **Pontet, Silvère**
**91400 Orsay (FR)**
• **Pontet, Léonard**
**91300 Massy (FR)**
• **Lesire, Denis**
**92340 Bourg La Reine (FR)**

(72) Inventeur: **PONTET, Bernard**
**91690 Saint-Cyr-La-Riviere (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
WO-A2-2009/086187    DE-A1-102007 005 246
DE-A1-102012 206 372    DE-U1-202013 006 352
FR-A1- 2 308 785    FR-A1- 2 876 418
FR-A1- 3 000 140    JP-A- 2011 047 376
US-A- 4 700 542    US-B1- 8 468 822

**Description**

La présente invention concerne un moteur à combustion interne à haut rendement.

La présente invention concerne également un procédé pour améliorer le rendement d'un moteur à combustion interne en abaissant la température du gaz mis en relation thermique avec la source froide et/ou en élevant la température du gaz mis en relation thermique avec la source chaude.

On connaît les moteurs à combustion interne utilisant des mécanismes volumétriques, typiquement à cylindre et piston. Les moteurs à allumage commandé notamment par bougie (moteurs dits « à essence » ou « Otto »), ainsi que les moteurs à allumage par compression (dits « diesel »), bien connus, appartiennent à cette catégorie. Le mécanisme volumétrique définit une chambre de travail à volume variable pour un gaz de travail. Dans la chambre de travail le gaz subit en particulier au moins une partie terminale d'une étape de compression, ensuite une étape de combustion puis au moins une partie initiale d'une étape de détente. La température maximale, atteinte en cours ou en fin de combustion, peut être très élevée sans endommager le moteur car la température des surfaces exposées au contact avec le gaz de travail se stabilise à une valeur moyenne plus basse qui en outre est abaissée par évacuation naturelle de chaleur et/ou par un système de refroidissement.

Grâce à la température maximale élevée subie par le gaz, les moteurs précités ont un rendement relativement bon. Classiquement le volume de la chambre de travail en fin de détente du gaz est le même qu'en début de compression. Le gaz termine sa détente dans la chambre à une température et une pression beaucoup plus élevées qu'en début de compression dans la chambre. En conséquence, une énergie considérable doit être évacuée pour que le cycle suivant soit identique à celui qui vient de se terminer.

On peut prolonger la détente au-delà du volume correspondant au début de la compression. Cette possibilité est rarement mise en œuvre car elle nécessite d'augmenter considérablement la taille maximale de la chambre (la cylindrée d'un mécanisme à cylindre et piston). Une telle augmentation s'accompagne de toute une série d'inconvénients (poids, encombrement, coûts, frottements, pertes thermiques etc.) généralement considérée comme rédhibitoire au vu du faible gain envisageable. Car même si on détendait le gaz jusqu'à la pression de début de compression dans la chambre de travail, sa température de fin de détente dans la chambre serait considérablement plus élevée qu'en début de compression dans la chambre et les pertes d'énergie seraient donc loin d'être annulées.

La tendance de ces dernières décennies consiste au contraire à réduire la cylindrée au moyen d'une suralimentation, en particulier par turbocompresseur. Le gaz sortant de sa phase initiale de détente dans la chambre de travail subit une détente complémentaire dans la turbine du turbocompresseur. Le compresseur du turbocompresseur, entraîné par la turbine, pré-comprime le gaz de travail avant son entrée dans la chambre de travail.

Souvent le gaz pré-comprimé et donc chauffé par la pré-compression traverse un inter-refroidisseur (« intercooler ») où le gaz se refroidit avant de pénétrer dans la chambre de travail. Ceci a pour but d'augmenter la masse de gaz traitée dans le mécanisme volumétrique à chaque cycle.

Plus récemment on a vu apparaître notamment dans le domaine des véhicules routiers la tendance du « downsizing » (réduction de taille) consistant à réaliser des moteurs fortement suralimentés ayant une puissance et un couple très élevés par rapport à leur cylindrée. De tels moteurs sont légers et performants, alors que leurs pertes par frottement et leurs pertes thermiques sont réduites. Ils ont aussi l'avantage de se comporter comme des moteurs de petite cylindrée classiques lors du fonctionnement sous faible charge, ce qui permet d'afficher pour des valeurs officielles flatteuses, mais peu réalisables en pratique, pour la consommation et les émissions de $CO_2$ des véhicules ainsi équipés.

En réalité dans un moteur suralimenté le différentiel de pression entre le début de la compression dans la chambre et la fin de détente dans la chambre est plus grand que dans un moteur atmosphérique. Il y a donc une perte supplémentaire qui n'est que très partiellement récupérée par le turbocompresseur. Les turbocompresseurs actuels sont équipés d'un by-pass permettant à une partie des gaz d'échappement de contourner la turbine du turbocompresseur. A défaut, chaque cycle recommencerait à une pression plus élevée que le précédent.

D'après le premier principe de la thermodynamique, l'énergie mécanique W théoriquement produite par le cycle est égale à la différence entre la chaleur $Q_H$ fournie au gaz par la source chaude et la chaleur $Q_B$ rendue par le gaz à la source froide. On a donc W = $(Q_H - Q_B)$. Le rendement théorique $E_t$ est égal au rapport de l'énergie mécanique théoriquement produite par la machine, à l'énergie thermique qui lui a été fournie à cet effet. Ainsi, $E_t$ = W / $Q_H$, donc $E_t$ = $(Q_H - Q_B)$ / $Q_H$. Ce rendement est dit « théorique » car il néglige les pertes dues aux frottements dans le moteur et aux imperfections du cycle réel par rapport au cycle théorique. Ces pertes se traduisent par un supplément de chaleur évacuée à l'échappement et par les fluides de refroidissement et de lubrification. Les moteurs à combustion interne de type diesel actuels offrent un rendement théorique de l'ordre de 0,65. Le rendement théorique des moteurs à essence est encore plus faible. Ce chiffre démontre les limites des progrès pouvant être escomptés par des améliorations de détail sur les moteurs actuels, et tout l'intérêt industriel qu'il y aurait à faire des progrès décisifs sur le cycle thermodynamique théorique en vue d'améliorer son rendement théorique, de façon que cette amélioration du rendement théorique induise une amélioration correspondante du rendement réel d'une machine conçue pour mettre en œuvre aussi bien que possible le cycle théorique amélioré. Dans un cycle de Carnot, qui est le cycle théorique ayant le meilleur rendement, un rendement de 0,65 correspond à une source chaude à environ 900K. La température maximale bien plus élevée atteinte dans les moteurs à combustion interne correspondrait dans un cycle de Carnot à un rendement théorique compris entre 0,80 et 0,90. Malgré le caractère irréalisable du cycle de Carnot, la constatation qui précède confirme le potentiel de progrès des moteurs à combustion interne par un perfectionnement de leur cycle théorique sans qu'il soit besoin de recourir à des températures plus extrêmes que celles actuellement pratiquées.

On peut augmenter le rendement théorique en augmentant $Q_H$ sans augmenter ou sans autant augmenter $Q_B$, ou encore en diminuant $Q_B$ sans diminuer ou sans autant diminuer $Q_H$, ou encore en augmentant $Q_H$ tout en diminuant $Q_B$.

Selon le deuxième principe de la thermodynamique tel qu'appliqué à un moteur à combustion interne, cela est possible en augmentant le niveau général de la température de combustion sans augmenter ou sans autant augmenter la température du rejet gazeux du moteur, ou en diminuant la température du rejet gazeux sans diminuer ou sans autant diminuer le niveau général de la température de combustion, ou encore en augmentant le niveau général de la température de combustion tout en diminuant la température du rejet gazeux.

On relève au passage que ces considérations rendent compte de la perte de rendement théorique des moteurs turbocompressés classiques : comme le rapport volumétrique de leur mécanisme volumétrique est en général inférieur à celui d'un moteur atmosphérique, leur température de début de combustion est abaissée si un inter-refroidisseur est prévu, ou bien leur température de fin de détente est accrue en l'absence d'inter-refroidisseur.

On a proposé des moteurs qui vont dans le sens des considérations qui précèdent, basées sur les deux premiers principes de la thermodynamique.

Le document JP 2004 270625 A propose un moteur à source chaude externe dont la source chaude est l'échappement d'un moteur à combustion interne, et dont la source froide est l'admission du même moteur à combustion interne, laquelle admission reçoit donc des calories rejetées par le moteur à source chaude externe.

Une telle structure très complexe à réaliser, encombrante et coûteuse, a en outre pour effet d'élever considérablement le niveau général de température dans le moteur à combustion interne et du côté chaud de l'échangeur constituant la source chaude du moteur à source chaude externe. En outre, les gaz d'échappement du moteur à combustion interne sont encore très chauds après avoir cédé des calories en tant que source chaude du moteur à source chaude externe.

Le US 4,520,628 propose un moteur Stirling dont la source chaude est constituée par l'échappement à très haute température (1100 °C, soit environ 1375 K) d'un moteur à combustion interne. En outre, l'échappement du moteur à combustion interne est à très haute pression pour favoriser l'échange thermique avec la source chaude du moteur Stirling. Avant d'entrer dans le moteur à combustion interne, le gaz de travail du moteur à combustion interne est réchauffé par les gaz d'échappement émanant de la source chaude du Stirling. Le but du dispositif est de favoriser le Stirling au point que le moteur à combustion interne devient à l'extrême une simple source de chauffage ne produisant aucune énergie mécanique.

Ce dispositif est complexe et fait fonctionner le moteur à combustion interne à un niveau général de température extrêmement élevé. Les gaz sortent du système à 200 °C (475 K). Cette valeur peut paraître relativement favorable, c'est-à-dire correspondant à une relativement faible quantité de chaleur rendue à la source froide, mais en réalité il faut ajouter à celle-ci la chaleur rendue par le gaz de travail du Stirling à sa propre source froide. Au total le gain de rendement théorique par rapport à un diesel ou autre moteur à combustion interne classique fonctionnant seul est modeste.

Dans l'ensemble, les dispositifs connus prétendent surtout améliorer le rendement lorsque le moteur fonctionne au voisinage de la pleine charge, avec des gaz d'échappement à des températures très élevées à la sortie du mécanisme volumétrique. En pratique, l'intérêt est limité : dans la plupart des applications, notamment routières, les moteurs fonctionnent le plus souvent sous charge relativement faible.

On connaît par ailleurs des moteurs qui visent à juguler les émissions d'oxydes d'azote (NOx) par des processus de combustion particuliers commençant à des températures relativement élevées dans un gaz de travail appauvri en oxygène obtenu en mélangeant de l'air avec du gaz d'échappement recyclé (EGR = « Exhaust Gas Recycling »). Alors que l'EGR classique comporte un refroidisseur pour éviter qu'il réchauffe le gaz d'admission, on utilise ici au contraire un EGR non-refroidi, combiné parfois avec une mise en température de l'air d'admission, ou encore avec un réchauffage du gaz de travail dans la chambre de travail par injection d'air plus chaud dans la chambre de travail ou par injection et combustion de carburant dans la chambre de travail avant le point mort haut (« PMH ») du piston.

Toutes ces techniques orientées vers la dépollution vont plutôt dans le sens d'une dégradation du rendement théorique dans la mesure où elles visent un abaissement de la température de combustion et conduisent à une élévation de la température d'échappement du fait de l'étalement du processus de combustion pendant la course de détente.

Selon d'autres techniques plus classiques, l'air d'admission est sélectivement réchauffé notamment quand le moteur fonctionne à froid. Selon le US 8,042,335 B2, l'air à la pression atmosphérique est sélectivement réchauffé en passant pour partie au contact du collecteur d'échappement. Tout le cycle thermodynamique est alors déplacé vers les hautes températures, sans bénéfice pour le rendement théorique. Selon le US 8,037,872 B2, l'air comprimé par le compresseur passe par deux inter-refroidisseurs successifs. Toutefois le deuxième inter-refroidisseur peut devenir un échangeur de chaleur avec le liquide de refroidissement, lui-même éventuellement réchauffé préalablement par un réchauffeur. Là encore, lors du fonctionnement en réchauffage de l'air d'admission, tout le cycle est déplacé vers les hautes températures et le réchauffeur consomme de l'énergie.

Différents moteurs dont les gaz d'admission sont réchauffés par les gaz d'échappement après compression sont connus de FR2876418, FR3000140, WO2009/086187, US4700542, DE102007005246, FR2308785, DE202013006352U, US8468822, DE102012206372 ou JP2011047376.

Le but de la présente invention est de proposer un moteur à combustion interne offrant un rendement amélioré avec des moyens relativement simples.

Un but plus particulier est d'améliorer le rendement d'un moteur à combustion interne sous faible ou moyenne charge.

L'invention est définie par la revendication 1.

Par « point mort haut » et « point mort bas », ou respectivement « PMH » et « PMB », on entend deux positions de l'organe mobile pour lesquelles le volume de la chambre de travail prend ses valeurs extrêmes, minimale et respectivement maximale, sans que cela implique une position haute et une position basse de l'organe mobile au sens topographique de ces termes.

Une idée qui est à la base de l'invention consiste à amplifier et décaler vers les hautes températures un apport de chaleur opéré sur le gaz de travail pré-comprimé. Pour revaloriser ainsi l'apport thermique, on applique au gaz de travail ayant été pré-comprimé et ayant subi l'apport de chaleur, une compression supplémentaire dans la chambre du mécanisme volumétrique. Ainsi, même un apport de chaleur relativement faible et relativement bas en température est remarquablement exploitable et bénéfique pour le rendement du moteur.

Si par exemple à la suite d'un apport thermique de 200 K le gaz subit dans la chambre de travail du mécanisme volumétrique une compression supplémentaire qui double sa température, la température à la fin de cette compression supplémentaire sera augmentée de 2 X 200 = 400 K par rapport à une compression de même rapport qui aurait été effectuée sans apport thermique préalable. Pendant une compression où la température est doublée, la pression est multipliée par environ 11,3. Ainsi, grâce à l'invention, un apport de chaleur réduit, opéré à de faibles niveaux de température et de pression, va, dans l'exemple précité, autant améliorer les conditions de température, au regard du second principe de la thermodynamique, que si on avait effectué un apport double à un niveau de température double et à un niveau de pression 11,3 fois supérieur. Suivant l'invention, un échangeur simple car fonctionnant à pression et température modérées, ayant en outre à produire une élévation de température relativement modérée, produit le même effet bénéfique qu'un échangeur qui aurait été beaucoup plus coûteux au point d'être difficilement réalisable.

En outre, selon l'invention, le gaz de travail pénètre dans le mécanisme volumétrique à une température et une pression modérées, ce qui facilite grandement la réalisation du moteur.

Le transfert thermique selon l'invention ne nécessite que des calories disponibles à des températures relativement modérées au refoulement du mécanisme volumétrique. Ceci permet d'améliorer le rendement même à charge très partielle. L'amélioration de rendement résulte de l'accroissement du niveau général de température de combustion et/ou de l'abaissement du niveau général de température des gaz brûlés une fois refroidis dans les moyens de transfert thermique. Lorsque le transfert thermique relève le niveau général de température dans la machine volumétrique à charge partielle, le refoulement est globalement plus chaud en amont des moyens de transfert thermique, ce qui facilite encore le transfert thermique dans le moteur selon l'invention fonctionnant à charge partielle.

L'invention permet par exemple d'envisager un moteur, par exemple pour véhicule routier, dont le fonctionnement à pleine charge est celui d'un moteur classique, et dont le transfert thermique selon invention n'a lieu que lorsque le moteur fonctionne à charge partielle.

Ainsi, on conserve inchangés les niveaux maximaux de température et de pression de pleine charge pour lesquels le moteur a été calculé, et on améliore uniquement les conditions de charge partielle, qui sont en fait celles qui prévalent pendant 90 % du temps. De préférence, on fait en sorte que les conditions à charge partielle améliorées génèrent, dans la chambre de travail, des températures et des pressions qui sont au plus égales à celles de la pleine charge. Ainsi l'invention est applicable avec un mécanisme volumétrique conçu pour des sollicitations maximales qui ne dépassent pas celles d'un moteur classique.

Grâce au transfert thermique à relativement basse température selon l'invention, il est possible d'opérer une détente très complète avant l'entrée des gaz brûlés dans les moyens de transfert thermique. On peut par exemple faire passer les gaz brûlés dans au moins une turbine de turbocompresseur, ou dans plusieurs turbines successives de plusieurs turbocompresseurs, avant de laisser les gaz brûlés entrer dans les moyens de transfert thermique. Ce ou ces turbocompresseur(s) comporte(nt chacun) un compresseur qui assure la pré-compression de l'air d'admission avant son entrée dans les moyens de transfert thermique.

Il s'est avéré que dans le moteur selon l'invention les besoins d'énergie de pré-compression peuvent être mis en adéquation avec l'énergie mécanique résiduelle du gaz de travail refoulé par le mécanisme volumétrique avant son passage dans les moyens de transfert thermique. Ainsi l'invention permet d'exploiter la totalité de ladite énergie mécanique résiduelle pour pré-comprimer les gaz d'admission, sans que l'on doive comme dans les moteurs actuels laisser fuir une partie de cette énergie mécanique à l'échappement, ni la dissiper par création de pertes de charge à l'admission du moteur.

En sortie des moyens de transfert thermique, les gaz brûlés sont à une température particulièrement basse, par comparaison avec celle des gaz d'échappement d'un moteur classique.

L'énergie mécanique résiduelle des gaz brûlés sortant du mécanisme volumétrique consiste en la pression d'un gaz se trouvant à un certain niveau de température. Cette énergie contenue dans une masse donnée de gaz permet de pré-comprimer la même masse de gaz jusqu'à une pression plus élevée (appelée plus haut « première pression ») car le gaz d'admission à pré-comprimer part d'une température bien plus faible. En ce sens, le moteur selon l'invention revalorise également l'énergie de pression du gaz de travail refoulé par le mécanisme volumétrique.

Les moyens de transfert thermique ont l'effet d'un « télescope thermique » qui découple l'une de l'autre une partie froide (contact avec la source froide et pré-compression) du cycle thermodynamique et une partie chaude (compression supplémentaire, combustion et détente) dudit cycle. En théorie on peut à volonté déployer le télescope, de façon que la partie chaude soit aussi chaude que l'on veut par rapport à la partie froide. En pratique, on est confronté aux limites physiques des matériaux et des gaz, au cahier des charges en matière de pollution, et au souci de limiter le besoin de refroidissement, lequel pénalise le rendement réel.

Dans la suite, à des fin d'explication et sans que cela limite l'invention, on emploiera les termes suivants :

« point de fonctionnement du moteur » : chaque état fonctionnel que l'on considèrera ici comme principalement défini par le niveau de charge, lui-même considéré comme défini par la quantité de carburant brûlée par cycle thermodynamique, le cycle étant souvent considéré ici comme traitant 1 kg de gaz de travail. Concrètement le point de fonctionnement du moteur est défini complémentairement par une multitude d'autres paramètres plus ou moins importants tels que vitesse de rotation de l'arbre moteur, commandes annexes appliquées par l'opérateur ou un automatisme extérieur, paramètres environnementaux (température et pression ambiantes etc), paramètres d'état du moteur, notamment mesures fournies par différents capteurs équipant le moteur, etc. Chaque point de fonctionnement se traduit principalement par un cycle passant par des points particuliers du diagramme (p, v), c'est-à-dire pression (p) en fonction du volume massique (v), ou parfois du diagramme (p, V), c'est-à-dire pression (p) dans la chambre de travail en fonction du volume (V) de la chambre de travail. On peut distinguer un point de fonctionnement cible correspondant à une demande appliquée au moteur, par exemple par le conducteur de la machine ou véhicule équipé du moteur, et un point de fonctionnement réel qui décrit à chaque instant l'état fonctionnel réel du moteur.

« cartographie du moteur » : l'ensemble des cycles prévus pour correspondre chacun à un point de fonctionnement possible du moteur, ici considéré comme principalement conditionné par le niveau de charge. La cartographie peut également définir les processus (points de fonctionnement transitoires successifs) entre un point de fonctionnement réel et le point de fonctionnement cible. On mentionnera parfois la prise en compte de paramètres autres que le niveau de charge.

« moyens de pilotage du moteur » : les moyens, en général au moins une carte électronique, qui reçoivent les données (commandes appliquées, mesures, etc.) permettant de connaître le point de fonctionnement réel, de définir le point de fonctionnement cible et qui appliquent au moteur les commandes ou consignes correspondant à l'exécution de la cartographie du moteur.

Typiquement, dans le moteur selon l'invention, seul le mécanisme volumétrique applique un couple moteur à l'arbre moteur. Ainsi réalisé, le moteur se distingue de certains moteurs connus discutés plus haut où une machine à source chaude externe contribue au couple moteur en plus du mécanisme volumétrique.

Dans une réalisation, dans une condition de fonctionnement à charge partielle moteur chaud, le gaz de travail pré-comprimé présente à la sortie chaude des moyens de transfert thermique une température au moins égale à 450K, de préférence au moins égale à 550K.

De préférence, la compression supplémentaire est essentiellement adiabatique jusqu'au début du chauffage par combustion. La compression adiabatique augmente la température de début de combustion ce qui est favorable pour le rendement et pour la qualité d'inflammation.

Dans certaines réalisations le gaz de travail refoulé passe par au moins un appareil de dépollution entre le refoulement du mécanisme volumétrique et une entrée chaude dans les moyens de transfert thermique. Notamment à charge partielle, la dépollution est facilitée par la température relativement élevée régnant à cet emplacement, par comparaison avec un moteur classique qui fonctionnerait sous le même niveau de charge.

Selon l'invention, hormis le cas échéant dans l'au moins un appareil de dépollution, le gaz de travail refoulé est dans des conditions essentiellement adiabatiques entre le refoulement du mécanisme volumétrique et une entrée chaude dans les moyens de transfert thermique. Il n'y a besoin ni de fournir de la chaleur supplémentaire, ni d'évacuer de la chaleur excédentaire.

De préférence, dans une condition de fonctionnement à charge partielle moteur chaud, le gaz de travail refoulé sort des moyens de transfert thermique sensiblement à une température supérieure de quelques dizaines de K à la température à laquelle le gaz de travail pré-comprimé arrive aux moyens de transfert thermique.

Ainsi le gaz de travail refoulé réchauffe autant qu'il est possible le gaz de travail pré-comprimé, le différentiel de quelques dizaines de K étant nécessaire pour que le transfert thermique puisse avoir lieu.

Dans une autre réalisation ou la même, au moins dans une condition de fonctionnement à charge partielle moteur chaud, la totalité du gaz de travail refoulé par le mécanisme volumétrique, hormis le cas échéant une fraction du gaz de travail déviée dans un trajet de recirculation, et la totalité du gaz de travail pré-comprimé, participent à l'échange thermique dans les moyens de transfert thermique. A chaque instant le débit massique de gaz pré-comprimé et le débit massique de gaz refoulé qui n'est pas dévié dans un trajet de recirculation (« EGR ») sont sensiblement égaux. Ils sont donc parfaitement adaptés pour que la totalité du gaz refoulé allant à l'échappement soit quasiment refroidi à la température de fin de pré-compression et pour que le gaz de travail pré-comprimé soit réchauffé quasiment à la température des gaz refoulés arrivant aux moyens de transfert thermique.

Dans une réalisation il est prévu un moyen de chauffage additionnel capable de réchauffer le gaz de travail sur son trajet entre la sortie chaude des moyens de transfert thermique et l'admission dans le mécanisme volumétrique, et par des moyens pour activer le chauffage additionnel pendant une phase initiale de démarrage à froid.

Lorsque le moteur est froid le gaz brûlé refoulé par le mécanisme volumétrique peut ne pas être assez chaud pour suffisamment réchauffer le gaz d'admission dans les moyens de transfert thermique. Le moyen de chauffage additionnel est activé pour chauffer le gaz d'admission en remplacement ou en complément des moyens de transfert thermique. Ceci relève le niveau général de température dans le mécanisme volumétrique, et par conséquent la température du gaz refoulé par le mécanisme volumétrique, qui est donc très rapidement en mesure de suffisamment réchauffer le gaz de travail pré-comprimé. Il est alors possible d'annuler, au besoin avec une certaine progressivité, la puissance du moyen de chauffage additionnel.

Dans un mode de réalisation, dans une condition de fonctionnement à charge partielle moteur chaud, le gaz de travail pré-comprimé est dans des conditions essentiellement adiabatiques depuis la sortie chaude des moyens de transfert thermique et jusqu'au début de la combustion, hormis le cas échéant par mélange du gaz de travail pré-comprimé avec du gaz de travail de recirculation.

Dans une version avantageuse, le moteur selon l'invention comprend pour une partie du gaz de travail refoulé par le mécanisme volumétrique au moins un trajet chaud de recirculation (« EGR » : « Exhaust Gas Recycling ») dit « externe », allant d'un point de partage situé entre le refoulement du mécanisme volumétrique et l'entrée chaude des moyens de transfert thermique, jusqu'à un point de mélange situé entre la sortie chaude des moyens de transfert thermique et l'admission du mécanisme volumétrique. Les points de partage et de mélange précités sont soumis à des températures voisines l'une de l'autre, de sorte que le gaz d'EGR ainsi produit peut être thermiquement favorable au sens de l'invention.

Dans une réalisation, lorsqu'une recirculation externe est prévue, dans une condition de fonctionnement moteur chaud, le gaz de travail est dans des conditions essentiellement adiabatiques entre le point de mélange et le début du chauffage par combustion, hormis le cas échéant pour un mélange avec du gaz de travail piégé dans la chambre de travail en fin de phase de refoulement. Concernant le gaz piégé, il peut s'agir de gaz inévitablement piégé dans le « volume mort » (le volume de la chambre de travail lorsque l'organe mobile est au PMH) en fin de phase de refoulement. Il peut également être prévu de fermer l'orifice de refoulement de façon précoce pour accroître la quantité piégée et réaliser ainsi une recirculation dite « interne », dont on reparlera plus loin. Cela est possible en plus ou en remplacement de la recirculation externe.

De préférence, au moins dans une tranche inférieure des niveaux de charge le gaz de recirculation peut ne pas être refroidi. Son apport thermique au gaz de travail arrivant à l'admission peut être pris en compte dans la définition du point de fonctionnement du moteur, en général par une augmentation de la pression de pré-compression. L'augmentation de la chaleur rendue à la source froide n'est qu'apparente puisqu'elle ne porte plus que sur une partie de la masse de gaz passant par la chambre de travail.

Dans une réalisation du moteur à recirculation externe, le trajet de recirculation comporte un compresseur, de préférence à débit réglable. Le compresseur élève la pression du gaz de recirculation de la pression de refoulement du mécanisme volumétrique à la première pression. Il en résulte une nouvelle élévation de température du gaz de recirculation, qui peut être prise en compte dans le point de fonctionnement comme dit plus haut. Le réglage du débit du compresseur de recirculation permet de doser la proportion de gaz de recirculation (« taux d'EGR ») dans le gaz de travail admis dans le mécanisme volumétrique.

Au moins dans une condition de fonctionnement à charge partielle moteur chaud, entre le point de mélange et l'admission du mécanisme volumétrique, la température du gaz de travail peut être supérieure à la température du gaz de travail pré-comprimé sortant des moyens de transfert thermique. Cette différence est générée par le réchauffage dû au mélange avec le gaz de recirculation plus chaud.

Cependant, des moyens peuvent être prévus pour réduire le niveau global de température de recirculation, actifs au moins pour un niveau de charge élevé. Le but est d'éviter les températures excessives lorsque le moteur fonctionne sous forte charge.

Comme évoqué plus haut, dans certaines réalisations, le mécanisme volumétrique est capable de mettre fin à une phase de refoulement du gaz de travail avant le point mort haut, de façon à soumettre à une recirculation interne la partie du gaz brûlé piégée dans la chambre de travail à la fin de la phase de refoulement. Cette recirculation est particulièrement avantageuse par sa simplicité. En outre, dans un mécanisme volumétrique classique à soupapes s'ouvrant vers l'intérieur de la chambre, la recirculation interne permet de maintenir les soupapes fermées ou très peu ouvertes lorsque l'organe mobile tel qu'un piston est au point mort haut. Ceci facilite la réalisation d'un mécanisme volumétrique à rapport volumétrique élevé.

Dans une version avantageuse le moteur comporte des moyens pilotés en temps réel pour distribuer de manière réglable le flux de recirculation entre au moins deux trajets de recirculation choisis parmi une recirculation interne par piégeage du gaz de travail dans la chambre de travail en fin de phase de refoulement, un trajet de recirculation externe refroidi, un trajet de recirculation externe non-refroidi, et un trajet de recirculation externe sélectivement refroidi. On peut envisager une recirculation interne non pilotable et un pilotage portant simplement sur l'ajout sous forme de recirculation externe à débit réglable, et le cas échéant sur la température de cet ajout.

De préférence, un rapport volumétrique effectif de compression entre la sortie chaude des moyens de transfert thermique et le point mort haut dans le mécanisme volumétrique est inférieur à un rapport volumétrique de l'expansion dans le mécanisme volumétrique à partir du point mort haut. Par « rapport volumétrique effectif », on entend le rapport entre le volume massique du gaz prêt à pénétrer dans le mécanisme volumétrique et le volume massique du gaz en fin de compression supplémentaire. Autrement dit on désigne ainsi la compression réellement supplémentaire, sans inclure une re-compression qui peut être nécessaire, notamment dans certaines réalisations comme on le verra plus loin.

Dans une réalisation avantageuse, le mécanisme volumétrique est du type à quatre temps comprenant un temps d'augmentation de volume au cours duquel le gaz de travail à la première pression pénètre dans la chambre de travail puis subit dans la chambre de travail une détente dans la chambre de travail jusqu'à atteindre à la fin dudit temps d'augmentation de volume une troisième pression inférieure à ladite première pression.

Dans certaines réalisations un point de fermeture, par rapport au PMH et au PMB, d'un orifice d'admission de gaz de travail dans le mécanisme volumétrique, est piloté en temps réel en fonction d'au moins un paramètre de fonctionnement du moteur.

Plus généralement, dans certaines réalisations, le rapport volumétrique effectif de compression supplémentaire dans le mécanisme volumétrique est piloté en temps réel en fonction d'au moins un paramètre de fonctionnement du moteur. Par exemple, il peut être prévu de faire varier en sens inverse de la charge du moteur le rapport volumétrique effectif de compression supplémentaire entre la sortie chaude des moyens de transfert thermique et la fin de la compression supplémentaire. Ceci est intéressant notamment si la pression de pré-compression augmente avec la charge.

L'au moins un paramètre de fonctionnement est par exemple : la charge du moteur, évaluée par exemple d'après la quantité de carburant injectée ; la pression en sortie de mécanisme volumétrique ; la deuxième pression ; la première pression ; la température du côté chaud ou du côté froid des moyens de transfert thermique ; la température à l'entrée du mécanisme volumétrique ; la température à la sortie du mécanisme volumétrique etc., et plus généralement tout paramètre qui décrit le point de fonctionnement cible ou le point de fonctionnement réel du moteur. Par la variation du point de fermeture de l'orifice d'admission on définit la masse de gaz de travail pénétrant dans le mécanisme volumétrique à chaque cycle, connaissant la température et la pression du gaz prêt à pénétrer dans la chambre de travail.

Avantageusement, dans un moteur selon l'invention, on peut prévoir une variation du rapport volumétrique effectif de compression supplémentaire en sens inverse du niveau de charge du moteur.

Il s'est cependant avéré possible de cartographier le moteur pour que ce rapport volumétrique effectif reste sensiblement constant.

Notamment dans ce cas, le point de fermeture, par rapport au point mort haut et au point mort bas, d'un orifice d'admission du mécanisme volumétrique, peut être invariable.

Dans une réalisation privilégiée de l'invention, les moyens de transfert thermique comprennent un échangeur de chaleur dans lequel le gaz de travail refoulé par le mécanisme volumétrique circule essentiellement à contre-courant du gaz de travail pré-comprimé. Ainsi le gaz de travail pré-comprimé qui passe par l'échangeur de chaleur en sort à une température presqu'égale à celle à laquelle le gaz refoulé y entre. Le débit massique de gaz de travail pré-comprimé est voisin du débit massique de gaz de travail refoulé arrivant à l'échangeur de chaleur. Ainsi, si tout le gaz de travail pré-comprimé passe par l'échangeur de chaleur, il abaisse la température du gaz de travail refoulé presque jusqu'à la température de fin de pré-compression, ce qui minimise en température et en quantité la chaleur rendue à la source froide par le gaz de travail refoulé.

De préférence, les réglages du moteur, en particulier la cartographie du moteur pour différents niveaux de charge du moteur, sont tels qu'en fonctionnement moteur chaud la température de l'entrée chaude des moyens de transfert thermique varie peu, typiquement de moins de 100 K, quel que soit le niveau de charge du moteur au moins dans une plage de niveaux de charge usuels. Ainsi le moteur exécute facilement les transitions entre niveaux de charge différents, sans qu'interviennent des délais de chauffage ou de refroidissement de la partie chaude des moyens de transfert thermique. Le moteur selon l'invention permet cela grâce à la souplesse de pilotage du « télescope thermique », comme on le verra dans les exemples de réalisation. En outre ce choix de pilotage rejoint celui consistant à faire fonctionner le moteur au voisinage de ses limites physiques pour tous les niveaux de charge.

Suivant une réalisation, les réglages, en particulier la cartographie, sont tels que les courbes de détente du gaz brûlé pour différents niveaux de charge, dans un diagramme donnant la pression du gaz de travail en fonction de son volume massique, sont sensiblement superposables au moins dans leur zone correspondant aux faibles pressions.

Le système d'échappement du moteur selon l'invention est de préférence capable de fonctionner en échappement libre. Étant donné que l'invention permet d'exploiter toute la pression résiduelle du gaz de travail refoulé par le mécanisme volumétrique, le gaz d'échappement ayant en général traversé turbine(s), moyens de transfert thermique et système de dépollution n'a plus qu'une énergie acoustique très atténuée.

Dans une réalisation avantageuse, au moins dans une tranche de niveaux de charge, la pression de pré-compression augmente lorsque la charge augmente. Ceci permet de transférer davantage de chaleur du gaz de travail refoulé au gaz de travail pré-comprimé sans que le point de sollicitation maximale du cycle atteigne des niveaux de température et de pression prohibitifs sous forte charge.

Dans une réalisation préférée, la pression de pré-compression n'augmente que jusqu'à un plafond puis reste inférieure ou sensiblement égale audit plafond quand le niveau de charge est supérieur à la valeur pour laquelle le plafond est atteint. Dans cette réalisation on limite le niveau de pression à l'admission. Ceci facilite la réalisation du moteur. En contrepartie on accepte une moindre amélioration du rendement sous forte charge, par rapport à un moteur classique.

Suivant une réalisation privilégiée, la pré-compression est au moins en partie opérée par le compresseur d'un turbocompresseur ayant une partie turbine installée sur le trajet du gaz de travail refoulé par le mécanisme volumétrique, et dont la puissance augmente spontanément avec le niveau de charge. Une telle augmentation de puissance avec la charge est typique de la plupart des turbocompresseurs. Pour favoriser cela, la cartographie du moteur peut être telle que l'énergie disponible à la sortie du mécanisme volumétrique augmente avec la charge. On peut également augmenter le rapport de pré-compression en pilotant convenablement la puissance de l'appareil de pré-compression (ailettes réglables de turbocompresseur, compresseur attelé réglable etc.)

Lorsque la pré-compression est au moins en partie opérée par le compresseur d'un turbocompresseur, on préfère installer la turbine du turbocompresseur sur le trajet du gaz de travail refoulé en amont des moyens de transfert thermique.

L'utilisation d'un turbocompresseur permet de limiter la cylindrée du mécanisme volumétrique, comme dans un moteur classique. Mais avec l'invention on obtient un avantage supplémentaire. Le gaz refoulé sort du mécanisme volumétrique plus chaud que dans un moteur classique, il contient donc plus d'énergie disponible pour générer davantage de pression de pré-compression, ce qui permet avantageusement d'augmenter la différence entre la première et la deuxième pression.

Dans une réalisation, le turbocompresseur est dépourvu de moyens de limitation de sa puissance, en particulier dépourvu de by-pass. Il est possible de capter toute l'énergie disponible au refoulement pour générer un maximum de pression de pré-compression, puis de réguler par un autre moyen la quantité de gaz de travail admise dans la chambre de travail à chaque cycle. Cet autre moyen peut par exemple être une phase d'admission n'ayant lieu que sur une partie, éventuellement réglable, du temps d'expansion de la chambre de travail. On évite ainsi le recours aux dissipations d'énergie (papillons de gaz, by-pass à l'échappement, etc.) des moteurs classiques et en même temps on maximise le différentiel entre la première et la deuxième pression.

Dans une version de l'invention, les moyens de pré-compression comprennent au moins deux étages de pré-compression, et des moyens pour désactiver sélectivement au moins un étage de pré-compression. En particulier la désactivation peut intervenir lorsque le niveau de charge est dans une tranche inférieure des niveaux de charge, de façon que, comme dit plus haut, la pression de fin de pré-compression soit plus grande lorsque la charge est plus grande, au moins dans une gamme usuelle des niveaux de charge.

Dans une version également préférée, les moyens de pré-compression comprennent au moins deux étages de pré-compression et le moteur comprend des moyens de pilotage du rapport de compression de l'un au moins des étages en fonction du point de fonctionnement courant. On peut avoir par exemple un étage appartenant à un turbocompresseur qui fonctionne en permanence à sa puissance maximale permise par l'énergie contenue dans le gaz de travail refoulé, et un étage commandé qui ajuste la pression de pré-compression par une pression additionnelle variable en fonction du point de fonctionnement. Dans une réalisation, pour certains points de fonctionnement la pression additionnelle peut être nulle, notamment sous faible charge ne nécessitant qu'une relativement faible pré-compression et/ou sous forte charge pour que le moteur fonctionne alors un peu comme un moteur turbocompressé classique.

Dans une version, la neutralisation d'au moins un étage est commandée sous forte charge en combinaison avec un contournement au moins partiel des moyens de transfert thermique par le gaz de travail. Pour les fortes charges, afin de limiter les contraintes de température et de pression dans le moteur ainsi que dans les moyens de transfert thermique, on se rapproche d'un fonctionnement de moteur suralimenté classique, ou bien on met en œuvre le transfert thermique selon l'invention dans une forme atténuée, c'est-à-dire que les gaz entrent dans la chambre de travail à une température intermédiaire entre la température de fin de pré-compression et la température du gaz de travail refoulé disponible pour le transfert thermique.

D'une manière générale, une réalisation préférée d'un moteur selon l'invention comprend des moyens de pilotage qui font varier la pression de pré-compression en fonction du point de fonctionnement courant.

Suivant l'invention, le moteur comprend des moyens d'ajustement thermique pour modérer la température du gaz de travail pré-comprimé arrivant au mécanisme volumétrique par rapport à la température du gaz de travail refoulé disponible en amont des moyens de transfert thermique lorsque le niveau de charge est dans une tranche supérieure.

Grâce à cette modération thermique, la pression optimale pour la pré-compression est également modérée sans que le point de sollicitation maximale du cycle thermodynamique corresponde à des valeurs prohibitives de température et/ou de pression et/ou sans que la cylindrée du moteur soit trop grande pour un couple donné du moteur. Avec cette particularité de l'invention, pour les niveaux de charge élevés, le cycle thermodynamique du moteur peut se rapprocher de celui d'un moteur suralimenté classique.

Dans une version, des moyens d'ajustement thermique sont prévus pour d'autant plus modérer que le niveau de charge est élevé la température du gaz de travail pré-comprimé arrivant au mécanisme volumétrique, par rapport à la température du gaz de travail refoulé disponible en amont des moyens de transfert thermique.

Selon l'invention, à partir d'un certain niveau de charge les moyens d'ajustement thermique refroidissent le gaz de travail envoyé au mécanisme volumétrique, par rapport à la température de fin de pré-compression. On se rapproche alors, sous de tels niveaux de charge, du cycle thermodynamique d'un moteur suralimenté inter-refroidi, amélioré le cas échéant par certaines particularités de l'invention décrites ci-dessus ou ci-après.

Les moyens d'ajustement thermique peuvent être des moyens pour dévier tout ou partie du gaz de travail refoulé par-devers les moyens de transfert thermique, de façon à réduire ou annuler la puissance thermique disponible pour réchauffer le gaz de travail pré-comprimé, ou encore, comme on le verra plus loin, des moyens permettant au gaz de travail pré-comprimé de contourner les moyens de transfert thermique

Dans un mode de réalisation où les moyens de pré-compression comprennent deux étages séparés par un inter-refroidisseur, et lorsque le niveau de charge est dans une tranche supérieure des niveaux de charge, les moyens d'ajustement thermique permettent sélectivement au gaz de travail pré-comprimé d'aller à l'admission du mécanisme volumétrique sensiblement dans son état thermodynamique tel qu'à la sortie de l'inter-refroidisseur en passant par une branche de contournement des moyens de transfert thermique. Dans cette réalisation, le même inter-refroidisseur sert à modérer la température du gaz d'admission sous forte charge et à économiser de l'énergie dans le deuxième étage de pré-compression pour les niveaux de charge moins élevés.

Dans une version de ce mode de réalisation, dans une tranche moyenne des niveaux de charge, le gaz de travail sortant de l'inter-refroidisseur passe par l'étage de pré-compression supérieur puis en partie par les moyens de transfert thermique et en partie par la branche de contournement.

Pour le niveau de charge supérieur, l'étage de pré-compression supérieur est neutralisé, c'est-à-dire par exemple désactivé et/ou contourné par le gaz de travail sortant de l'inter-refroidisseur.

Ce mode de réalisation est en outre remarquable en ce que la transition entre la tranche moyenne où l'étage de pré-compression supérieur est actif, et la tranche supérieure où ledit étage est neutralisé, peut être remarquablement simple : l'étage de pré-compression supérieur est progressivement désactivé en réduisant progressivement sa puissance. Inversement à la transition entre la tranche supérieure et la tranche moyenne l'étage de pré-compression supérieur est progressivement activé. Ceci est sans grande incidence sur le cycle thermodynamique si le rapport volumétrique effectif de la compression supplémentaire est conjointement ajusté en sens inverse pour que la pression ait la valeur désirée en fin de compression supplémentaire.

Non seulement dans les versions à inter-refroidisseur que l'on vient de décrire, mais aussi dans d'autres versions avantageuses, le moteur comporte des moyens pour refroidir le gaz de travail au cours de ladite pré-compression. Ainsi on diminue l'énergie nécessaire pour assurer la pré-compression, et en particulier la partie de la pré-compression qui intervient en aval du refroidissement précité. Il peut notamment s'agir d'au moins un inter-refroidisseur placé entre deux étages de pré-compression.

Dans une réalisation, dans l'inter-refroidisseur, le gaz de travail situé entre les deux étages de pré-compression est refroidi par du gaz de travail issu de la sortie froide des moyens de transfert thermique puis détendu dans un appareil servant à la motorisation de l'un au moins des étages de pré-compression. Un tel inter-refroidisseur est avantageux car il dispense de recourir à un flux d'air extérieur.

Dans une version compacte le moteur comprend au moins un turbocompresseur d'entrée ayant :

- une turbine par laquelle passe le gaz de travail en aval de la sortie froide des moyens de transfert thermique, et

- un compresseur faisant partie des moyens de pré-compression.

Suivant une réalisation privilégiée les moyens de pré-compression comprennent un compresseur dit « autonome » entraîné indépendamment du gaz de travail refoulé. Le compresseur autonome peut être un compresseur attelé à l'arbre moteur ou entraîné par une source d'énergie extérieure au moteur, ou encore une énergie indirectement issue du moteur, comme de l'énergie électrique ou hydraulique partiellement ou totalement générée par une machine attelée au moteur, etc.

Cette réalisation permet d'optimiser le moteur en termes de poids, de rendement réel et/ou d'efficacité de pilotage.

Suivant un perfectionnement le compresseur autonome est à puissance réglable, en particulier à débit réglable en fonction d'une cartographie du moteur.

Dans une version particulièrement appréciée, le compresseur autonome est monté en série avec un compresseur de turbocompresseur, de préférence en aval de ce dernier.

Dans une version, les moyens de pré-compression comprennent au moins deux étages, et le moteur comprend des moyens pour sélectivement désactiver au moins un des étages de pré-compression.

En particulier, la désactivation d'au moins un étage peut être commandée lorsque la charge est dans une tranche basse, de façon que, comme dit plus haut, la pression de fin de pré-compression soit plus grande lorsque la charge est plus grande.

On appellera ci-après « moteur du type spécifié » un moteur à combustion interne comprenant un mécanisme volumétrique dans lequel le gaz de travail pré-comprimé subit successivement dans une chambre de travail, après une phase d'admission dans la chambre de travail:

- une partie au moins d'une compression, appelée « compression supplémentaire »,

- un chauffage par combustion au voisinage d'un point mort haut du mécanisme volumétrique,

- au moins une partie initiale de détente.

Un deuxième aspect de la description ne correspondant pas à l'invention concerne un moteur de type spécifié comprenant des moyens pour modifier la température du gaz de travail en amont de l'entrée dans le mécanisme volumétrique lors du fonctionnement moteur chaud, cette modification de température ayant lieu sensiblement sans modification de pression. Par « sensiblement sans modification de pression » on entend qu'il peut y avoir par exemple une faible chute de pression due à la perte de charge subie par le gaz du fait de son écoulement. Le moteur selon le deuxième aspect peut être conforme au premier aspect et le cas échéant à l'un ou plusieurs de ses perfectionnements. Lorsque le moteur est conforme au premier aspect, les moyens pour modifier la température comprennent les moyens de transfert thermique du premier aspect.

Suivant le deuxième, le moteur est caractérisé en ce que le trajet du gaz de travail en amont de l'entrée dans le mécanisme volumétrique comprend au moins deux branches en parallèle dont l'une passe par les moyens pour modifier la température et au moins une autre branche contourne les moyens pour modifier la température, et le moteur comprend en outre des moyens distributeurs réglables pour répartir le débit entre les branches, de façon que le gaz de travail soit plus chaud à l'entrée dans le mécanisme volumétrique pour un fonctionnement sous faible charge moteur chaud que pour un fonctionnement sous forte charge moteur chaud.

Ladite autre branche peut être une branche sensiblement adiabatique ou une branche qui modifie la température d'une manière différente de la première branche, comme on le verra plus loin.

Le deuxième aspect se base sur l'idée exposée plus haut au titre du premier aspect, à savoir qu'il y a un intérêt à réchauffer ou en tout cas moins refroidir le gaz de travail avant son entrée dans la chambre de travail pour un fonctionnement à charge partielle. Bien des moteurs actuels comprennent un inter-refroidisseur qui refroidit le gaz de travail après sa pré-compression. Ceci est utile pour la pleine ou forte charge mais nuit au rendement sous faible charge. Avec le deuxième aspect de l'invention on peut envisager un moteur dans lequel le gaz de travail passe par l'inter-refroidisseur à pleine ou forte charge, et contourne l'inter-refroidisseur sous charge faible ou modérée.

Le deuxième aspect permet également d'adapter la température du gaz de travail en fonction de la température extérieure et/ou de la température du moteur, en particulier la température du liquide de refroidissement, en particulier pour améliorer le fonctionnement « à froid » du moteur, c'est-à-dire dans la phase de fonctionnement allant de la mise en route du moteur jusqu'à ce que le liquide de refroidissement ait atteint sa température « normale », en général voisine de 100°C (= 375K). Grâce au deuxième aspect de l'invention il est possible de plus chauffer ou de moins refroidir le gaz de travail avant son entrée dans le mécanisme volumétrique lorsque la température extérieure est plus basse et/ou lorsque le moteur est « froid ». On peut ainsi raccourcir la phase de démarrage à froid, la rendre moins polluante, moins consommatrice d'énergie et moins nocive pour le moteur.

Lorsque le moteur selon le deuxième aspect est également conforme au premier aspect et le cas échéant à l'un ou plusieurs de ses perfectionnements, il est caractérisé en ce qu'il comprend des moyens d'ajustement thermique qui comprennent, pour la circulation du gaz de travail entre la sortie de la pré-compression et l'entrée dans le mécanisme volumétrique, au moins deux branches en parallèle comprenant une branche de chauffage passant par les moyens de transfert thermique et au moins une branche de contournement contournant les moyens de transfert thermique, et en ce que le moteur comprend en outre des moyens distributeurs réglables pour répartir sélectivement le débit entre les branches, la branche de chauffage recevant au moins une partie du débit de gaz de travail pour le fonctionnement sous faible charge.

On réalise ainsi un moteur qui bénéficie pleinement des effets techniques et avantages du moteur selon le premier aspect de l'invention lorsqu'il fonctionne sous charge modérée, mais qui peut fonctionner différemment sous forte charge, notamment pour éviter des températures trop élevées en fin de combustion dans la chambre de travail sous forte charge.

Le deuxième aspect permet également de faciliter la mise en œuvre du premier aspect de l'invention, notamment pour des niveaux de charge moyens ou supérieurs, au prix d'une légère baisse du rendement théorique à ce niveau de charge. On a vu plus haut que le premier aspect de l'invention conduit en général à choisir une pression de pré-compression élevée quand le niveau de charge est élevé. Ceci est vrai notamment lorsque la température des gaz entrant dans le mécanisme volumétrique a été rendue égale à celle du gaz de travail refoulé disponible pour le transfert thermique. Avec le deuxième aspect de l'invention, le gaz de travail peut dans certaines situations, notamment sous forte charge, avoir à l'entrée dans le mécanisme volumétrique une température moins élevée que celle du gaz refoulé disponible pour le transfert thermique. La pression de pré-compression optimale pour la mise en œuvre du premier aspect de l'invention est de ce fait également moins élevée dans ces situations. On réalise ainsi un moteur ayant un excellent rendement sous charge faible ou modérée, sans devoir prévoir des moyens de pré-compression capables de générer des pressions de pré-compression élevées. Ceci est très avantageux pour des moteurs fonctionnant le plus souvent sous charge modérée, comme les moteurs de véhicules routiers.

En faisant sélectivement passer la totalité, partiellement ou encore pas du tout le gaz de travail dans les moyens de transfert thermique avant son entrée dans la chambre de travail, on régule la température du gaz de travail sans avoir à détourner les gaz brûlés qui peuvent continuer de passer en totalité (hormis le cas échéant une fraction déviée dans un trajet de recirculation) par les moyens de transfert thermique même quand au moins une partie du gaz de travail allant à l'admission n'y passe plus. Ainsi la température du côté chaud des moyens de transfert thermique varie peu. Il n'y a donc pas de délai de transition gênant si brusquement le moteur doit revenir à un point de fonctionnement pour lequel le gaz de travail allant à l'admission doit être réchauffé dans les moyens de transfert thermique.

Dans une réalisation, au moins pour certains niveaux de charge, les moyens distributeurs fournissent du gaz de travail simultanément à au moins deux branches différentes de façon que le gaz de travail envoyé au mécanisme volumétrique soit à une température intermédiaire entre les températures respectives à la sortie de ces deux branches. On peut ainsi ajuster finement la température du gaz de travail envoyé au mécanisme volumétrique.

D'une façon générale pour la mise en œuvre du deuxième aspect dans un moteur comportant une pré-compression, ou pour la mise en œuvre conjointe du premier et du deuxième aspect, il est avantageux que l'au moins une autre branche comprenne une branche refroidie, en particulier passant par un inter-refroidisseur. On réalise ainsi un moteur capable de fonctionner comme un moteur suralimenté, par exemple turbocompressé, inter-refroidi classique, notamment pour la pleine charge, et d'avoir un rendement amélioré dans d'autres situations, notamment sous faible charge, grâce à une température de combustion plus élevée et/ou un rejet gazeux à température plus basse.

De préférence, l'au moins une branche comprend une branche sensiblement adiabatique, c'est à dire ni chauffée ni activement refroidie.

Dans une version perfectionnée, mais non limitative, il est prévu trois branches, à savoir la branche de chauffage, la branche sensiblement adiabatique et la branche refroidie, et en fonction du point de fonctionnement courant les moyens distributeurs distribuent le gaz de travail entre les trois branches pour obtenir à l'admission du moteur un gaz de travail ayant la température souhaitée.

Dans toutes ces versions les moyens distributeurs et/ou plus généralement les moyens d'ajustement thermique sont typiquement pilotés en temps réel par des moyens de pilotage qui se conforment à une cartographie du moteur.

Suivant un mode de réalisation, la branche de chauffage reçoit la totalité du gaz de travail pré-comprimé lorsque le niveau de charge est dans une tranche inférieure des niveaux de charge. On optimise ainsi le rendement du moteur pour les niveaux de charge les plus faibles, qui peuvent inclure ceux le plus souvent utilisés, par exemple dans un véhicule.

De préférence, dans cette réalisation et lorsque le premier aspect est également mis en œuvre :

- pour un niveau de charge situé dans une tranche inférieure, le gaz de travail passe uniquement par la branche de chauffage ;

- pour un niveau de charge situé dans une tranche moyenne, le gaz de travail passe uniquement par la branche sensiblement adiabatique ; et

- pour un niveau de charge situé dans une tranche supérieure le gaz de travail passe uniquement par la branche inter-refroidie.

De façon encore plus avantageuse :

- pour un niveau de charge situé dans une tranche intermédiaire basse intercalée entre la tranche inférieure et la tranche moyenne, le gaz de travail passe en partie par la branche de chauffage et en partie par la branche sensiblement adiabatique; et/ou

- pour un niveau de charge situé dans une tranche intermédiaire haute intercalée entre la tranche moyenne et la tranche supérieure, le gaz de travail passe en partie par la branche sensiblement adiabatique, et en partie par la branche inter-refroidie.

On peut obtenir la même cartographie avec seulement une branche chauffée et une branche de contournement refroidie et en mélangeant par exemple 0 à 100% de gaz de travail pré-comprimé passant par la branche refroidie avec respectivement 100 à 0% de gaz de travail passant par la branche chauffée. L'intérêt de la branche adiabatique est de réduire les pertes de charge et de limiter le besoin en refroidissement, notamment en air de refroidissement.

Dans la réalisation et dans le perfectionnement qui viennent d'être décrits, ainsi que partout ailleurs dans la présente demande où il est question de tranches de niveaux de charge, les limites entre tranches peuvent fluctuer en fonction de paramètres de fonctionnement autres que le niveau de charge. Par exemple si la température ambiante est basse, les limites entre tranches peuvent être relevées.

Dans un mode de réalisation avantageux du moteur conforme à un ou plusieurs des aspects de l'invention, le chauffage par combustion est opéré par injection de carburant dans le gaz de travail se trouvant dans le mécanisme volumétrique à une température supérieure au point d'auto-inflammation du carburant. Ce mode de chauffage est propice à la mise en œuvre du premier aspect de l'invention puisqu'il est compatible avec des températures élevées au moment du déclenchement de la combustion. L'inflammation se passe dans de bonnes conditions, l'utilisation d'injections dites « pilote » peut être réduite ou supprimée. Au besoin un relativement fort taux d'EGR et/ou un étalement de l'injection permettent de limiter les températures extrêmes et les inconvénients qui vont avec.

L'invention est compatible avec un mécanisme volumétrique de type Otto (à allumage par bougie). Les moyens de transfert thermique selon l'invention relèvent la température du gaz d'admission à charge partielle de façon qu'au moment du déclenchement effectif de la combustion la température du mélange air-combustible soit sensiblement au même niveau que sous forte charge, c'est-à-dire juste en-dessous de la valeur limite au-delà de laquelle on risque une auto-inflammation désavantageuse.

Dans un autre mode de réalisation avantageux du moteur conforme à un ou plusieurs des aspects de l'invention, le chauffage est opéré par combustion homogène d'un mélange préconstitué d'air, de combustible et de gaz de recirculation.

Le mode de combustion dit « homogène » nécessite en général une température relativement élevée en début de combustion en combinaison avec un fort taux d'EGR « chaud » pouvant aller jusqu'à 70%. Le conditionnement thermique prévu selon le premier ou le deuxième aspect de l'invention en ce qui concerne le gaz de travail admis dans le mécanisme volumétrique permet cela sans qu'il y ait besoin d'un apport additionnel d'énergie qui dégraderait le rendement.

D'une manière générale, en sortie d'un moteur selon le premier ou le deuxième aspect de l'invention, le gaz de travail peut être à une pression absolue inférieure à environ 200 kPa et une température inférieure à environ 375 K.

Dans une réalisation typique, un moteur selon l'un ou plusieurs des aspects de l'invention comprend des moyens de pilotage qui règlent de manière sensiblement conjointe la quantité de carburant et le volume de gaz de travail, tel que mesuré juste en amont de l'orifice d'admission du mécanisme volumétrique, qui sont introduits dans le mécanisme volumétrique à chaque cycle, en fonction du point de fonctionnement courant. On peut en particulier choisir ces réglages pour que la température et la pression des gaz refoulés soient telles que la pression de pré-compression sera celle voulue et la température à l'entrée du mécanisme volumétrique sera celle voulue pour la mise en œuvre du premier aspect de l'invention. Si le deuxième aspect de l'invention est également mis en œuvre, un réglage supplémentaire consiste à répartir le flux de gaz de travail entre les différentes branches du trajet.

D'autres particularités et avantages de l'invention ressortiront encore de la description ci-après, relative à des exemples non-limitatifs.

Aux dessins annexés :

La figure 1 est un schéma de principe d'un premier mode de réalisation d'un moteur non conforme à l'invention;

Les figures 2 à 6 sont des vues partielles du mécanisme volumétrique du moteur de la figure 1 à différents stades successifs du cycle ;

La figure 7 est un diagramme (p,v) (pression (p) en fonction du volume massique (v)) montrant le cycle C suivi par le gaz de travail dans le moteur des figures 1 à 6, à charge partielle, par comparaison avec les cycles A et B d'un moteur connu à charge partielle et à pleine charge, respectivement ;

La figure 7A est un détail agrandi du bas du cycle C de la figure 7 ;

La figure 8 montre le cycle C de la figure 7 et deux évolutions possibles D et E de ce cycle, la température maximale atteinte au cours du cycle étant la même dans les trois cas ;

La figure 9 montre, par comparaison avec les cycles A et C de la figure 7, une autre évolution F du cycle C, avec une température maximale moindre que dans le cycle C ;

La figure 10 montre le cycle C selon l'invention en diagramme (p,V) (pression (p) dans la chambre de travail en fonction du volume (V) de la chambre de travail), ainsi qu'un cycle modifié G, dans lequel le rapport volumétrique du mécanisme volumétrique est moindre ;

La figure 11 est un schéma de principe d'un deuxième mode de réalisation d'un moteur non conforme à l'invention;

La figure 12 montre un cycle H, réalisable dans le moteur de la figure 11, par comparaison avec le cycle C de la figure 7 ;

La figure 13 est un schéma de principe d'un troisième mode de réalisation d'un moteur non conforme à l'invention;

La figure 14 est un schéma de principe d'un quatrième mode de réalisation d'un moteur non conforme à l'invention;

La figure 15 montre, pour le fonctionnement sous pleine charge, deux cycles L et L' en comparaison avec le cycle B de la figure 7 ;

La figure 16 est un schéma de principe d'un cinquième mode de réalisation d'un moteur non conforme à l'invention;

La figure 17 est un schéma de principe d'un sixième mode de réalisation d'un moteur non conforme à l'invention; avec deux étages de pré-compression séparés par un inter-refroidisseur;

La figure 18 montre par comparaison avec le cycle C de la figure 7, un cycle M réalisable dans le moteur de la figure 17, ainsi qu'un cycle M' correspondant au cas où l'inter-refroidisseur serait remplacé par un simple conduit ;

La figure 19 est un schéma de principe d'un septième mode de réalisation d'un moteur non conforme à l'invention;

La figure 20 est un schéma de principe d'un huitième mode de réalisation d'un moteur

La figure 21 est un schéma de principe d'un neuvième mode de réalisation d'un moteur selon l'invention ;

La figure 22 montre des cycles N1, N2, N3 et N4 réalisables dans le moteur de la figure 21, par comparaison avec le cycle C de la figure 7 ;

La figure 23 montre en coupe un détail d'une soupape d'admission pour un moteur selon l'invention;

La figure 24 montre par comparaison avec le cycle C de la figure 7 un cycle R correspondant à un niveau de charge plus élevé, et un cycle transitoire C' réalisé lors de la transition entre les cycles C et R ;

La figure 25 est un diagramme (p,V) de la pression (p) du gaz dans la chambre de travail en fonction du volume (V) de la chambre de travail dans le cas d'un moteur à allumage commandé, selon un cycle T suivant l'invention par comparaison avec un cycle S de moteur connu ;

La figure 26 est un schéma de principe d'un autre mode de réalisation du moteur selon l'invention, avec un compresseur autonome ; et

La figure 27 est un diagramme (p,v) de cycles U1, U2, et U3 réalisables avec le mode de réalisation de la Figure 26.

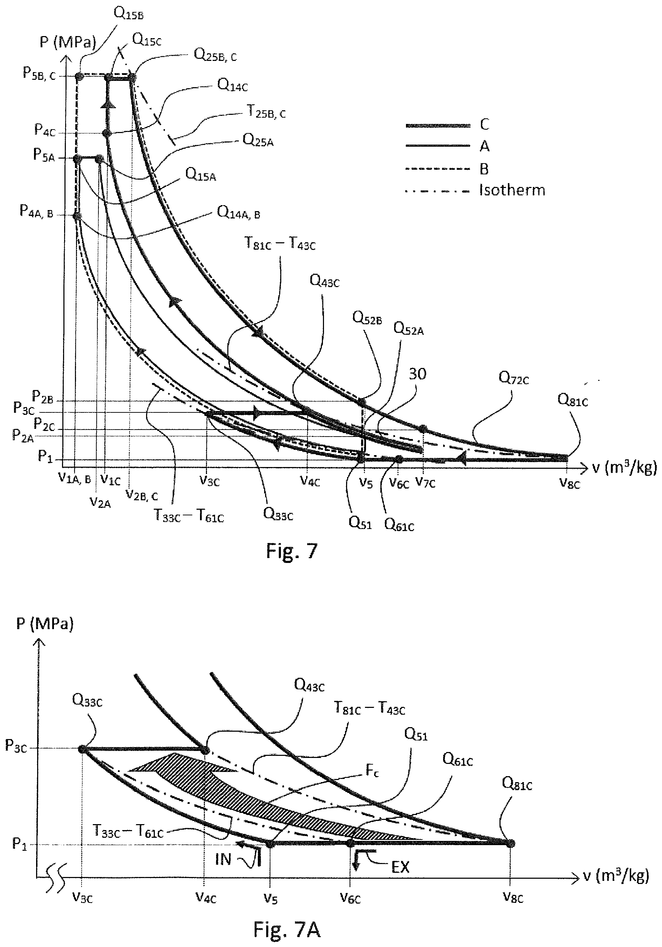

Les diagrammes de cycles thermodynamiques des figures 7, 7A, 8 à 10, 12, 15, 18, 22, 24, 25 et 27 sont purement illustratifs et en particulier sont déformés dimensionnellement pour être plus lisibles, les valeurs réelles des paramètres attachés aux différents points particuliers des cycles représentés étant en tant que de besoin explicitées dans la description qui suit.

Il doit être entendu que toute particularité décrite est susceptible de contribuer à définir l'invention, cette particularité étant prise dans la forme décrite ou dans toute forme plus ou moins généralisée, en combinaison ou non avec tout ou partie des particularités décrites dans le même paragraphe ou dans la même phrase ou ailleurs dans le présent exposé, s'il s'avère que cette particularité, telle que décrite et/ou éventuellement généralisée et/ou combinée, est de nature à différencier l'invention par rapport à l'art antérieur.

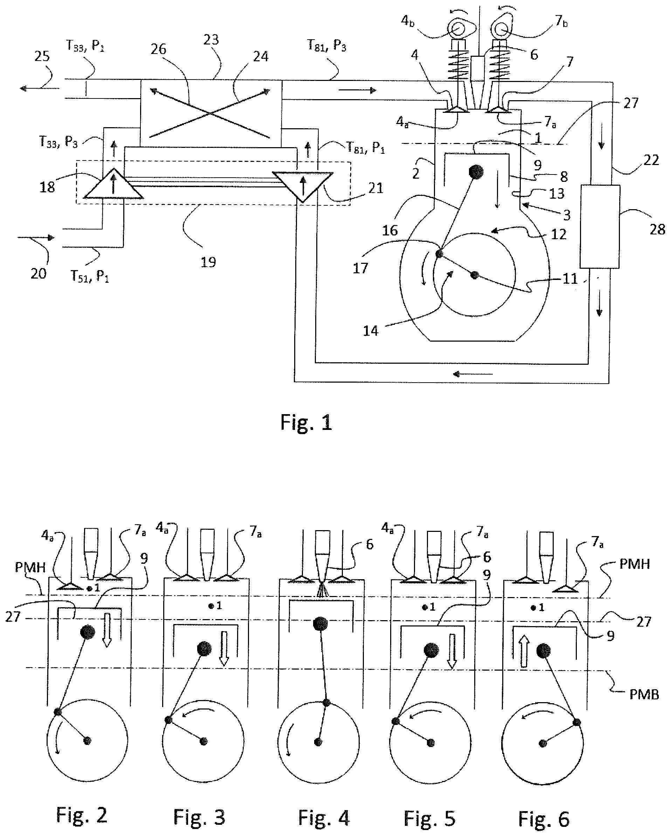

Dans le mode de réalisation représenté aux figures 1 à 6, le mécanisme volumétrique 3 comprend une chambre de travail à volume variable 1 définie dans un bloc moteur 2. Le bloc moteur comporte un orifice d'admission 4 pour introduire un gaz de travail dans la chambre de travail 1 au cours d'un temps d'admission, des moyens de combustion 6 pour déclencher une combustion au sein du gaz de travail dans la chambre de travail, et un orifice de refoulement 7 pour permettre à au moins une partie du gaz de travail « brûlé » de sortir de la chambre de travail 1 au cours d'un temps de refoulement. Les orifices d'admission 4 et de refoulement 7 peuvent être sélectivement ouverts et fermés. Dans l'exemple représenté les orifices 4 et 7 comportent chacun à cet effet au moins une soupape 4a, 7a respectivement, commandée par une came 4b, 7b. On parle ici de refoulement plutôt que d'échappement car, comme on le verra en détail plus loin, avant de s'échapper à l'atmosphère ou plus généralement au milieu ambiant le gaz de travail subit d'autres phases du processus thermodynamique suite à son passage par l'orifice de refoulement 7 associé à la chambre de travail 1.

Le mécanisme volumétrique 3 comprend en outre un piston 8 ayant une face de travail 9 contribuant à délimiter la chambre de travail 1 et faisant varier le volume de cette dernière. Le piston 8 est relié à un arbre moteur 11 par un transformateur de mouvement 12. Grâce au transformateur de mouvement 12, une rotation continue de l'arbre moteur 11 est concomitante avec un mouvement cyclique du piston 8. Au cours de son mouvement cyclique le piston 8 passe par une position dite de « point mort haut » (ou encore « PMH ») dans la terminologie usuelle, où le volume de la chambre de travail 1 est minimal, et par une position dite de « point mort bas », (ou « PMB »), dans la même terminologie, où le volume de la chambre de travail 1 est maximal. Des moyens non représentés mais connus dans leur principe synchronisent, de manière éventuellement variable, les cames 4b et 7b, et les moyens de combustion 6, avec la position angulaire de l'arbre moteur 11.

Dans l'exemple représenté, le piston 8 est du type coulissant dans un alésage cylindrique, communément appelé « cylindre », 13 formé dans le bloc moteur 2. Des moyens d'étanchéité non représentés ferment de façon étanche le contact annulaire entre le piston 8 et le cylindre 13. Le transformateur de mouvement 12 est ici du type bielle-manivelle. Il comprend un vilebrequin 14 solidaire de l'arbre moteur 11, et une bielle 16 ayant une extrémité (pied de bielle) articulée au piston 8 et une autre extrémité (tête de bielle) articulée à un maneton 17 du vilebrequin 14.

Le moteur prélève du gaz de travail comburant à une entrée 20 et rejette du gaz de travail au moins partiellement « brûlé » à un échappement 25. Le gaz de travail comburant est typiquement de l'air prélevé à l'atmosphère.

Suivant l'invention, le moteur comprend des moyens de pré-compression du gaz de travail avant son entrée dans la chambre de travail 1.

Les moyens de pré-compression comprennent dans l'exemple représenté un compresseur 18 installé dans le trajet du gaz de travail en amont de l'entrée dans la chambre de travail 1. Le compresseur 18 élève la pression du gaz de travail à une pression $p_3$ supérieure à la pression $p_1$ de référence qui est en général la pression atmosphérique (on explicitera plus loin le choix des indices associés aux différents paramètres pour désigner des valeurs particulières de ces paramètres).

Du fait de la compression essentiellement adiabatique dans le compresseur 18, le gaz de travail passe d'une température $T_{51}$ d'entrée dans le compresseur 18, à une température $T_{33} > T_{51}$ à la sortie du compresseur 18.

Typiquement, le compresseur 18 fait partie d'un turbocompresseur 19 comprenant en outre une turbine 21 qui est actionnée par le gaz de travail refoulé de la chambre de travail 1 par un conduit de refoulement 22 raccordé à la chambre de travail 1 lorsque la soupape de refoulement 7a est ouverte. La turbine 21 entraîne le compresseur 18 tout en détendant de façon essentiellement adiabatique le gaz brûlé.

A la sortie de la turbine 21 le gaz refoulé est à une température $T_{81}$ supérieure à la température $T_{33}$ du gaz pré-comprimé sortant du compresseur 18, et à une pression qui est de préférence inférieure à la pression $p_3$ du gaz pré-comprimé sortant du compresseur 18, et qui est de façon encore plus préférée sensiblement égale à la pression de référence $p_1$.

Suivant l'invention, le gaz pré-comprimé sortant du compresseur 18 est envoyé à la chambre de travail 1 en passant par le trajet calo-récepteur 24 d'un échangeur de chaleur 23. À la sortie de la turbine 21 le gaz refoulé passe par le trajet calo-cédant 26 de l'échangeur de chaleur 23. Le trajet calo-récepteur 24 va d'une entrée froide à une sortie chaude de l'échangeur 23. Le trajet calo-cédant va d'une entrée chaude à une sortie froide de l'échangeur 23. En aval du trajet calo-cédant, le gaz de travail refoulé s'échappe à l'atmosphère par l'échappement 25.

De préférence, l'échangeur de chaleur est du type à contre-courant, de sorte que le gaz refoulé sort de l'échangeur 23 sensiblement à la température $T_{33}$ à laquelle le gaz pré-comprimé entre dans l'échangeur, et le gaz pré-comprimé sort de l'échangeur 23 sensiblement à la température $T_{81}$ à laquelle le gaz refoulé entre dans l'échangeur 23. En pratique le gaz de travail refoulé entre plus chaud et sort plus chaud, de quelques dizaines de degrés K, que le gaz de travail pré-comprimé sortant et respectivement entrant dans l'échangeur 23, en raison de l'imperfection d'un échangeur thermique réel, mais sauf indication contraire on négligera ici cette différence. Chaque gaz conserve une pression sensiblement inchangée dans l'échangeur 23, respectivement (excepté les pertes de charge dues à l'écoulement, que l'on négligera dans le présent exposé).

Comme le montre la Figure 2, le gaz pré-comprimé, porté à la température $T_{81}$ et la pression $p_3$, est admis dans la chambre de travail 1 au cours d'un temps d'admission au cours duquel la soupape d'admission 4a est ouverte tandis que le piston 8 se déplace de son PMH jusqu'à une position intermédiaire indiquée par le trait mixte 27. En pratique, comme dans un moteur classique, la soupape d'admission 4a peut commencer à s'ouvrir avant l'arrivée du piston 8 au PMH. En outre, la soupape 4a peut ne pas être complètement ouverte lorsque le piston 8 est au PMH, ce qui permet au PMH d'être plus haut dans le cylindre 3 que représenté à la Figure 2 sans qu'il en résulte une collision entre le piston 8 et la soupape d'admission 4a.

Lorsque le piston 8 atteint la position intermédiaire 27, la soupape d'admission 4a se ferme tandis que la soupape de refoulement 7a demeure fermée (Figure 3). Le piston 8 continue sa course vers le PMB tandis que le gaz de travail admis dans la chambre de travail y est désormais enfermé.

Ceci produit une détente adiabatique du gaz de travail. Le piston 8 atteint son PMB puis effectue du PMB au PMH (Figure 4) une course de compression adiabatique du gaz de travail. Cette compression adiabatique comprend une phase de re-compression depuis le PMB jusqu'à la position intermédiaire 27, à l'issue de laquelle le gaz de travail retrouve les conditions $p_3$, $T_{81}$ du gaz de travail pré-comprimé. Ensuite, de la position intermédiaire 27 au PMH, la compression adiabatique comprend une phase de compression supplémentaire à l'issue de laquelle le gaz de travail est à une température $T_{14}>T_{81}$, et à une pression $p_4>p_3$. Au voisinage du PMH, la combustion est déclenchée par le moyen de combustion 6 (Figure 4).

Au total, et indépendamment du processus qui vient d'être décrit, ce qui importe est d'augmenter de façon adiabatique la pression et la température du gaz de travail dans la chambre de travail entre sa sortie de l'échangeur 23 et la combustion, de façon que la température $T_{14}$ et la pression $p_4$ juste avant la combustion soient supérieures, respectivement, à la température $T_{43}$ (=$T_{81}$) et à la pression $p_3$ du gaz pré-comprimé sortant de l'échangeur 23.

Cette compression supplémentaire dans la chambre de travail a le double effet de relever en niveau et d'amplifier l'élévation de température assurée par l'échangeur 23. Si l'échangeur de chaleur élève de 200 K la température du gaz d'admission, par exemple de $T_{33}$ = 400 K à $T_{43}$ = 600 K, et si la compression adiabatique dans le cylindre multiplie la température par 2, on voit que grâce à l'échangeur la température de début de combustion sera de 1200 K au lieu de 800 K, donc augmentée de 400 K, c'est-à-dire le double de l'élévation de chaleur assurée par l'échangeur 23.

Dans cet exemple, l'invention permet donc, par un échange de chaleur sur une amplitude de seulement 200 K à une température moyenne de 500 K, d'induire une élévation de température utile de 400 K à un niveau moyen de 1000 K.

En outre, l'échangeur selon l'invention fonctionne à basse pression alors que l'élévation de température obtenue en fin de compression dans le cylindre a lieu sous une pression bien plus élevée, à savoir $2^{3,5}$ = 11,3 fois plus élevée dans l'exemple d'un doublement de la température pendant la compression.

Ainsi, l'invention revalorise fortement les calories récupérées à relativement basse température à la sortie du mécanisme volumétrique, usuellement considérées comme dégradées et très difficiles à exploiter, notamment à charge partielle. En outre, selon l'invention, ces calories sont exploitées par la mise en œuvre d'un échangeur relativement simple car fonctionnant à relativement basse température et basse pression, sur une amplitude thermique relativement réduite.

Grâce au relèvement très significatif de la température $T_{14}$ de début de combustion, le rendement théorique du moteur est fortement revalorisé.

Le rendement du moteur est également revalorisé par la baisse de température appliquée par l'échangeur 23 au gaz refoulé par le mécanisme volumétrique.

La combustion se produisant au voisinage du PMH (Figure 4) provoque une augmentation de la température et de la pression dans le gaz de travail.

Ensuite, (Figure 5) les deux soupapes 4a, 7a étant toujours fermées, le gaz de travail se détend de façon adiabatique, donc avec diminution de température, tandis que le piston 8 se déplace vers son PMB.

Au voisinage du PMB, la pression $p_2$ dans le gaz de travail est de préférence juste suffisante pour fournir à la turbine 21 du turbocompresseur 19 l'énergie nécessaire pour assurer la pré-compression voulue. Autrement dit, le cycle thermodynamique est tel que le gaz sort de la turbine 21 sensiblement à la pression de référence $p_1$, mais avec une

température $T_{81}$ encore suffisamment élevée voulue pour l'entrée chaude du trajet calo-cédant 26 de l'échangeur 23.

Toujours au voisinage du PMB, la soupape de refoulement 7a s'ouvre, de sorte que pendant la remontée du piston 8 du PMB vers le PMH (Figure 6), le gaz de travail est chassé dans le conduit de refoulement 22 en direction de la turbine 21 du turbocompresseur 19. La température $T_{72}$ du gaz en amont de la turbine 21 est relativement élevée, même si le moteur fonctionne sous très faible charge. Cette température relativement élevée est due à l'élévation générale des températures du cycle du fait de l'action de l'échangeur 23 sur la température $T_{43}$ du gaz de travail à son entrée dans la chambre de travail 1.

Suivant une particularité de l'invention, un système 28 (Figure 1) de dépollution du gaz de travail refoulé destiné à retourner à l'atmosphère est installé dans le trajet du gaz de travail refoulé 22 en amont de l'échangeur 23, et plus particulièrement, de préférence, entre le mécanisme volumétrique 3 et la turbine 21 du turbocompresseur 19. Ainsi, le système de dépollution 28 fonctionne à la température $T_{72}$ qui est relativement élevée même si le moteur fonctionne sous très faible charge. On remédie ainsi à un inconvénient des moteurs thermiques classiques, à savoir un dysfonctionnement du système de dépollution sous très faible charge en raison d'une température trop basse à l'échappement.

Le gaz refoulé sort en principe de l'échangeur 23 à la pression de référence $p_1$, typiquement la pression atmosphérique. Un système de dissipation d'énergie et d'absorption acoustique dans l'échappement 25 du moteur n'est en général pas nécessaire.

La Figure 7 est un diagramme comparatif montrant un cas de fonctionnement ainsi que les effets et les possibilités d'un exemple de moteur thermique conforme aux Figures 1 à 6 à allumage par compression, fonctionnant à charge partielle, par comparaison avec un moteur diesel classique à alimentation atmosphérique fonctionnant avec la même charge partielle et aussi par comparaison avec le même moteur diesel classique fonctionnant à pleine charge. Le diagramme montre en ordonnées la pression du gaz de travail (par exemple en MPa) en fonction de son volume massique (par exemple en $m^3/kg$) indiqué en abscisses.

Dans ce diagramme et, sauf indication contraire, dans les diagrammes suivants, on désigne par :

$v_1$ : volume massique en fin de compression dans la chambre de travail 1

$v_2$ : volume massique en fin de combustion

$v_3$ : volume massique en fin de pré-compression

$v_4$ : volume massique à l'entrée dans la chambre de travail 1

$v_5$ : volume massique en début de pré-compression

$v_6$ : volume massique du gaz refoulé à la sortie de l'échangeur 23

$v_7$ : volume massique du gaz refoulé sortant de la chambre de travail 1

$v_8$ : volume massique du gaz refoulé entrant dans l'échangeur 23

$p_1$ : pression de référence, au début de la pré-compression, en général pression atmosphérique

$p_2$ : pression en fin de détente dans la chambre de travail 1

$p_3$ : pression en fin de pré-compression

$p_4$ : pression en fin de compression dans la chambre de travail 1

$p_5$ : pression maximale du cycle (dans la partie isobare de la combustion dans le cas du cycle « mixte » que l'on utilise en général comme approximation théorique pour un moteur diesel)

En outre, une lettre indique le cycle où ce paramètre prend la valeur considérée. Par exemple, $p_{4A}$ indique la pression en fin de compression dans la chambre de travail 1 pour le cycle A.

Les points (états du gaz de travail) identifiés sont désignés par $Q_{xy}$ désignant le point où le volume massique est $v_x$ et la pression est $p_y$. Par exemple $Q_{43}$ pour le point où le volume massique est $v_4$ et la pression $p_3$. Notamment lorsque les points identifiés n'appartiennent pas à tous les cycles représentés sur un même digramme, le nom du point est suivi par une ou plusieurs lettres identifiant le ou les cycles au(x)quel(s) ce point appartient. Par exemple $Q_{xyA,B}$ pour un point $Q_{xy}$ qui appartient à la fois au cycle A et au cycle B.

La température en un point $Q_{xy}$ est désignée par $T_{xy}$, désignation éventuellement suivie d'une ou plusieurs lettres indiquant le cycle concerné. Exemple $T_{xyA,C}$ pour la température en un point $Q_{xyA,C}$ commun aux cycles A et C.

Les isothermes (hyperboles d'un digramme (p,v) le long desquelles la température est constante) sont représentées par des traits mixtes et sont désignées par la désignation de la température régnant en un point où passe cette isotherme. Exemple : isotherme $T_{xyA,C}$. Lorsqu'une isotherme passe par deux points d'un cycle, elle est désignée par les deux températures. Exemple : isotherme $T_{xy}$-$T_{ztA}$ pour l'isotherme passant par les points $Q_{xy}$ et $Q_{zt}$ du cycle A.

Le cycle A en trait continu normal (non sur-épaissi) est celui d'un moteur diesel atmosphérique classique fonctionnant à charge partielle. Il comprend dans l'ordre suivant :

- une compression adiabatique de $Q_{51}$ à $Q_{14A}$

- une combustion à volume $v_{1A}$ constant de $Q_{14A}$ à $Q_{15A}$

- une combustion à pression $p_{5A}$ constante de $Q_{15A}$ à $Q_{25A}$

- une détente adiabatique de $Q_{25A}$ à $Q_{52A}$

- un refroidissement-détente à volume $v_5$ constant de $Q_{52A}$ à $Q_{51}$.

Comme l'on sait, la dernière de ces cinq phases est concrètement réalisée en remplaçant le gaz brûlé par de l'air frais. Dans un moteur à quatre temps, la cinquième phase précitée est réalisée par le temps d'échappement qui évacue le gaz brûlé de la chambre de travail et le temps d'admission au cours duquel l'air frais pénètre dans la chambre de travail.

On considèrera dans la suite que le mécanisme volumétrique du moteur selon l'invention fonctionne selon un cycle à quatre temps, même si l'invention n'est pas limitée à cette modalité de mise en œuvre.

Si l'on fait les hypothèses réalistes suivantes :

$v_5$ = 20 $v_{1A}$ (correspondant à un rapport volumétrique de 20 : 1 dans le mécanisme volumétrique)

$P_1$ = pression atmosphérique = 0,1 Mpa

$T_{51}$ = température atmosphérique = 290 K

r = constante universelle des gaz parfaits ramenée à 1 kg d'air = 288 J/kg.K

on obtient $v_5$ = r.$T_{51}$/$p_1$ = 0,8552 m³/kg

En fin de compression adiabatique au point $Q_{14A}$ les conditions sont (en prenant le coefficient adiabatique y = 1,4) :

$$v_{1A} = v_5 / 20 = 0,04276 \text{ m}^3/\text{kg}$$

$$p_{4A} = p_1 \times 20^{1,4} = 6,629 \text{ MPa}$$

$$T_{14A} = p_{4A}.v_{1A} / r = 984 \text{ K}$$

Pour la combustion à charge partielle on prend l'exemple d'une augmentation de température de 700 K dont 180 K à volume constant (chauffage isochore) et 520 K à pression constante (chauffage isobare).

On a donc au point $Q_{15A}$ :

$$T_{15A} = T_{14A} + 180 = 984 + 180 = 1164 \text{ K}$$

$$p_{5A} = p_{4A} \cdot (T_{15A} / T_{14a}) = 6,629 \times 1164 / 984 = 7,842 \text{ Mpa}$$

Et au point de fin de combustion $Q_{25A}$ :

$$T_{25A} = T_{15A} + 520 = 1684 \text{ K}$$

$$v_{2A} = v_{1A} \cdot (T_{25A} / T_{15A}) = 0,04276 \times 1684 / 1164) = 0,06186 \text{ m}^3/\text{kg}$$

Le rapport volumétrique de détente adiabatique de $Q_{25A}$ à $Q_{72A}$ est alors de :

$$v_{5A} / v_{2A} = 0,852 / 0,06186 = 13,82 : 1$$

La pression $p_{2A}$ et la température $T_{52A}$ en fin de détente adiabatique sont donc :

$$p_{2A} = p_{5A} / (13,82^\gamma) = 7,842 / (13,82^{1,4}) = 0,1983 \text{ MPa}$$

$$T_{52A} = T_{51A} . (p_{2A} / p_1) = 290 \text{ X } 0,1983 / 0,1 = 575 \text{ K}$$

Si l'on considère que la capacité calorifique du gaz de travail (on considère pour simplifier que c'est de l'air sans variation de masse tout le long du cycle) à pression constante Cp est égale à 1000 J/kg.K, l'énergie de combustion par kg d'air est :

$$Q_H = Cp.[((T_{15A} - T_{14A}) / \gamma) + (T_{25A} - T_{15A})] = 10^3.[(180 / 1,4) + 520] = 648 \text{ kJ}$$

ce qui correspond à environ 15 g de gazole par kg d'air.

Énergie rendue à la source froide par kg d'air :

$$Q_B = Cp.(T_{52A} - T_{51}) / \gamma = 10^3 (575 - 290) / 1,4 = 203 \text{ kJ}$$

Rendement théorique du moteur :

$$E_t = (Q_H - Q_B)/Q_H = (648 - 203) / 648 = 0,687 \text{ soit } 68,7 \text{ \%}$$

On va maintenant considérer le fonctionnement du moteur diesel atmosphérique classique à pleine charge (cycle B en pointillés à la Figure 7). La compression adiabatique $Q_{51}$ à $Q_{14B}$ est inchangée. L'apport calorifique de la combustion est maintenant de 1900 K qui se répartissent en 490 K à volume constant et 1410 K à pression constante.

Les valeurs au point $Q_{15B}$ de fin de combustion à volume constant sont :

$$T_{15B} = T_{14B} + 490 = 984 + 490 = 1474 \text{ K}$$

$$p_{5B} = p_{4B} . (T_{15B} / T_{14B}) = 6,629 \text{ X } 1474 / 984 = 9,9300 \text{ Mpa}$$

Et au point de fin de combustion $Q_{25B}$ :

$$T_{25B} = T_{15B} + 1410 = 1474 + 1410 = 2884 \text{ K}$$

$$v_{2B} = v_{1B} . (T_{25B} / T_{15B}) = 0,04276 \text{ X } (2884 / 1474) = 0,08366 \text{ m3/kg}$$

Rapport volumétrique de détente adiabatique de $Q_{25B}$ à $Q_{52B}$ :

$$v_{5B} / v_{2B} = 0,8552 / 0,08366 = 10,184 : 1$$

Pression $p_{2B}$ et température $T_{52B}$ en fin de détente adiabatique dans le mécanisme volumétrique :

$$p_{2B} = p_{5B} / (10,184^\gamma) = 9,9300 / (10,184^{1,4}) = 0,3853 \text{ MPa}$$

$$T_{52B} = T_{51} \cdot (p_{2B} / p1) = 290 \times (0,3853 / 0,1) = 1118 \text{ K}$$

Énergie de combustion par kg d'air :

$$Q_H = Cp.[((T_{15B} - T_{14B}) / \gamma) + (T_{25B} - T_{15B})] = 10^3.[(490 / 1,4) + 1410] = 1760 \text{ kJ}$$

ce qui correspond à environ 40 g de gazole par kg d'air.

Énergie rendue à la source froide est :

$$Q_B = Cp.(T_{52B} - T_{51}) / \gamma = 10^3 (1118 - 290) / 1,4 = 591 \text{ kJ}$$

Rendement théorique du moteur :

$$E_t = (Q_H - Q_B)/Q_H = (1760 - 591) / 1760 = 0,664 \text{ soit } 66,4 \%$$

Dans les deux cycles classiques qui viennent d'être étudiés, le rendement évolue peu en fonction de la charge. Ceci peut être expliqué à la lumière du deuxième principe de la thermodynamique : la température moyenne de combustion et la température moyenne du gaz pendant son refroidissement sont sensiblement dans le même rapport dans les deux cas.

On va maintenant considérer le cycle C selon l'invention, représenté en trait gras continu à la figure 7, dans l'exemple d'un cycle à allumage par compression. On choisit dans cet exemple que le cycle C ait le même point $Q_{25C}$ de sollicitation maximale du mécanisme volumétrique (en température et en pression) que celui $Q_{25B}$ du cycle B (diesel classique à pleine charge). On veut ainsi montrer comment l'invention permet d'améliorer le rendement sans créer de difficultés nouvelles pour la réalisation du mécanisme volumétrique. Ainsi, $v_{2C} = v_{2B}$ et $p_{5C} = p_{5B}$, et $T_{25C} = T_{25B}$

On reconnaît dans le cycle C d'après la description qui précède des Figures 1 à 6 les phases suivantes dans leur ordre de succession pour le gaz de travail à partir du point $Q_{51}$ (conditions atmosphériques) où l'air est prélevé à l'atmosphère :

- pré-compression de $Q_{51}$ à $Q_{33C}$ jusqu'à une pression $p_{3C}$, appelée « première pression », dans le compresseur 18 du turbocompresseur ;

- chauffage isobare à la pression $p_{3C}$ de $Q_{33C}$ à $Q_{43C}$ dans le trajet calo-récepteur de l'échangeur 23 ;

- compression supplémentaire de $Q_{43C}$ à $Q_{14C}$ dans la chambre de travail 1 ;

- chauffage isochore par combustion de $Q_{14C}$ à $Q_{15C}$ dans la chambre de travail 1 ;

- chauffage isobare par combustion de $Q_{15C}$ à $Q_{25C}$ dans la chambre de travail 1 ;

- détente adiabatique de $Q_{25C}$ à $Q_{72C}$ dans la chambre de travail 1 ;

- post-détente adiabatique de $Q_{72C}$ à $Q_{81C}$ dans la turbine du turbocompresseur ;

- refroidissement isobare de $Q_{81C}$ à $Q_{61C}$ dans le trajet calo-cédant de l'échangeur 23 à une deuxième pression inférieure à la première pression ($p_{3C}$), cette deuxième pression étant ici la pression atmosphérique $p_1$ ;

- refroidissement de $Q_{61C}$ à $Q_{51}$ par échange de chaleur avec la source froide, en pratique par échange de gaz avec la source froide, à savoir l'atmosphère.

La Figure 7A montre plus clairement le bas du cycle C, avec une flèche $F_C$ qui symbolise le transfert thermique se produisant dans l'échangeur 23 (Figure 1), à la manière d'un flux thermique canalisé entre les deux isothermes $T_{33C}$-$T_{61C}$ et $T_{81C}$-$T_{43C}$ (Figure 7A).

On suppose que la charge partielle est la même que celle du cycle A (diesel classique à charge partielle), c'est-à-dire 700 K d'élévation de température dont 180 K à volume constant puis 520 K à pression constante.

On a donc au point $Q_{15C}$ :

$$T_{15C} = T_{25C} - 520 = 2880 - 520 = 2360 \text{ K}$$

$$T_{14C} = T_{15C} - 180 \text{ K} = 2180 \text{ K}$$

$$v_{1C} = v_{2C} . (T_{15C} / T_{25B}) = 0,08366 \text{ X } (2360 / 2880) = 0,06855 \text{ m3/kg}$$

$$p_{4C} = p_{5C} . (T_{14C} / T_{15C}) = 9,9300 \text{ X } 2180 / 2360 = 9,173 \text{ Mpa}$$

La température $T_{43C}$ en début de compression dans le mécanisme volumétrique est sensiblement la même que la température $T_{81}$ en fin de détente, à savoir :

$$T_{43C} = T_{81} = T_{25}.[(p1/p5)^{((\gamma-1)/\gamma)}]$$

$$= 2880 \text{ X } [(0,1/9,9300)^{(0,4/1,4)}]$$

$$= 774 \text{ K}$$

Ainsi, la pression $p_{3C}$ et le volume massique $v_{4C}$ en début de compression dans le mécanisme volumétrique doivent être :

$$p_{3C} = p_{4C}.[(T_{43C}/T_{14C})^{(\gamma/(\gamma-1))}]$$

$$= 9,173.[(774/2180)^{(1,4/0,4)}] = 0,245 \text{ MPa}$$

$$v_{4C} = (r.T_{43C})/p_{3C} = 288 \text{ X } 774 / 245\,000 = 0,910 \text{ m}^3/\text{kg}$$

La température $T_{33C}$ en fin de pré-compression et à l'entrée du trajet calo-récepteur de l'échangeur 24 est donc :

$$T_{33C} = T_{51}.[(p_{3C}/p_1)^{((\gamma-1)/\gamma)}]$$

$$= 290 \text{ X } [(0,245/0,1)^{(0,4/1,4)}] = 375 \text{ K}$$

C'est également la température $T_{61C}$ à laquelle le gaz d'échappement est relâché à l'atmosphère à la sortie du moteur. Si l'on considère que la capacité calorifique $C_p$ du gaz de travail à pression constante est de 1kJ/kg.K, et sachant que la capacité calorifique $C_v$ du gaz de travail à volume constant est égale à $C_p/\gamma$, on trouve que la quantité de chaleur fournie à la source chaude par combustion est égale à $Q_H = 648$ kJ/kg (on a volontairement choisi la même que dans le cycle A pour faciliter la comparaison), et la quantité de chaleur $Q_B$ rendue à la source froide est égale à $(T_{61C} - T_{51}).C_p = 85$ kJ/kg.

Le rendement théorique du moteur selon l'invention est donc, dans cet exemple de réalisation et de niveau de charge :

$$(Q_H - Q_B)/Q_H = (648 - 85) / 648 = 0,869 \text{ soit } 86,9\%$$

Par rapport au cycle A l'amélioration est de :

$$(86,9 - 68,7) / 68,7 = 0,265 \text{ soit } 26,5 \text{ \%}.$$

Une quantité donnée de combustible fournit 26,5 % d'énergie mécanique supplémentaire.

L'énergie en jeu dans une variation de volume adiabatique est proportionnelle à la variation de température observée pendant la variation de volume. Par conséquent, la pré-compression de $p_1$ à $p_{3C}$ provoquant une élévation de température de 85 K nécessite de la part des gaz brûlés une post-détente de $p_{2C}$ à $p_1$ correspondant à une baisse de température de 85 K. Les gaz brûlés doivent donc sortir de la chambre de travail à une température de $T_{72C} = T_{81C} + 85K = 774 + 85 = 859$ K, et donc à une pression de $p_{2C} = P_1.[(T_{72C}/T_{81C})^{(\gamma/(\gamma-1))}] = 0,144$ MPa

Le rapport volumétrique de détente adiabatique de $Q_{25C}$ à $Q_{72C}$ dans le mécanisme volumétrique est alors de :

$$(p_{2C} / p_{7C})^{(1/\gamma)} = (9,93/0,144)^{(1/1,4)} = 20,57 : 1$$

Le rapport volumétrique du mécanisme volumétrique est plus élevé que le rapport de détente puisqu'il doit permettre non seulement la détente adiabatique consécutive à la combustion, mais aussi l'expansion pendant la combustion isobare de $Q_{15C}$ à $Q_{25C}$. Ce rapport volumétrique théorique est égal à :

$$v_{7C} / v_{1C} = (v_{7C} / v_{2C}).(v_{2C} / v_{1C})$$

$$= 20,57 \text{ X } (0,08366 / 0,06855) = 25,10 : 1$$

Pour être complet on a représenté en 30 à la figure 7 le tracé suivi par l'état du gaz de travail pendant l'aller-retour du piston de $v_{4C}$ à $v_{7C}$ et de $v_{7C}$ à $v_{4C}$ où commence la compression effective dans la chambre de travail 1. Dans la suite, on ne représentera plus ces deux segments de courbe superposés, qui ont un effet nul sur le travail et le rendement théoriques du cycle, mais qui ont l'avantage de réduire la température moyenne du cycle, et donc de réduire le besoin de refroidissement du moteur dans une application concrète.

Pour une masse de gaz de travail donnée par cycle, la cylindrée du moteur est proportionnelle à $v_{7C}$ dans le cycle C et à $v_5$ dans le cycle A, ce qui correspond à une augmentation dans un rapport de :

$$v_{7C}/v_5 = [(r.T_{72C})/p_{2C}]/v_5 = (288 \text{ X } 859) / (144\ 000 \text{ X } 0,852) = 2,016$$

Mais comme le rendement est augmenté de 26,5 %, donc multiplié par 1,265, l'augmentation de cylindrée pour une puissance mécanique donnée est de :
2,016 / 1,265 = 1,594 soit environ +60 %

Par comparaison, si dans le cycle A on augmentait suffisamment la cylindrée pour détendre complètement les gaz brûlés au-delà de $p_{2A} = 0,1983$ Mpa jusqu'à $p_1 = 0,1$ MPa, au lieu de les relâcher à l'échappement à la pression $p_{2A}$, la cylindrée serait augmentée d'environ 63 % et la température à l'échappement serait de 473 K, de sorte que l'énergie rendue à la source froide serait de $(473 - 290).C_p = 183$ kJ et le rendement serait de $(648 - 183) / 648 = 0,717$ soit 71,7 %, donc une amélioration à peine notable par rapport aux 68,7 % du cycle A, et très loin de l'amélioration procurée par le cycle C et plus généralement par l'invention, malgré une augmentation de cylindrée similaire.

Revenant maintenant à l'invention, l'augmentation de cylindrée, qui pourrait paraître un inconvénient de l'invention, constitue en fait l'un de ses avantages, car pour une cylindrée donnée la charge partielle qui est de 700/1900 = 0,368 dans l'exemple du cycle C devient en pratique 0,368/1,594 = 0,232 pour l'utilisateur d'un moteur fonctionnant selon l'invention à charge partielle mais fonctionnant de manière classique (par exemple cycle B) à pleine charge. Or on sait que l'amélioration du rendement du fonctionnement à très faibles charges est une préoccupation très actuelle. On reviendra dans la suite sur différentes solutions pour réaliser différents régimes de fonctionnement d'un moteur selon l'invention, tout en étant capables d'une puissance maximale comparable ou même identique à celle d'un moteur classique pour une cylindrée donnée.

Pour réaliser différents régimes de puissance partielle dans une certaine gamme, on peut selon l'invention utiliser un cycle sensiblement invariable, par exemple le cycle C de la Figure 7, et faire varier un rapport de transmission entre le moteur et la charge à entraîner. En d'autres termes, étant donné que le moteur selon l'invention fournit un rendement très élevé lorsque l'énergie par cycle est faible, on peut avoir intérêt à effectuer un nombre plus élevé de cycles peu énergétiques, alors que dans un moteur classique on privilégie souvent un faible nombre de cycles fortement énergétiques.

En agissant sur le rapport de transmission plutôt que sur l'énergie par cycle pour modifier la puissance produite, on conserve des valeurs de température stables aux deux extrémités de l'échangeur 23, donc tout le long de celui-ci, et d'une façon générale dans l'ensemble du moteur. Cela favorise le bon fonctionnement du moteur.

Cependant, on reviendra plus loin sur d'autres dispositions permettant à un moteur selon l'invention de fonctionner dans différentes plages de charge tout en stabilisant thermiquement le fonctionnement de l'échangeur.

Pour l'exécution du cycle C, les moyens de pilotage règlent la quantité de carburant des injections isobare et isochore respectivement et éventuellement le point 27 de fermeture de la soupape d'admission 4a, étant cependant noté que, de façon surprenante, certaines réalisations sont possibles où le point 27 est dans un rapport invariable avec les volumes extrêmes (au PMH et au PMB) de la chambre de travail 1 pour en général au moins une grande partie des points de fonctionnement ou même la totalité d'entre eux.

Bien que le moteur selon l'invention vienne d'être présenté par comparaison avec un moteur classique atmosphérique, on comprendra que de la même manière le rendement permis par l'invention dépasse très largement les rendements permis par les moteurs classiques suralimentés, même équipés d'un inter-refroidisseur. On sait en effet que ces dispositions connues tendent plutôt à dégrader le rendement théorique d'un moteur thermique, leur but étant principalement d'améliorer le rapport poids/puissance maximale.

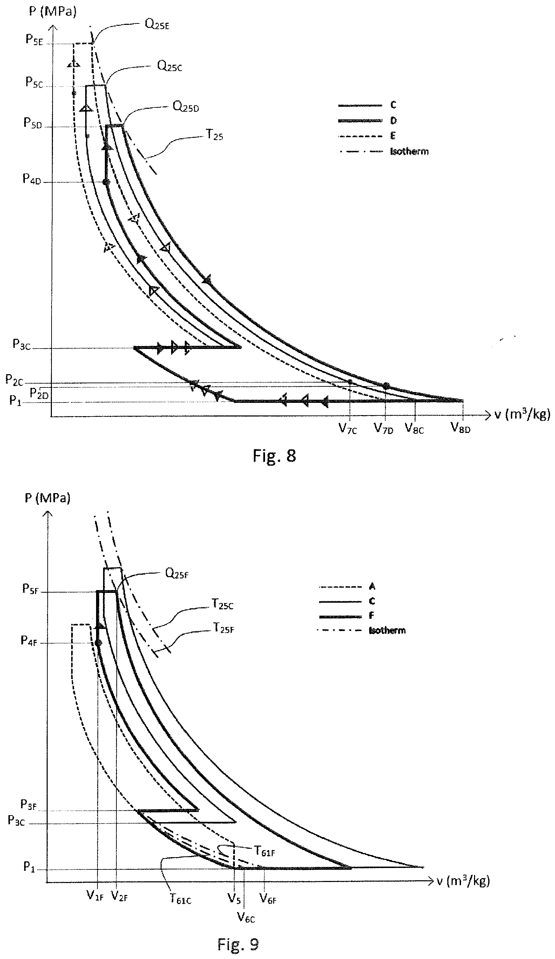

En particulier, comme le montre la Figure 8, on peut notamment envisager de réduire le rapport volumétrique du moteur selon l'invention, pour le rapprocher de celui d'un moteur diesel classique, avec des valeurs de l'ordre de 20 : 1, tout en conservant sensiblement le rendement élevé calculé plus haut. Un tel cycle est désigné par la référence D, par comparaison avec le cycle C, également visible à la Figure 8.

Le point $Q_{25D}$ le plus chaud du cycle D est déplacé vers les basses pressions le long de l'isotherme $T_{25}$ passant par le point le plus chaud $Q_{25C}$ du cycle C. La pression maximale étant ainsi abaissée, le rapport volumétrique de détente qui est nécessaire dans le cylindre est plus faible. Les points du cycle D se calculent selon la même méthode que celle exposée ci-dessus à propos du cycle C.

Dans le cycle D, la température moyenne $T_m$ dans la chambre de travail au cours d'un cycle correspondant à $\theta_{cycle}$ = 720° d'angle de rotation de l'arbre moteur, est plus élevée que dans le cycle C. La température haute de l'échangeur 23 est également plus élevée.

Pour réduire la température moyenne dans le cylindre, réduire la température haute de l'échangeur et réduire en conséquence la puissance calorifique évacuée par le système de refroidissement du moteur, on peut recourir au cycle E ou au cycle F.

Dans le cycle E (Figure 8), le point $Q_{25E}$ le plus chaud du cycle est décalé vers les hautes pressions le long de l'isotherme $T_{25}$, par rapport au point $Q_{25C}$ du cycle C.

Pour une meilleure clarté de la Figure 8, le cycle E n'est représenté que là où il diffère du cycle D.

Dans ce cycle, pour une même température $T_{25}$ du point le plus chaud, la pression maximale $p_{5E}$ est plus élevée que dans le cycle C, un rapport volumétrique plus grand pourra être adopté dans le mécanisme volumétrique, la température en sortie de cylindre sera plus basse, de même par conséquent que la température moyenne dans le cylindre et que la température haute de l'échangeur.

La pression $p_3$ dans l'échangeur 23 est théoriquement la même pour les cycles C, D et E, pour lesquels la charge est la même et la température maximale $T_{25}$ est la même.

Dans le cycle F, représenté à la Figure 9 par comparaison avec le cycle C, on choisit pour le point $Q_{25F}$ le plus chaud du cycle une température $T_{25F}$ inférieure à celle $T_{25C}$ du point le plus chaud du cycle C. La pression maximum peut être choisie inférieure à celle du cycle C (comme représenté), ou bien égale ou supérieure à celle du cycle C en faisant glisser le point le plus chaud le long de l'isotherme $T_{25F}$ d'une manière analogue à celle exposée en référence à la Figure 8 au sujet des cycles D et E. Le rendement théorique du cycle F est inférieur au rendement théorique du cycle C car la température $T_{25F}$ la plus élevée du cycle est plus basse.

La Figure 9 visualise qu'avec une température maximale abaissée ($T_{25F}<T_{25C}$) la pression dans l'échangeur 23 est accrue ($p_{3F}>p_{3C}$). Ceci corrobore la baisse du rendement théorique : avec $p_{3F}$ plus élevée que $p_{3C}$ la température d'échappement $T_{61F}$, égale à la température de fin de pré-compression, est également plus élevée que la température correspondante $T_{61C}$ du cycle C pour une même quantité de chaleur fournie par la combustion. De plus, si la pré-compression est assurée par turbocompresseur, les pertes du ou des turbocompresseurs sont accrues. On décrit plus loin des modes de réalisation avantageux avec compresseur « autonome » qui minimisent l'inconvénient des pertes réelles dues à la pré-compression.

Par contre, avec la température maximale abaissée ($T_{25F}<T_{25C}$), toutes les températures dans le cylindre sont significativement abaissées. Ainsi, la température moyenne est significativement plus basse, de sorte que la chaleur à évacuer par le système de refroidissement est moindre. Ceci est favorable pour le rendement réel du moteur.

Alors qu'on avait envisagé une température maximale théorique $T_{25C}$ = 2880K dans l'exemple de la Figure 7, on peut envisager une température maximale de l'ordre de $T_{25F}$ = 2000K avec un rendement théorique encore correct, et un rendement réel qui est moins éloigné du rendement théorique. En outre, avec la moindre température maximale la production de NOx à la combustion est réduite.

La réduction du besoin en refroidissement se répercute favorablement sur la consommation de certains accessoires tels que pompe à eau, ventilateur de refroidissement. Lorsque le moteur équipe un véhicule, la résistance à l'avancement du véhicule est, elle aussi, abaissée. En outre, la température haute de l'échangeur est également abaissée, de même que l'amplitude thermique de l'échangeur (différence entre sa température haute et sa température basse), ce qui facilite la réalisation de l'échangeur et diminue son coût, son poids et son encombrement.

Ces considérations montrent que l'invention permet certes, mais n'impose pas d'augmenter le niveau de température dans la chambre de travail. Une partie de l'augmentation du rendement théorique permise par l'invention provient en effet de l'abaissement de la température moyenne des calories rendues à la source froide.

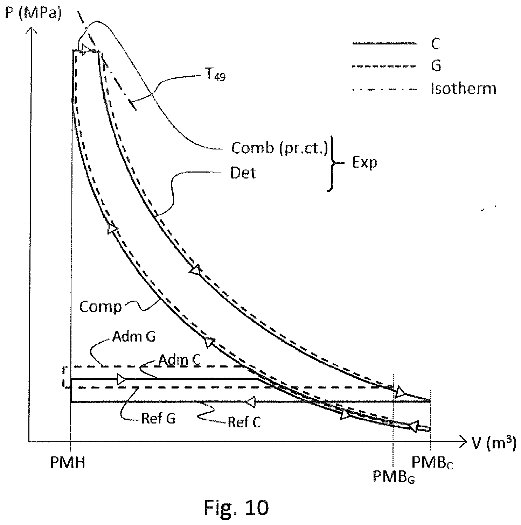

A la Figure 10, on a représenté en trait continu la pression p dans la chambre de travail en fonction du volume réel V de la chambre de travail (et non plus comme dans les graphes précédents le volume massique v du gaz de travail) dans le cycle C des figures précédentes.

Les temps d'admission AdmC, de compression CompC, d'expansion Exp, et de refoulement RefC sont représentés. Le temps d'expansion Exp comprend la combustion à pression constante Comb(pr.ct.) et la détente Det.

On voit que contrairement à certains moteurs classiques, la pression de refoulement est inférieure à la pression d'admission, de sorte que ces deux temps fournissent globalement de l'énergie mécanique à l'arbre moteur. Ceci tient au fait que le gaz refoulé par le mécanisme volumétrique selon l'invention est de préférence totalement dépressurisé à l'exception de la pression strictement nécessaire pour actionner le turbocompresseur et pour la circulation du gaz jusqu'à l'atmosphère. Comme le gaz brûlé est en outre plus chaud que dans un moteur classique, son débit volumique plus grand lui permet d'actionner le turbocompresseur avec une pression plus faible.

Dans le moteur selon l'invention, l'avance à l'ouverture de la soupape de refoulement par rapport au PMB peut être nulle ou en tout cas beaucoup plus faible que dans un moteur classique. Il n'y a en effet pas ou que très peu de pression en excès à évacuer en fin d'expansion pour éviter une contre-pression nuisible sur le piston pendant le temps de refoulement RefC. On peut cependant avoir intérêt à prévoir une avance à l'ouverture de la soupape de refoulement pour initier le mouvement de refoulement du gaz avant le début de la remontée du piston à partir du PMB.

A la Figure 10, on a également représenté en pointillés le cycle G par comparaison avec le cycle C. Le cycle G est une autre variante du cycle selon l'invention, dans laquelle on accepte de perdre la fin de la détente du gaz afin de réduire le rapport volumétrique et la cylindrée du mécanisme volumétrique pour une puissance donnée, avec l'inconvénient d'augmenter légèrement la température moyenne dans la chambre de travail puisque la température au refoulement est plus élevée, de même que la température haute de l'échangeur. Dans cette version, contrairement aux précédentes, une partie de l'énergie de pression des gaz brûlés est dissipée à l'échappement, comme dans un moteur classique mais dans des proportions moindres. Le $PM_B$ du cycle G est identifié par son volume PMBG plus faible que celui $PMB_C$ du cycle C, pour un volume au PMH identique pour les deux cycles. Les temps spécifiques au cycle G sont identifiés par l'indice « G » au lieu de « C ».

Les différents modes d'évolution du cycle à partir du cycle C pris (arbitrairement) comme cycle de référence, peuvent se combiner. En pratique, on optimise le cycle en vue d'un compromis optimal entre rendement réel compte-tenu de l'application (par exemple véhicules routiers) à laquelle le moteur est destiné, coût du moteur, poids du moteur, encombrement du moteur, optimisation et homogénéisation de la cartographie du moteur, ciblage de points de fonctionnement optimisés etc.

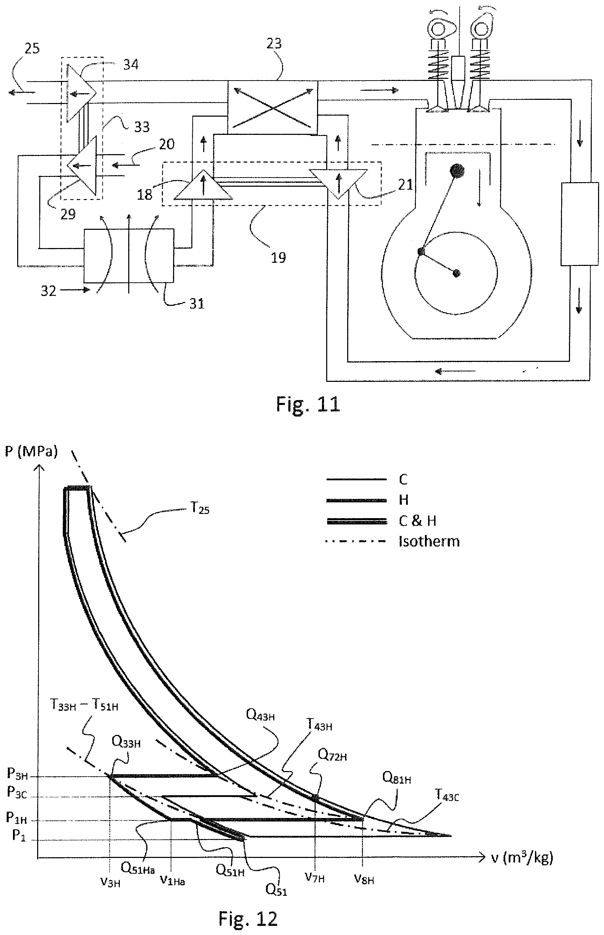

En référence à la Figure 11, un deuxième mode de réalisation va maintenant être décrit, mais uniquement pour ses différences avec le mode de réalisation de la Figure 1.

En amont du compresseur 18 du turbocompresseur 19, le gaz d'admission passe par un compresseur d'entrée 29 suivi d'un inter-refroidisseur 31. La sortie de l'inter-refroidisseur 31 est raccordée à l'entrée du compresseur 18. Le gaz comprimé de façon adiabatique et donc échauffé dans le compresseur d'entrée 29 est ensuite ramené sensiblement à la température atmosphérique dans l'inter-refroidisseur 31 en cédant ses calories excédentaires à un flux d'air de refroidissement 32, en général de l'air atmosphérique, qui traverse l'inter-refroidisseur 31.

Le compresseur d'entrée 29 fait partie d'un turbocompresseur d'entrée 33 comprenant en outre une turbine 34 dans laquelle passe le gaz de travail refoulé sortant de l'échangeur 23.

Suivant ce mode de réalisation, dont un cycle H possible est illustré à titre d'exemple dans un diagramme (p, v) à la Figure 12 par comparaison avec le cycle C, le haut du cycle peut comme représenté rester inchangé, mais la détente est plus courte dans le mécanisme volumétrique de sorte que le gaz de travail refoulé sort de la chambre de travail à une pression et une température plus élevées que dans le cycle C. Ainsi, on réduit significativement le rapport volumétrique du mécanisme volumétrique, ainsi que la cylindrée du mécanisme volumétrique, donc son poids et son encombrement, à la manière d'un moteur turbocompressé classique mais sans les pertes accrues de ce dernier à l'échappement. Un autre intérêt peut être par exemple d'augmenter la pression maximale dans la chambre de travail sans augmenter la température maxi $T_{25}$ ni le rapport volumétrique du mécanisme volumétrique par rapport au cycle C, de façon à réduire la température maxi $T_{43H}$ de l'échangeur et la température moyenne dans la chambre de travail, comme exposé en référence à la Figure 8.

On voit à la Figure 12 les points :

$Q_{72H}$ où le gaz de travail sort du mécanisme volumétrique ;

$Q_{81H}$ où le gaz de travail sort de la turbine 21 et entre dans l'échangeur 23 ;

$Q_{51H}$ où le gaz brûlé sort de l'échangeur 23 et entre dans la turbine 34 du turbocompresseur d'entrée 33 ;

$Q_{51}$ (correspondant aux conditions ambiantes) où le gaz brûlé sort de la turbine 34, et où le gaz frais entre dans le compresseur d'entrée 29 de sorte que la courbe de compression dans le compresseur d'entrée 29 se superpose à la courbe de détente dans la turbine 34, comme représenté.

En théorie $p_{3H}/p_{1H} = p_{1H}/p_1$ pour que le gaz refoulé sortant de l'échangeur 23 soit à une température $T_{33H}$-$T_{51H}$ telle que sa détente à la pression $p_1$ dans la turbine 34 le ramène à la température $T_{51}$.

En pratique on peut tolérer que cette détente se termine à une température supérieure à $T_{51}$, ou alors un rapport $p_{1H}/p_1 > p_{3H}/p_{1H}$ sera nécessaire.

Le point $Q_{51}$ correspond donc aux conditions d'entrée du gaz frais dans le moteur, c'est-à-dire dans le compresseur d'entrée 29,.

On voit encore à la figure 12 les points :

$Q_{51Ha}$ où le gaz partiellement pré-comprimé sort de l'inter-refroidisseur 31 avec un volume massique $v_{1Ha}$ réduit et une pression $p_{1H}$ conservée, pour entrer dans le compresseur 18 du turbocompresseur 19 ;

$Q_{33H}$ où le gaz pré-comprimé sort du compresseur 19 pour entrer dans l'échangeur 23 ;

$Q_{43H}$ où le gaz pré-comprimé sort de l'échangeur 23 pour entrer dans la chambre de travail 1 du mécanisme volumétrique.

Dans cet exemple de fonctionnement du mode de réalisation de la Figure 11, c'est simplement à l'inter-refroidisseur 32 que de la chaleur est rendue à la source froide. Le rendement théorique est sensiblement le même que celui calculé pour le cycle C.

D'une manière générale, toutes les évolutions envisagées (cycles D à G) pour le cycle C sont applicables au mode de réalisation de la Figure 11.

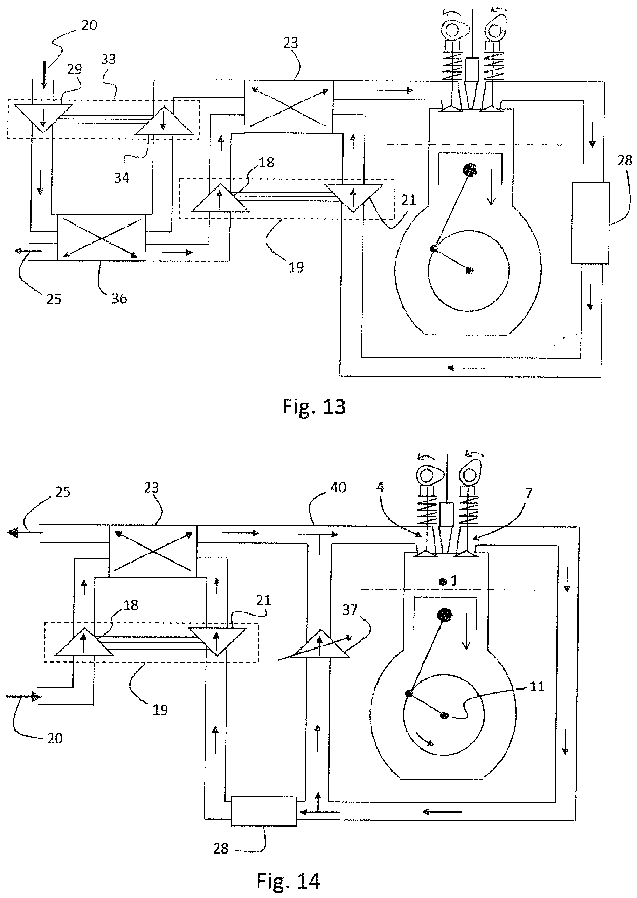

Le mode de réalisation de la Figure 13 est dérivé de celui de la Figure 11, excepté que l'inter-refroidisseur 31 est remplacé par un échangeur à contre-courant 36 entre le gaz de travail refoulé sortant à température ambiante de la turbine 34, et le gaz de travail partiellement pré-comprimé chauffé par sa compression dans le compresseur d'entrée 29.

Le gaz de travail partiellement pré-comprimé est ainsi refroidi par le gaz de travail refoulé complètement détendu. On n'a donc plus besoin du flux d'air extérieur 32 de la Figure 11, dont la génération a souvent des inconvénients tels que pertes aérodynamiques dans le cas d'un véhicule, nécessité d'un ventilateur notamment pour les applications fixes (telles que groupes électrogènes) ou quasi-fixes (telles qu'engins de chantier ou agricoles) etc.

Le cycle thermodynamique théorique du moteur de la Figure 13 peut en principe être le même que celui H de la Figure 12, et peut être modifié de la même manière en s'inspirant des variantes de cycle D à G.

Le mode de réalisation de la Figure 14 ne sera décrit que pour ses différences avec celui des Figures 1 à 6.

Les moteurs classiques sont souvent équipés d'une vanne dite EGR (pour : « Exhaust Gas Recycling », c'est-à-dire « recyclage des gaz d'échappement ») par laquelle une fraction variable du gaz brûlé refoulé par le mécanisme volumétrique est renvoyée à l'admission du moteur. Cependant, dans un moteur classique, le recyclage direct du gaz brûlé très chaud dans le gaz d'admission tend à réchauffer significativement celui-ci, contrairement à ce que l'on souhaite dans ce type de moteur.

Le mode de réalisation de la Figure 14 résout ce problème.

Un compresseur d'EGR à débit réglable 37 est placé entre le refoulement 7 et l'admission 4 de la chambre de travail 1. Le compresseur d'EGR 37 s'alimente en gaz de travail entre le refoulement 7 de la chambre de travail 1 et le système de dépollution 28, et refoule ce gaz de travail, appelé « gaz de recirculation » ou « gaz d'EGR », en un point de mélange 40, en aval de l'échangeur 23, où le gaz d'EGR se mélange avec le gaz pré-comprimé qui a été réchauffé dans l'échangeur 23.

Ainsi, l'échangeur 23 et le turbocompresseur 19 peuvent être de plus petite taille car ils ne traitent qu'une partie du débit de gaz passant dans la chambre de travail 1.

Pour chaque point de fonctionnement du moteur, la cartographie du moteur définit le taux d'EGR (proportion de gaz d'EGR dans le gaz de travail admis dans la chambre de travail 1). Les moyens de pilotage règlent de façon correspondante le débit du compresseur 37.

Dans le mode de réalisation de la Figure 14, le gaz refoulé sortant du compresseur d'EGR est plus chaud que le gaz pré-comprimé sortant de l'échangeur 23. Le mélange gaz pré-comprimé-gaz d'EGR pénétrant dans la chambre de travail 1 est donc plus chaud que selon le cycle C. Ceci est pris en compte dans la mise au point concrète du moteur, par exemple en augmentant la pression $p_3$ dans l'échangeur 23.

Le compresseur 37 peut être entraîné en étant couplé à l'arbre moteur 11 du mécanisme volumétrique, ou peut être entraîné par une motorisation qui lui est propre, par exemple un moteur électrique, ou encore peut être entraîné en étant couplé à l'arbre du turbocompresseur 19.

Dans un mode de réalisation non spécifiquement représenté, on peut aussi réaliser la fonction EGR sous une forme dite « interne », en fermant la soupape de refoulement 7a de façon précoce pour piéger une partie du gaz brûlé dans la chambre de travail 1 du mécanisme volumétrique 3. Dans ce cas on ouvre tardivement la soupape d'admission pour d'abord détendre le gaz brûlé piégé. Ce mode de réalisation très simple d'une fonction EGR a en outre l'avantage que les soupapes sont toutes les deux fermées ou quasi-fermées au PMH, ce qui résout le problème du risque de collision entre soupapes et piston au PMH lorsque le rapport volumétrique du mécanisme volumétrique est élevé ou très élevé. Le retard à l'ouverture de la soupape d'admission n'est pas un inconvénient puisqu'une partie des gaz, à savoir ceux piégés dans la chambre, sont déjà là, et que d'autre part, selon l'invention, l'admission n'a lieu que sur une partie de la course du piston. Cette fonction EGR encore plus simple que celle de la Figure 14 dispense du compresseur d'EGR 37 mais nécessite des soupapes à point de fermeture (refoulement) et d'ouverture (admission) réglables si l'on souhaite pouvoir régler le taux d'EGR.

On peut également réaliser un EGR « mixte », c'est-à-dire en partie externe et en partie interne. Dans ce cas l'EGR interne peut avantageusement être non réglable. Le réglage du taux d'EGR se faisant uniquement sur l'EGR externe, en agissant ici sur le débit du compresseur 37.

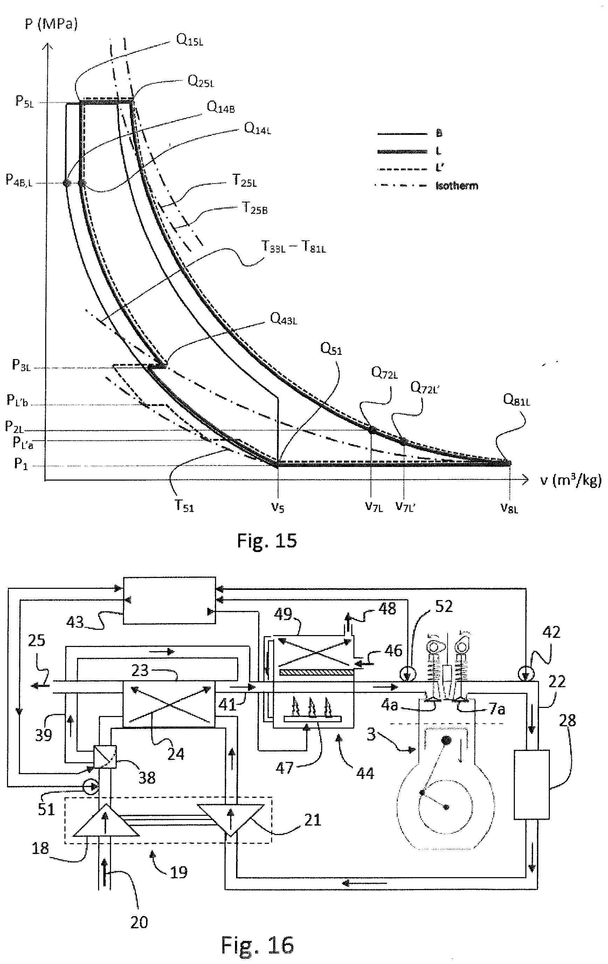

On va maintenant décrire l'application de l'invention à un moteur fonctionnant à pleine charge selon le cycle L, en référence à la Figure 15.

Par rapport au cycle B (diesel atmosphérique fonctionnant à pleine charge) de la Figure 7 (reproduit également en trait fin à la Figure 15) on choisit d'admettre une température maximale $T_{25L}$ = 3200 K, accrue par rapport à $T_{25B}$, pour une pression maximale $p_{5L}$ inchangée, donnant un point de sollicitation maximale $Q_{25L}$.

Avec des calculs semblables à ceux exposés plus haut en référence à la Figure 7, et en se basant sur le même apport calorifique par combustion que pour le cycle B, on détermine les points $Q_{15L}$, $Q_{14L}$, et donc la courbe de compression adiabatique qui se termine au point $Q_{14L}$.

On calcule également que la courbe de détente se termine à la température $T_{81L}$ = 844 K, et que la courbe de compression précitée passe par la température $T_{81L}$ au point $Q_{43L}$ pour une pression $p_{3L}$ = 1,698 MPa.

A cette pression, le gaz pré-comprimé de façon adiabatique à partir de la température atmosphérique 290 K atteint une température $T_{33L}$ = 651 K.

L'échangeur 23 selon l'invention va donc recevoir du gaz d'admission à 651 K et le réchauffer à 844 K, tandis que le gaz refoulé détendu à 0,1 MPa (pression atmosphérique) sera refroidi de 844 K à $T_{61L}$ = 651 K. A cette température le gaz refoulé est rejeté à l'atmosphère. L'énergie rendue à la source froide est donc de $C_p \cdot (T_{61L} - T_{51})$ = 1 KJ/kg.K X (651 - 290) = 361 kJ pour 1 kg d'air.

L'énergie de combustion est comme pour le cycle B de 1691 kJ pour 1 kg d'air.

Le rendement théorique du cycle L est donc :
(1691 - 361)/1691 = 0,787 soit 78,7 %

Ceci correspond à un gain de plus de 10 points de pourcentage par rapport au cycle B, et un accroissement de plus de 15 % de l'énergie mécanique produite, pour une quantité donnée de carburant.

La pré-compression avant l'entrée dans l'échangeur 23 consomme une énergie correspondant à un refroidissement adiabatique de 361 K, qui peut être fournie par le turbocompresseur 19 si le gaz brûlé sort du mécanisme volumétrique au point $Q_{72L}$ à la température $T_{72L}$ = 844 + 361 = 1205 K correspondant, le long de la courbe de détente, à une pression $p_{2L}$ = 0,348 MPa et à un volume massique $v_{7L}$ = 0,9972 m3/kg

Le rapport volumétrique du mécanisme volumétrique est donc :
$v_{7L} / v_{1L}$ = 0,9972 / 0,0483 = 20,65 : 1

On observe que ce rapport volumétrique théorique est proche de celui du cycle C correspondant à une charge très partielle. Ceci montre la capacité de l'invention à être mise en œuvre avec un mécanisme volumétrique à rapport volumétrique fixe.

Dans un mode de réalisation, on choisit pour chaque niveau de charge un point de sollicitation maximale $Q_{25L}$ tel que l'énergie mécanique encore disponible dans le gaz de travail au point $Q_{72L}$ (à la sortie du mécanisme volumétrique) corresponde à l'énergie nécessaire pour la pré-compression, le rapport volumétrique du mécanisme volumétrique étant fixe.

Selon une réalisation, on peut choisir un point $Q_{25}$ de sollicitation maximale tel que la température $T_{81}$ de fin

de détente sera plus faible que celle de l'exemple numérique précédent. Ainsi la pression $p_3$ nécessaire au point $Q_{43}$ de début de compression supplémentaire est abaissée, comme exposé en référence à la figure 8. Ceci facilite la pré-compression.

Dans une autre réalisation, on peut choisir le point $Q_{25}$ plus haut en pression et en température, mais sur la même courbe de détente adiabatique, passant par $Q_{81B}$, que le point $Q_{25B}$. On obtient un effet semblable de diminution de la pression de pré-compression.

Notamment lorsqu'elle est relativement élevée, comme dans l'exemple précédent jusqu'à 1,698 MPa, la pré-compression peut être obtenue au moyen de plusieurs étages de pré-compression successifs, par exemple deux ou trois étages. Dans le cas présent, on pourrait par exemple envisager trois étages fournissant chacun un rapport de pression de $(p_{3L}/p_1)^{(1/3)} = 2,57 : 1$

On peut améliorer le rendement de pré-compression en intercalant un inter-refroidisseur entre étages de pré-compression. Dans l'exemple ci-dessus, on place un inter-refroidisseur entre le premier et le deuxième étage, et un autre inter-refroidisseur entre le deuxième et le troisième étage. Le cycle avec deux inter-refroidisseurs est alors modifié selon le pointillé L' de la Figure 15. Le troisième étage de pré-compression échauffe le gaz d'admission de 290 K à 380 K, qui constitue la température du côté froid de l'échangeur 23. Les refroidissements dans les inter-refroidisseurs sont visibles sous la forme de segments horizontaux au niveau des pressions $p_{L'a}$ et $p_{L'b}$ à la Figure 15.

L'énergie rendue à la source froide n'est plus que de 90 kJ dans chaque inter-refroidisseur et 90 kJ à l'échappement, soit un total de 270 kJ au lieu de 361 kJ dans le cycle L. Le rendement théorique devient :
(1691 - 270) / 1691 = 0,840 soit 84 %.

L'amélioration est donc de plus que cinq points de pourcentage par rapport au cycle L sans inter-refroidisseur.

Le rapport volumétrique du moteur augmente un peu puisque le mécanisme volumétrique refoule le gaz de travail au point $Q_{72L'}$ à une température de 844 + 270 = 1114 K au lieu de 1205 K dans le cycle L. Ceci correspond à un volume massique $v_{7L'}$ augmenté d'un facteur :

$$(1205/1114)^{(1/\gamma-1))} = 1,21$$

et donc à un rapport volumétrique de :
20,65 X 1,21 = 25,13 : 1

Ce rapport volumétrique est quasiment identique à celui du cycle C.

Le mode de réalisation de la Figure 16, qui ne sera décrit que pour ses différences avec celui de la Figure 1, comporte deux perfectionnements qui peuvent chacun être mis en œuvre dans un mode de réalisation qui ne comporterait pas l'autre de ces deux perfectionnements.

Selon un premier perfectionnement, des moyens d'ajustement thermique 38, 39 permettent au gaz de travail pré-comprimé de sélectivement contourner l'échangeur 23.

À forte ou pleine charge, le gaz de travail pré-comprimé contourne l'échangeur 23. Le moteur fonctionne alors comme un moteur suralimenté classique, par exemple un diesel classique suralimenté. Par conséquent, les contraintes maximales, notamment thermiques, subies par le mécanisme volumétrique peuvent ne pas dépasser les valeurs usuelles. La puissance maximale et le couple maximal sont les mêmes que ceux d'un moteur classique comparable ayant un rapport volumétrique comparable.

Le cycle selon l'invention, c'est-à-dire avec transfert thermique du gaz sortant du mécanisme volumétrique en faveur du gaz de travail pré-comprimé comme décrit en référence aux Figures 7 à 10 par exemple, n'est mis en œuvre qu'à charge partielle.

Pour permettre le fonctionnement différent à faible et à forte charge respectivement, le trajet du gaz de travail entre la sortie du compresseur 18 et l'entrée dans le mécanisme volumétrique comprend deux branches en parallèle. Une première branche, ou « branche de chauffage », passe par le trajet calo-récepteur 24 de l'échangeur 23, comme à la Figure 1. Une seconde branche 39, ou « branche de contournement », contourne l'échangeur 23. Les deux branches se rejoignent en un point de raccordement 41 situé entre la sortie du trajet calo-récepteur 24 de l'échangeur 23 et la soupape d'admission 4a. La seconde branche 39 est non-chauffée. Ceci signifie que le gaz la parcourt sans recevoir de chaleur. Dans la réalisation représentée la branche 39 est un simple conduit qui peut dissiper de la chaleur vers l'extérieur. Dans d'autres réalisations le conduit peut être calorifugé pour limiter ou empêcher la diffusion de chaleur vers l'extérieur. Dans une troisième version le conduit est au contraire équipé d'un dissipateur thermique (non représenté), par exemple des ailettes de refroidissement à sa périphérie extérieure. Dans une quatrième version le conduit passe par un inter-refroidisseur (non représenté).

Les moyens d'ajustement thermique 38, 39 comprennent en outre des moyens distributeurs 38 qui orientent le gaz de travail pré-comprimé vers l'une ou l'autre branche ou encore, dans un mode de réalisation préféré, qui répartissent le gaz de travail entre les deux branches, de façon encore plus préférée selon une proportion variable. Dans l'exemple représenté, le moyen distributeur 38 est une vanne à trois voies placée à l'entrée commune des deux branches.

Dans une position de faible charge la vanne à trois voies 38 fait passer tout le gaz de travail pré-comprimé du compresseur 18 dans le trajet 24 de l'échangeur 23. Dans une position de forte charge, la vanne 38 fait passer tout le gaz de travail pré-comprimé dans le conduit non-chauffé 39. Le gaz ressort du conduit 39 à une température sensiblement inchangée, c'est-à-dire la température de sortie du compresseur 18, ou une température abaissée, selon les versions pour la réalisation de la branche non-chauffée 39.

Dans le mode de réalisation préféré, la vanne à trois voies 38 est en outre capable d'une position de charge intermédiaire dans laquelle une partie seulement du gaz de travail pré-comprimé traverse l'échangeur 23 tandis que l'autre partie passe par le conduit non-chauffé 39. Dans ce cas, le mécanisme volumétrique 3 reçoit un gaz de travail pré-comprimé qui est à une température intermédiaire, inférieure à la température du gaz de travail refoulé entrant dans l'échangeur 23, car le gaz d'admission est un mélange constitué au point de raccordement 41 entre le gaz ayant été réchauffé dans l'échangeur 23 et le gaz n'ayant pas été chauffé ou même ayant été refroidi, car il est passé par la branche non-chauffée 39.

De manière encore plus préférentielle, en position de charge intermédiaire, la vanne à trois voies 38 est réglable de façon à faire varier la proportion du débit de gaz de travail pré-comprimé qui passe par l'échangeur 23 et la proportion restante qui passe par la branche non-chauffée 39.

Avantageusement, le positionnement de la vanne à trois voies 38 est commandé à partir d'une unité de pilotage 43, qui peut concrètement être la carte électronique du moteur, en fonction de la cartographie du moteur, en particulier en fonction de son niveau de charge, et/ou en fonction de paramètres relevés par des capteurs, comme par exemple un ou plusieurs capteurs de température, comme le capteur 52 à l'entrée dans le mécanisme volumétrique 3, ou encore le capteur 42 à la sortie du mécanisme volumétrique. Par exemple, la commande pourrait être gérée de façon à toujours tendre à ramener la température de sortie du mécanisme volumétrique, relevée par le capteur 42, à une valeur de consigne choisie en fonction de la température maximale voulue dans le mécanisme volumétrique pour le point de fonctionnement courant en tenant compte. le cas échéant d'un nouveau point de fonctionnement cible et de lois de transition entre point courant et point cible.

Le trajet d'admission à deux branches de la Figure 16 procure un moteur relativement simple dont le rendement est optimisé pour tous les cas de charge dans les limites permises par une température maximale autorisée dans le mécanisme volumétrique, d'une manière générale ou pour chaque point de fonctionnement.

En variante, la vanne à trois voies pourrait être installée au point de raccordement 41, pour raccorder sélectivement l'orifice d'admission 4 du mécanisme volumétrique 3 avec l'une ou l'autre branche ou, dans le cas où un régime de charge intermédiaire est prévu, avec les deux branches à la fois, dans une proportion déterminée, de préférence variable. Dans ce cas, la sortie du compresseur 18 est en communication permanente avec le trajet 24 de l'échangeur et avec la branche non-chauffée 39.

En ne mettant l'invention pleinement en œuvre que pour les charges faibles ou modérées, on évite de devoir recourir à de fortes pressions de pré-compression, donc à des moyens de pré-compression puissants ainsi que, derrière les moyens de pré-compression, à un circuit d'admission (échangeur, tubulures, ressorts de soupape, etc.) capables de supporter de telles pressions.

De préférence, comme représenté, le gaz de travail refoulé traverse l'échangeur 23 même lorsque le gaz de travail pré-comprimé contourne partiellement ou totalement l'échangeur 23. Ceci simplifie le trajet de refoulement. En outre l'échangeur 23 est ainsi maintenu en température prêt à réchauffer le gaz de travail pré-comprimé dès que celui-ci recommencera à passer par l'échangeur 23 en raison par exemple d'un nouveau point de fonctionnement correspondant à un niveau de charge plus faible.

Selon le deuxième perfectionnement du mode de réalisation représenté à la figure 16, des moyens 43, 44, 46 sont prévus pour accélérer l'amorçage du cycle selon l'invention pendant une phase de démarrage à froid du moteur.

D'après les explications données en référence à la figure 7, le gaz de travail refoulé par le mécanisme volumétrique doit être suffisamment chaud pour suffisamment chauffer le gaz de travail pré-comprimé dans l'échangeur 23. Or le gaz de travail refoulé n'est suffisamment chaud que si le gaz de travail pré-comprimé a été réchauffé avant de franchir l'orifice d'admission 4, ce qui n'est pas immédiatement le cas lors du démarrage à froid du moteur. Il pourrait dans certains cas être nécessaire d'attendre un temps assez long ou de passer par une phase de fonctionnement sous forte charge pour produire « naturellement » du gaz refoulé chaud pour amorcer le réchauffage du gaz de travail pré-comprimé dans l'échangeur 23 selon l'invention.

Le deuxième perfectionnement du mode de réalisation de la figure 16 remédie à cet inconvénient. Un réchauffeur 44 est installé sur le conduit d'admission entre la sortie du trajet calo-récepteur 24 de l'échangeur 23 et l'orifice d'admission 4 du mécanisme volumétrique 3. Le réchauffeur 44 peut être électrique ou de préférence comporter un brûleur utilisant le même combustible, typiquement du gazole, que le moteur proprement dit. Une solution de réchauffeur à brûleur est illustrée schématiquement. Le brûleur 44 comporte une arrivée d'air 46 qui alimente un foyer 47 produisant des fumées 48 qui circulent en contact avec le conduit d'admission du gaz de travail, puis s'échappent après avoir traversé un échangeur de chaleur 49 où elles se refroidissent en réchauffant l'air admis dans l'arrivée d'air 46 avant que cet air atteigne le foyer 47. Le brûleur 44 est piloté par l'unité de pilotage 43 en fonction de la température à l'entrée et/ou à la sortie du mécanisme volumétrique fournie par le capteur 52 et/ou 42. L'unité 43 active le brûleur 44, et de préférence règle la puissance du brûleur 44, lorsque la température mesurée est trop basse, compte-tenu du point de fonctionnement cible du moteur, au regard notamment de son niveau de charge courant ou à atteindre.

Au démarrage du moteur à froid, non seulement le brûleur 44 permet d'atteindre rapidement les conditions du cycle thermodynamique selon l'invention, mais en outre il favorise la montée en température rapide du moteur et en particulier du mécanisme volumétrique 3.

En cours de fonctionnement moteur chaud, le brûleur 44 peut être mis temporairement en action par l'unité de pilotage 43 lorsque le moteur doit passer d'un point de fonctionnement à un autre pour lequel une température plus élevée est souhaitable pour le gaz entrant dans la chambre de travail de la machine volumétrique 3.

A chaque transition où le brûleur 44 est effectif, l'énergie qu'il consomme est beaucoup plus faible que le supplément d'énergie qui aurait été nécessaire pour la transition sans le brûleur 44. L'énergie consommée par le brûleur 44 a donc un « rendement » supérieur à 1.

De préférence, pour le pilotage du brûleur 44, l'unité de pilotage 43 tient compte des temps de réponse dans le moteur, en particulier le temps de réponse du turbocompresseur 19. Un capteur de pression 51 placé à la sortie du compresseur 18 permet d'optimiser le cycle à chaque instant en fonction de la pression réelle à la sortie du compresseur 18. Pendant les phases de transition, cette pression réelle est différente de la pression qui serait optimale compte-tenu de la charge instantanée du moteur.

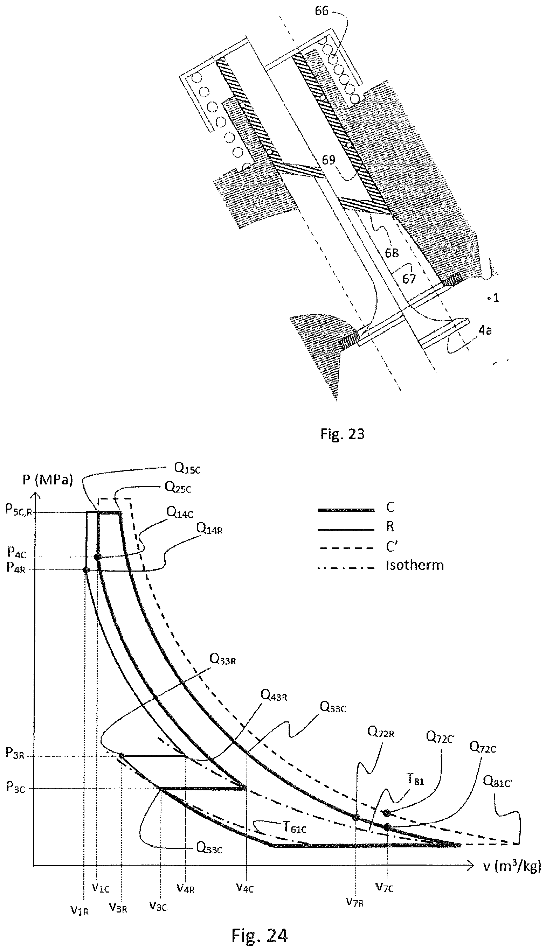

La prise en compte de la pression réelle, bien que décrite à ce stade de l'exposé, est avantageuse pour la régulation de tous les modes de réalisation décrits ici. Pour une nouvelle charge donnée du moteur, l'unité de pilotage 43 gère en temps réel l'évolution du cycle thermodynamique vers son état optimal. On décrit plus loin, en référence à la Figure 24, un exemple de gestion des transitions.

Lorsque les deux perfectionnements de la Figure 16 sont mis en œuvre ensemble, la montée en température du moteur, ainsi que les transitions qui nécessitent d'augmenter aussi vite que possible la température des gaz admis dans le mécanisme volumétrique 3, sont gérées prioritairement par une ouverture agrandie et au besoin totale de la vanne 38 en direction de l'échangeur 23.

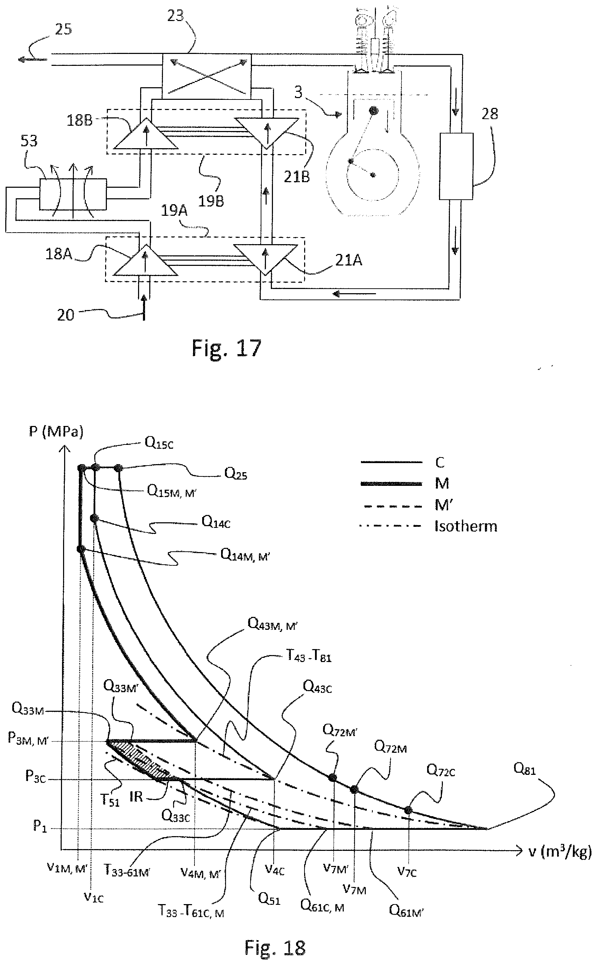

Le mode de réalisation de la Figure 17 ne sera décrit que pour ses différences avec celui de la figure 1.

Le turbocompresseur 19 est remplacé par deux turbocompresseurs 19A et 19B dont les compresseurs 18A et 18B respectifs sont reliés en série dans le trajet du gaz de travail, par l'intermédiaire d'un inter-refroidisseur 53. Le gaz d'admission comprimé de façon adiabatique et donc chauffé dans le compresseur 18A est ramené par l'inter-refroidisseur 53 à une température proche de la température ambiante avant d'entrer dans le compresseur 18B. Les deux turbines 21A et 21B sont montées directement en série dans le trajet du gaz de travail refoulé.

Dans le mode de réalisation représenté, la turbine haute pression 21A entraîne le compresseur basse pression 18A, et la turbine basse pression 21B entraîne le compresseur haute pression 18B. En variante, on pourrait également accoupler ensemble la turbine basse pression et le compresseur basse pression, et accoupler ensemble la turbine haute pression et le compresseur haute pression. On pourrait également avoir une unique turbine entraînant les deux compresseurs.

La compression dans le compresseur haute pression 18B est moins coûteuse en énergie sans que cela change la température de combustion dans le mécanisme volumétrique. Le rendement du moteur est amélioré par rapport à la réalisation de la figure 1, pour une température maximale $T_{25}$ donnée du cycle.

Cependant, dans une autre cartographie du moteur, ce mode de réalisation rejoint les considérations faites en référence à la Figure 9. Pour une charge donnée, même faible, correspondant par exemple à celle du cycle de référence A de la Figure 7, la pression à la sortie du deuxième compresseur 18B peut, si on le souhaite, être telle que le point $Q_{43}$ correspondant à cette pression et à la température $T_{81}$ en fin de détente soit sur la courbe de compression de ce cycle A. Autrement dit l'invention est alors mise en œuvre sans augmenter la température maximale $T_{25}$ par rapport à un cycle classique. Le rendement théorique d'un tel cycle selon l'invention est moins élevé que celui du cycle C mais le rendement réel est moins impacté par le besoin de refroidissement. En outre, la production de $NO_x$ est moindre. Dans le cadre d'une optimisation pratique on peut aussi choisir une autre température maxi, par exemple une température maxi intermédiaire entre celle des cycles A et C, une température maxi inférieure à celle du cycle A ou supérieure à celle du cycle C

Le graphique de la figure 18 montre la mise en œuvre de l'invention pour une plus grande charge du moteur selon l'invention qu'à la figure 7.

Le diagramme C en trait fin, et les points associés à ce diagramme, sont les mêmes qu'à la figure 7 pour une charge qui est d'environ 1/3 de la charge maxi.

Le diagramme M correspond à une charge intermédiaire dans laquelle la combustion échauffe le gaz de travail de 1400 K, donc deux fois plus que dans le diagramme C.

Le diagramme M apparaît en trait fort là où il diffère du diagramme C. Une variante M' apparaît en pointillés là où elle diffère du diagramme M.

On s'impose à des fins explicatives que le point de sollicitation maximale $Q_{25}$ soit le même pour les diagrammes C, M et M'. La courbe de détente adiabatique est donc la même pour les trois diagrammes. Elle se termine au même point $Q_{81}$ et sur la même isotherme $T_{81}$ car dans les trois cas on permet au gaz de travail de revenir à la pression de référence $p_1$ typiquement égale à la pression atmosphérique. La température $T_{43}$ à la sortie chaude de l'échangeur 23 est donc aussi la même dans les trois diagrammes (isotherme $T_{43}$-$T_{81}$).

Le point $Q_{14M,M'}$ de fin de compression supplémentaire dans les diagrammes M et M' se situe à un volume massique et une pression plus faibles que le point de fin de compression $Q_{14C}$ du diagramme C.

La courbe de compression adiabatique dans le mécanisme volumétrique, qui aboutit au point $Q_{14M,M'}$, passe très en-dessous de celle du diagramme C. En conséquence, ladite courbe de compression coupe l'isotherme $T_{43}$-$T_{81}$ en un point $Q_{43\,M,M'}$ correspondant à une pression $p_{3M,M'}$ plus élevée que la pression $p_{3C}$ au point $Q_{43C}$ du diagramme C.

Ainsi, dans l'exemple où le point de sollicitation maximale $Q_{25}$ est souhaité sensiblement constant, une augmentation de la charge conduit à élever la pression $p_3$ en fin de pré-compression, autrement dit dans le trajet calorécepteur 24 de l'échangeur 23.

Pour cela, les diagrammes M et M' se distinguent du diagramme C par une augmentation du rapport de pression dans le système de pré-compression du moteur. Dans le cas où la pré-compression est au moins en partie obtenue par turbocompresseur, cette élévation de la pression de pré-compression en fonction de la charge est au moins en partie obtenue automatiquement. On constate en effet que le volume massique de combustion isochore $v_1$ est plus faible lorsque la charge augmente ($v_{1M,M'}$<$v_{1C}$). Le rapport volumétrique du mécanisme volumétrique étant supposé constant, le volume massique au refoulement du mécanisme volumétrique est également plus faible ($v_{7M}$<$v_{7C}$, $v_{7M'}$<$v_{7C}$), donc situé plus haut en pression sur la courbe de détente adiabatique qui est commune aux deux cycles. Le turbocompresseur dispose donc de plus d'énergie pour pré-comprimer le gaz de travail dans les cycle M et M' que dans le cycle C.

Cependant, en fonction des caractéristiques d'un turbocompresseur réel qui peut avoir une plage utile limitée en termes de puissances, il peut être indiqué pour les cycles M et M' de faire intervenir un deuxième compresseur (par exemple d'un deuxième turbocompresseur) en série avec le compresseur 18 du turbocompresseur 19 de la Figure 1.

Dans le diagramme M', que l'on décrit d'abord, la pré-compression se termine en un point $Q_{33M'}$ qui est sur l'isotherme $T_{33}$-$T_{61M'}$ correspondant à une température plus élevée que celle de l'isotherme $T_{33}$-$T_{61C}$ du diagramme C. Ceci signifie que le gaz de travail refoulé sort de l'échangeur 23 à une température $T_{61M'}$ relativement élevée (bien que beaucoup moins élevée qu'à l'échappement d'un moteur classique fonctionnant à une charge comparable), ce qui dénote une certaine dégradation du rendement théorique du moteur.

Le cycle M remédie à cela : comme déjà décrit en référence à la Figure 17, un inter-refroidissement IR (réalisé par l'inter-refroidisseur 53 à la Figure 17) placé entre les deux compresseurs ramène le gaz de travail sur l'isotherme $T_{51}$ entre la sortie du premier étage de pré-compression et l'entrée dans le deuxième étage de pré-compression. En supposant que le deuxième étage de pré-compression a sensiblement le même rapport de compression que l'unique étage de pré-compression du diagramme C, le point $Q_{33M}$ de fin de pré-compression du diagramme M se situe sur la même isotherme $T_{33}$-$T_{61C,M}$ que le point $Q_{33C}$ de fin de pré-compression du diagramme C. Le gaz de travail refoulés sort de l'échangeur 23 à la même température que selon le diagramme C, ce qui témoigne d'un rendement amélioré. L'inter-refroidissement IR évacue certes des calories supplémentaires, mais à partir de la basse température $T_{33C,M}$.

Au diagramme de la Figure 18, le gain de rendement du cycle M par rapport au cycle M' est visible par l'aire supplémentaire (hachurée) du cycle M qui déborde du cycle M'. Concrètement, pour une même énergie de combustion, le supplément d'énergie mécanique est recueilli sur l'arbre moteur en prolongeant la détente dans le mécanisme volumétrique jusqu'au point $Q_{72M}$ dans le diagramme M au lieu du point $Q_{72M'}$ dans le diagramme M', puisque le cycle M requiert moins d'énergie que le cycle M' pour les étages de pré-compression.

Les diagrammes A et B (Figure 7) d'un diesel classique à des niveaux de charge très différents ont des rendements théoriques quasi-identiques car la température moyenne des calories rendues à la source froide est dans un rapport quasi-immuable avec la température moyenne des calories fournies à la source chaude. Au contraire, l'invention permet une optimisation séparée sur les sources chaudes et froides. L'étude comparative des diagrammes M et M' montre que le rendement peut être optimisé à la source froide pour exactement le même processus à la source chaude. C'est un des avantages de l'invention. De même, si l'on admet des températures plus élevées à la source chaude, on peut optimiser le rendement à la source chaude par une élévation de la température moyenne à la source chaude sans augmenter la température moyenne à la source froide. L'invention réalise un découplage de température entre la source chaude et la source froide. C'est ce que l'on appelle plus haut le « télescope thermique », qui permet d'éloigner autant qu'on le veut, en termes de température, les parties chaude et froide du cycle l'une de l'autre.

Au total, le rendement théorique du diagramme M est légèrement inférieur à celui du diagramme C car le chauffage par combustion commence au point $Q_{14M}$ à une température plus basse. On pourrait y remédier en acceptant un point de sollicitation maximale $Q_{25}$ plus élevé en température et/ou en pression.

En pratique, des optimisations sont à faire et peuvent conduire à un nivellement des rendements théoriques des cycles effectivement mis en œuvre, au profit de rendements réels plus avantageux. En ce sens, le point $Q_{25}$ de sollicitation maximale pourra être abaissé pour les très faibles charges (sans nécessairement revenir aux valeurs très faibles des moteurs classiques) pour réduire le besoin de refroidissement du moteur, qui pèse tout particulièrement sur le rendement réel sous faible charge, et réduire la production de NOx lors du fonctionnement sous faible charge.

En choisissant un point de sollicitation maximale $Q_{25}$ qui augmente avec la charge, on augmente aussi, en général, l'énergie disponible dans le gaz refoulé par le mécanisme volumétrique, ce qui augmente la puissance disponible pour la pré-compression par turbocompresseur, comme cela est, selon l'invention, souhaité pour augmenter le rendement lorsque la charge est plus élevée.

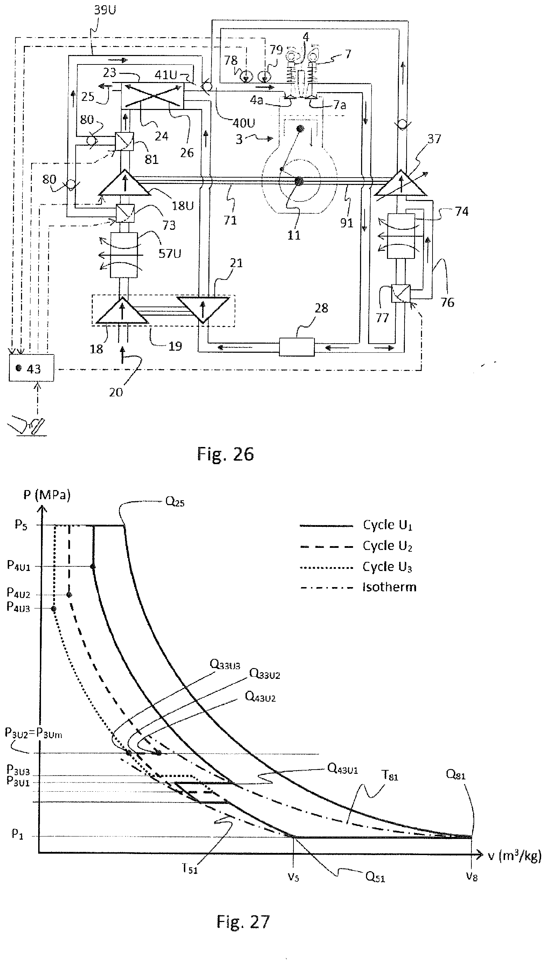

Concrètement, pour une machine devant fonctionner sous des charges variables, on choisira pour le mécanisme volumétrique un rapport volumétrique de compromis relativement bas laissant subsister un léger surplus d'énergie dans le gaz de travail refoulé, et l'ajustement peut se faire par un moyen tel qu'un by-pass (non représenté) permettant à une partie dosée des gaz brûlés de contourner la turbine du ou des, ou de l'un des turbocompresseurs. Même si cette disposition peut être utile, elle n'est pas indispensable et son effet est marginal, contrairement à un moteur suralimenté classique qui génère par principe dans le gaz de travail refoulé un fort excédent d'énergie qu'on est contraint de perdre à l'échappement par un fort pourcentage de by-pass au niveau du turbocompresseur. Suivant l'invention, on peut aussi faire varier le point d'ouverture de la soupape de refoulement 7a (Figure 1) de façon à retarder l'ouverture pour que le refoulement commence effectivement après le PMB lorsqu'un rapport volumétrique effectif plus faible est souhaité dans le mécanisme volumétrique. Dans ce cas, le rapport volumétrique du mécanisme volumétrique 3 est choisi proche de la plus grande valeur parmi les valeurs optimales correspondant aux différents points de fonctionnement envisagés. On peut aussi, comme décrit par exemple en référence aux Figures 26 et 27, réaliser au moins une partie de la pré-compression par un compresseur « autonome » qui permet d'ajuster ou de réguler finement la pression de fin de pré-compression indépendamment de l'énergie disponible au refoulement du mécanisme volumétrique.

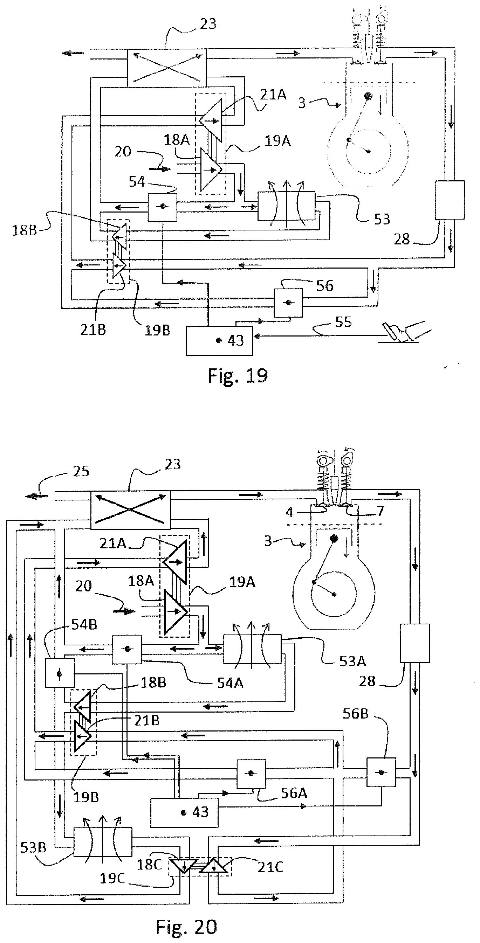

Le mode de réalisation de la Figure 19 ne sera décrit que pour ses différences avec celui de la Figure 17, en utilisant autant que possible les mêmes repères qu'à la Figure 17.

Dans ce mode de réalisation, capable notamment de mettre en œuvre le diagramme M de la Figure 18, le turbocompresseur 19 de la Figure 1 est remplacé par deux turbocompresseurs 19A et 19B. Dans la réalisation représentée, le turbocompresseur 19A est un turbocompresseur basse pression (« bp ») et le turbocompresseur 19B est un turbocompresseur haute pression (« hp »).

Les deux compresseurs 18A et 18B sont montés en série, dans cet ordre, sur le trajet du gaz d'admission, et les deux turbines 21B et 21A sont montées en série dans cet ordre, sur le trajet du gaz de travail refoulé. Entre les deux compresseurs 18A et 18B est interposé l'inter-refroidisseur 53 permettant de réaliser l'inter-refroidissement IR de la figure 18. (Pour la mise en œuvre du diagramme M' ne comportant pas l'inter-refroidissement IR, l'inter-refroidisseur 53 serait remplacé par un simple conduit).

Une vanne 54 permet de faire passer le gaz d'admission sortant du compresseur bp 18A soit dans l'inter-refroidisseur 53, le compresseur hp 18B puis l'échangeur 23 lorsque la charge est intermédiaire au sens du graphique de la figure 18, soit directement de la sortie du compresseur bp 18A à l'échangeur 23 lorsque la charge est faible.

Une vanne 56 permet soit de faire passer le gaz de travail refoulé provenant du mécanisme volumétrique 3 par la turbine hp 21B puis par la turbine bp 21A puis l'échangeur 23 lorsque la charge est intermédiaire, soit de le faire aller à la turbine bp 21A puis à l'échangeur 23 en ayant contourné la turbine hp 21B lorsque la charge est faible.

Les vannes 54 et 56 sont commandées par l'unité de pilotage 43 qui reçoit sur une entrée 55 un signal indicatif de la charge du moteur, ou plus généralement élaboré en fonction de la cartographie du moteur.

En plus d'activer ou de désactiver de façon binaire la turbine hp 21B, la vanne 56 peut être utilisée dans des positions intermédiaires pour permettre à un débit partiel de gaz de travail refoulé de contourner la turbine hp 21B lorsqu'il est souhaitable, comme exposé en référence à la figure 18, de réguler l'énergie globalement disponible pour entraîner les compresseurs 18A, 18B. Dans ce cas, la vanne 54 est fermée pour que le gaz d'admission passe en totalité par le compresseur hp 18B. Lorsque la vanne 56 est dans une position intermédiaire, les débits respectifs dans la turbine hp 21B et à travers la vanne 56 se répartissent de façon que la perte de charge soit la même dans les deux trajets. Par conséquent le degré d'ouverture de la vanne 56 définit la puissance de la turbine hp 21B pour un débit donné, et définit donc l'énergie dont dispose le compresseur 18B pour compléter la pré-compression du gaz de travail.

L'exemple de la Figure 20 ne sera décrit que pour ses différences avec celui de la Figure 19. Le mode de réalisation de la Figure 20 est capable de produire une large gamme de pressions de pré-compression, notamment des valeurs « basses » pour les faibles niveaux de charge, des valeurs « hautes » pour les niveaux de charge moyens et des valeurs « très hautes » pour les niveaux de charge élevés.

Il y a maintenant en plus des turbocompresseurs bp et hp 19A, 19B, un turbocompresseur très haute pression (« thp ») 19C. Les trois compresseurs, bp 18A, hp 18B, et thp 18C, sont montés en série, dans cet ordre, sur le trajet des gaz d'admission en amont du trajet calo-récepteur de l'échangeur 23. De préférence un inter-refroidisseur 53A est interposé entre les compresseurs 18A et 18B et/ou un inter-refroidisseur 53B est interposé entre les compresseurs 18B et 18C. Les trois turbines, thp 21C, hp 21B et bp 21A, sont montées en série dans cet ordre sur le trajet du gaz de travail refoulé par le mécanisme volumétrique, en amont du trajet calo-cédant de l'échangeur 23.

Ce montage est actif pour un fonctionnement sous forte ou pleine charge, par exemple selon le cycle L' de la Figure 15.

Pour une charge intermédiaire, correspondant par exemple à celle du cycle M de la Figure 18, seuls les turbocompresseurs bp et hp 19A et 19B sont actifs. Une vanne 54B est alors ouverte pour permettre au flux de gaz d'admission issu du compresseur 18B d'aller à l'échangeur 23 en contournant l'inter-refroidisseur 53B et le compresseur thp 18C. Une vanne 56B est alors ouverte pour permettre au flux de gaz de travail refoulé par le mécanisme volumétrique 3 d'aller à la turbine 21B puis à la turbine 21A et à l'échangeur 23 en ayant contourné la turbine thp 21C.

Pour une faible charge, correspondant par exemple à celle du cycle C des Figures 7 et 18, non seulement les vannes 54B et 56B sont ouvertes, mais aussi les vannes 54A et 56A qui permettent au gaz d'admission de contourner l'inter-refroidisseur 53A, le compresseur hp 18B, l'inter-refroidisseur 53B et le compresseur thp 18C, et au gaz refoulé de contourner les turbines thp 21C et hp 21B.

Les vannes 54A ,54B, 56A ,56B sont commandées par l'unité de pilotage 43 en fonction notamment de la charge du moteur, ou plus généralement de la cartographie du moteur. Lorsque les vannes 54A et 56A sont fermées pour activer le turbocompresseur hp 19B, et que la vanne 54B est fermée pour faire passer le gaz de travail dans le compresseur thp 18C, la vanne 56B peut néanmoins présenter une faible ouverture réglable par l'unité de pilotage 43 pour réguler l'énergie disponible pour l'entraînement du compresseur thp 18C et réguler ainsi la pression de pré-compression. Lorsque le turbocompresseur thp 19C est désactivé (vannes 54B et 56B ouvertes) et que la vanne 54A est fermée pour faire passer le gaz de travail par le compresseur hp 18B, la vanne 56A peut néanmoins présenter une faible ouverture réglable par l'unité de pilotage 43 pour réguler l'énergie disponible pour l'entraînement du compresseur hp 18B, et réguler ainsi la pression de pré-compression p3.

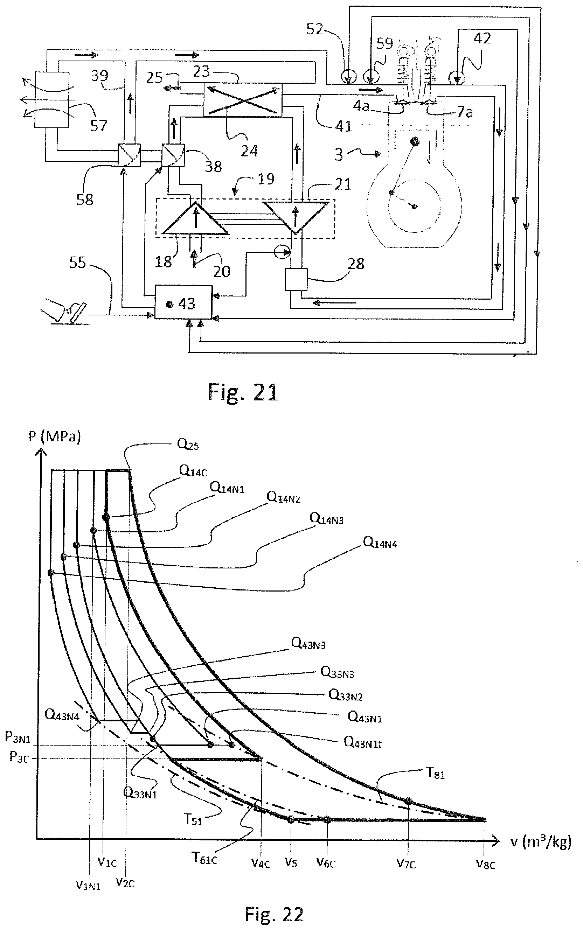

Le mode de réalisation de la Figure 21, qui ne sera décrit que pour ses différences avec celui de la Figure 16, est un exemple de moteur selon l'invention qui est à la fois relativement simple, offre à la fois les excellentes performances de rendement d'un cycle tel que C de la Figure 7 sous faible charge grâce à l'échangeur 23, et la puissance massique d'un moteur classique avec turbocompresseur et inter-refroidisseur à pleine charge ou sous forte charge avec un meilleur rendement grâce à un rapport volumétrique plus élevé. En outre, le moteur de la Figure 21 offre un rendement amélioré à charge moyenne en ne faisant alors passer le gaz d'admission ni par l'échangeur 23 ni par l'inter-refroidisseur 57. Ce mode de réalisation va être décrit en s'appuyant sur l'exemple de diagramme illustré à la Figure 22, que le mode de réalisation de la Figure 21 permet de mettre en œuvre. Il doit cependant être entendu que le diagramme de la Figure 22 n'est pas intrinsèquement lié au mode de réalisation de la Figure 21.

Dans l'exemple de la Figure 21, le trajet du gaz pré-comprimé comporte des moyens d'ajustement thermique comprenant trois branches en parallèle, à savoir i) une branche de chauffage passant par le trajet calo-récepteur de l'échangeur 23, ii) une branche non-chauffée 39 comme à la Figure 16, et iii) une troisième branche refroidie passant par un inter-refroidisseur 57. Typiquement la branche 39 est une branche sensiblement adiabatique, c'est-à-dire ni chauffée ni activement refroidie, ou aussi peu refroidie que possible, par exemple calorifugée ou non. La vanne à trois voies 38 envoie le gaz de travail pré-comprimé soit dans la branche de chauffage soit dans l'une ou l'autre des branches adiabatique et refroidie respectivement.

Dans une réalisation, la branche sensiblement adiabatique 39 comporte une deuxième vanne à trois voies 58. Lorsque la vanne 38 ferme l'entrée dans l'échangeur 23, la vanne 58 permet de faire passer le gaz pré-comprimé dans l'inter-refroidisseur 57 ou au contraire de contourner à la fois l'inter-refroidisseur 57 et l'échangeur 23 pour aller directement au mécanisme volumétrique 3 par la branche sensiblement adiabatique 39.

L'unité de pilotage 43 commande les deux vannes 38 et 58 en tout ou rien ou de préférence de façon progressive.

Le procédé de régulation est de préférence le suivant :

- Lorsque le niveau de charge du moteur se situe dans une tranche inférieure, tout le débit de gaz d'admission passe par l'échangeur 23, le cycle étant typiquement le cycle C décrit en référence à la figure 7 et reproduit en trait fort à la figure 22, ou encore, si on le souhaite, un cycle à température maximale $T_{25}$ moins élevée obtenue en augmentant le rapport de pré-compression et en diminuant le rapport de compression supplémentaire effective dans le mécanisme volumétrique 3 ;

- Lorsque le niveau de charge du moteur est dans une tranche intermédiaire basse, située entre la tranche inférieure et une tranche moyenne, on souhaite comme déjà exposé à propos d'exemples précédents que la courbe de compression supplémentaire dans la chambre de travail aboutisse à un point de fin de compression tel que $Q_{14N1}$ correspondant à un volume massique $v_{1N1}$ plus faible que dans le cycle C pour éviter que le point de sollicitation maximale $Q_{25}$ (point de fin de combustion) corresponde à des valeurs de température et de pression excessives. Dans l'exemple de la figure 22, le point de sollicitation maximale $Q_{25}$ est le même pour tous les niveaux de charge. L'unité de pilotage 43 commande le passage d'une partie dosée du débit de gaz d'admission par la branche sensiblement adiabatique 39. L'autre partie du débit de gaz d'admission passe par l'échangeur 23. L'accès à l'inter-refroidisseur 57 reste fermé par la vanne 58. Le gaz de travail suit le cycle N1 qui est représenté en trait fin uniquement là où il diffère du cycle C. La pré-compression est un peu plus poussée que dans le cycle C jusqu'à un point $Q_{33N1}$ pour lequel $V_{3N1}<V_{3C}$ et $p_{3N1}>p_{3C}$. Ceci est réalisable automatiquement grâce au supplément d'énergie du gaz de travail arrivant à la turbine 21 comme exposé en référence à la Figure 18. Si l'on faisait passer tout le gaz pré-comprimé dans l'échangeur 23, le cycle passerait par le point $C_{43N1t}$ situé à droite de la courbe de compression adiabatique voulue pour aboutir au point $Q_{14N1}$ de fin de compression supplémentaire voulu. Grâce au mélange dosé de gaz réchauffé dans l'échangeur 23 et de gaz non réchauffé dans l'échangeur 23, le gaz d'admission arrivant au point de raccordement 41 se trouve au point $Q_{43N1}$ sur la courbe de compression supplémentaire voulue. Le point $Q_{43N1}$ correspond à une température intermédiaire entre celle $T_{81}$ de sortie de l'échangeur 23 et celle $T_{33N1}$ de fin de pré-compression dans le compresseur 18. Le rendement théorique du cycle N1 est un peu moins bon que si on avait réalisé encore un peu plus de pré-compression jusqu'à un niveau tel que $p_{3M,M'}$ à la figure 18 où la courbe de compression adiabatique voulue croise l'isotherme $T_{81}$. Mais la perte de rendement théorique est acceptable au regard des économies réalisées par ailleurs, en termes de matériel (moindre pression dans le trajet d'admission du moteur) et des moindres pertes réelles dans le turbocompresseur.

- La tranche moyenne des niveaux de charge est située entre la tranche intermédiaire basse et une tranche intermédiaire haute. La tranche moyenne est en général très étroite et possiblement limitée à un seul niveau de charge particulier, correspondant au niveau supérieur de la tranche intermédiaire basse et au niveau inférieur de la tranche intermédiaire haute qui sera décrite plus loin. Dans la tranche moyenne le point de fin de compression adiabatique se trouve en $Q_{14N2}$ sur la même courbe de compression supplémentaire que la pré-compression. Dans ce cas, la vanne 38 ferme l'accès à l'échangeur 23 pour les gaz d'admission et ouvre pleinement l'accès à la branche sensiblement adiabatique 39, la vanne 58 restant dans la position ouvrant pleinement l'accès direct à la branche sensiblement adiabatique 39 et fermant l'accès à l'inter-refroidisseur 57. Le point $Q_{33N2}$ de fin de pré-compression constitue aussi le point de début de compression supplémentaire dans la chambre de travail. Dans la tranche moyenne le cycle est semblable à celui d'un moteur turbocompressé non-inter-refroidi classique.

- Dans la tranche intermédiaire haute, le cycle N3 est mis en œuvre. La vanne 38 est dans la position dirigeant tout le flux du gaz d'admission vers la vanne 58. Cette dernière s'ouvre de manière à répartir le flux de gaz de travail entre une première fraction qui passe dans la branche sensiblement adiabatique 39 et une deuxième fraction passant par l'inter-refroidisseur 57 pour être ramenée sensiblement à la température de référence $T_{51}$. Le gaz arrivant au point de raccordement 41 et de là à la soupape d'admission 4a est un mélange des deux fractions, représenté par le point $Q_{43N3}$, à une température intermédiaire entre la température $T_{33N3}$ au point $Q_{43N3}$ de fin de pré-compression et la température de référence $T_{51}$.

- Le niveau de charge peut encore être situé dans une tranche supérieure allant du sommet de la tranche intermédiaire haute jusqu'à la pleine charge. La tranche supérieure peut être très étroite et possiblement limitée à un seul niveau de charge, à savoir le niveau de pleine charge. Dans la tranche supérieure, le cycle N4 est mis en œuvre. Les vannes 38 et 58 sont positionnées de façon que tout le flux de gaz pré-comprimé passe par l'inter-refroidisseur 57. Le point $Q_{43N4}$ de début de compression supplémentaire est ainsi situé sur l'isotherme $T_{51}$ de la température de référence. Le cycle théorique est semblable à celui d'un moteur turbocompressé inter-refroidi classique.

Le mode de réalisation de la Figure 21 permet donc de réaliser un moteur ayant un rendement très amélioré à charge partielle et des valeurs maximales de couple et de puissance proches de celles d'un moteur classique de cylindrée comparable sous forte charge.

Quel que soit le cycle C, N1, N2, N3, N4 mis en œuvre, il est préféré que les gaz brûlés traversent l'échangeur 23 de façon que le côté chaud de l'échangeur 23 soit toujours à sensiblement la température $T_{81}$ de fin de post-détente. Cette température varie peu ou même pas du tout lorsque, comme représenté Figure 22, la courbe de détente adiabatique est la même pour tous les points de fonctionnement. Ceci simplifie la réalisation et évite les chocs thermiques sur le côté chaud de l'échangeur et permet au moteur de passer rapidement d'un point de fonctionnement à un autre correspondant à un niveau de charge très différent, sans problème de délai de transition thermique à la sortie chaude de l'échangeur 23.

La température du côté froid de l'échangeur varie entre $T_{33C}$ quand le cycle C est mis en œuvre et $T_{81}$ quand plus aucun gaz d'admission ne traverse l'échangeur quand les cycles N3 et N4 sont mis en œuvre (indications valables lorsque le point de fonctionnement du moteur est stabilisé).

Le moteur qui vient d'être décrit est particulièrement simple à réguler, que ce soit à charge constante ou à charge variable. On passe d'un niveau de charge à un autre en positionnant convenablement les vannes 38 et 58, en réglant la quantité de carburant injectée, et en réglant la masse de gaz admise à chaque cycle dans la chambre de travail, par exemple en réglant le point de fermeture de la soupape d'admission (ligne 27 aux Figures 2 à 6). La ligne 27 doit être positionnée de façon que le volume de la chambre de travail 1 lorsque le piston est dans la position correspondant à la ligne 27 soit k fois plus grand que le volume minimal de la chambre, avec k = v4/v1, par exemple $k_{N1} = v_{4N1}/v_{1N1}$ pour le cycle N1.

C'est à titre purement illustratif et explicatif qu'on a choisi que le point $Q_{25}$ soit le même pour tous les cycles de la Figure 22. Ce point peut varier. S'il reste toujours sur la même courbe de détente adiabatique, le point $Q_{81}$ de fin de post-détente reste invariable. Si le point $Q_{25}$ varie de façon que la courbe de détente varie, la température $T_{81}$ varie. Ceci fait varier la température du côté chaud de l'échangeur, qui est toujours égale à $T_{81}$. On peut alors en tenir compte dans la régulation du moteur, et notamment dans le réglage des vannes 38 et 58 par l'unité de pilotage 43, de façon que la température $T_{43}$ du gaz à l'admission du mécanisme volumétrique soit toujours optimale.

En pratique, on le sait, un point de sollicitation maximale clairement identifiable tel que $Q_{25}$ n'existe pas, le cycle réel étant arrondi notamment en son sommet, et le mode de gestion précis du moteur par l'unité de pilotage 43 (« cartographie du moteur ») est le résultat d'une mise au point fine de chaque modèle de moteur en fonction de nombreux paramètres (niveau de charge, vitesse de rotation, température ambiante, pression ambiante, température du liquide de refroidissement, choix d'un mode comportemental du moteur par l'utilisateur, etc.). Les règles données ci-dessus ne sont donc que des indications à partir desquelles l'homme de métier comprendra le moteur selon l'invention et pourra réaliser la mise au point concrète de chaque modèle particulier en utilisant son savoir-faire et les outils de mise au point existants.

Lorsque la charge diminue, les opérations qui viennent d'être décrites sont effectuées en sens inverse, en fonction du niveau de charge reçu à l'entrée 55 de l'unité de pilotage 43 et/ou de la chute de la température détectée par le capteur 42 en-dessous d'un seuil bas. Un capteur de température 52 et un capteur de pression 59 placés à l'entrée du mécanisme volumétrique 3 permettent de corriger le réglage des vannes 38 et 58 en vue de donner à la température du gaz entrant dans le mécanisme volumétrique 3 une valeur aussi proche que possible d'une consigne définie compte-tenu des paramètres de fonctionnement du moteur, notamment la charge comme il a été exposé plus haut. En fonction de la température et de la pression réelle à l'entrée du mécanisme volumétrique, et de la consigne de charge appliquée à l'entrée 55, l'unité de pilotage 43 corrige la position du point 27 (figures 2 à 6) définissant le volume réel de gaz admis dans le mécanisme volumétrique 3 à chaque cycle, en vue de faire autant que possible coïncider le cycle réel avec le point de fonctionnement cible du moteur. Les capteurs et le réglage du point 27 permettent également de gérer les transitions entre points de fonctionnement, notamment lorsque la charge du moteur varie.

Le brûleur 44 de la Figure 16 pourrait bien sûr être inséré dans le mode de réalisation de la Figure 21 à la sortie du trajet 24 de l'échangeur 23.

Le compresseur 18 peut être remplacé par deux compresseurs en cascade, par exemple les compresseurs de deux turbocompresseurs 19A et 19B comme à la Figure 17, ou un compresseur 18 suivi d'un compresseur autonome 18M du type de celui utilisé dans le mode de réalisation des Figures 26 et 27 décrit plus loin.

On va maintenant décrire en référence à la Figure 23 un autre perfectionnement du moteur selon l'invention.

La pression peut être relativement élevée sur la face arrière de la soupape d'admission 4a. Cette pression pousse la soupape 4a à l'ouverture. À certaines phases de fonctionnement du moteur où la soupape 4a doit rester fermée, alors que la pression dans la chambre de travail 1 est faible, notamment pendant le refoulement, il peut être difficile au ressort de soupape 66 de maintenir la soupape 4a fermée. Pour remédier à ce problème, on a formé sur la tige 67 de la soupape 4a un épaulement 68 qui augmente le diamètre de la tige 67 dans la zone où la tige 67 coulisse de façon étanche dans son guide 69, par rapport au diamètre de la tige 67 dans la zone où la tige traverse le trajet des gaz d'admission.

La pression dans la tubulure d'admission se traduit par une poussée sur l'épaulement 68 dans le sens de la fermeture, donc en sens contraire de la poussée nuisible tendant à ouvrir la soupape 4a.

La Figure 23 montre un exemple concret de la réalisation d'une telle soupape. L'épaulement 68 est profilé pour coïncider avec le profil de la tubulure lorsque la soupape est ouverte (partie droite de la représentation de la soupape). La partie épaissie de la tige est évidée intérieurement ou tubulaire, pour alléger la soupape malgré l'épaisseur de sa tige 67.

On va maintenant exposer en référence à la Figure 24 un mode de pilotage des transitions dans un moteur selon l'invention, par exemple le moteur de la Figure 1, en prenant comme exemple une situation de départ qui est celle du diagramme C correspondant typiquement à une charge d'environ un tiers de la charge maxi.

On suppose que le couple demandé au moteur augmente, autrement dit que la charge du moteur augmente.

Suivant l'invention, un cycle optimal pour le nouveau point de fonctionnement est celui illustré par le diagramme R de la Figure 24 en supposant que l'on souhaite conserver inchangé le point $Q_{25C}$ de sollicitation maximale du mécanisme volumétrique. Le cycle R est identique au cycle C sauf là où il est représenté en trait fin. La courbe de compression supplémentaire $Q_{43R}$ à $Q_{14R}$ du cycle R passe en-dessous de la courbe de compression supplémentaire $Q_{43C}$ à $Q_{14C}$ du cycle C, et coupe donc l'isotherme $T_{81}$ (température du gaz pré-comprimé en sortie d'échangeur 23) en un point $Q_{43R}$ où la pression $p_{3R}$ est plus élevée que dans le diagramme C. L'obtention du cycle R nécessite donc que le turbocompresseur 19 reçoive plus d'énergie sur sa turbine 21. C'est pourquoi le point $Q_{72R}$ où le gaz brûlé sort du mécanisme volumétrique pour entrer dans la turbine 21 est situé plus haut sur la courbe de détente $Q_{25C}$-$Q_{81C}$, qui est inchangée.

Par ailleurs, le point $Q_{43R}$ de début de compression supplémentaire correspond à un volume massique $v_{4R}$

plus faible que celui $v_{4C}$ du cycle C.

Le volume massique $v_{1R}$ de fin de compression supplémentaire est plus faible que le volume massique $v_{1C}$ correspondant du cycle C. Les rapports volumétriques d'expansion des deux cycles dans le mécanisme volumétrique, $v_{7R} / v_{1R}$ et $v_{7C} / v_{1C}$, sont peu différents et peuvent en pratique être identiques, et notamment fixés par la géométrie du mécanisme volumétrique.

On passe du cycle C au cycle R idéalement au moyen de deux réglages :

- réglage de la quantité de carburant

- réglage de la quantité de gaz de travail introduite dans la chambre de travail, par exemple par réglage du point 27 (Figures 2 à 6) de fermeture de la soupape d'admission 4a. Concrètement le réglage de la quantité de gaz de travail peut commodément être compris comme un réglage du volume de gaz de travail introduit dans le mécanisme volumétrique à chaque cycle, ce volume étant mesuré dans les conditions régnant derrière la soupape d'admission 4a juste avant son ouverture.

Pour opérer la transition du cycle C au cycle R on pourra commencer par augmenter le dosage de carburant pour que le cycle C devienne le cycle C' (en pointillés) donnant plus d'énergie pour la post-détente dans la turbine du turbocompresseur. Il en résulte une augmentation de la pression $p_3$ qui se rapproche ainsi de la pression $p_{3R}$. On corrige alors en conséquence le réglage de la quantité de gaz de travail introduite, dans le sens décalant la courbe de compression supplémentaire vers la gauche de la Figure 24. Puis on recommence ce processus (augmentation de la quantité de carburant, réglage de la quantité de gaz) autant de fois que nécessaire jusqu'à ce que la pression $p_{3R}$ soit atteinte en fin de pré-compression.

En pratique on lisse ce processus de la façon suivante : on augmente progressivement la quantité de carburant avec une certaine vitesse de variation de débit choisie en fonction de la rapidité voulue pour la transition entre les cycles C et R, et on fait varier à une vitesse correspondante la quantité de gaz introduite, de façon que pour chaque cycle de transition le point de début de compression supplémentaire soit correctement placé sur la courbe de compression adiabatique aboutissant au point $Q_{14}$, (entre $Q_{14C}$ et $Q_{14R}$) correct compte-tenu de la quantité de carburant apportée.

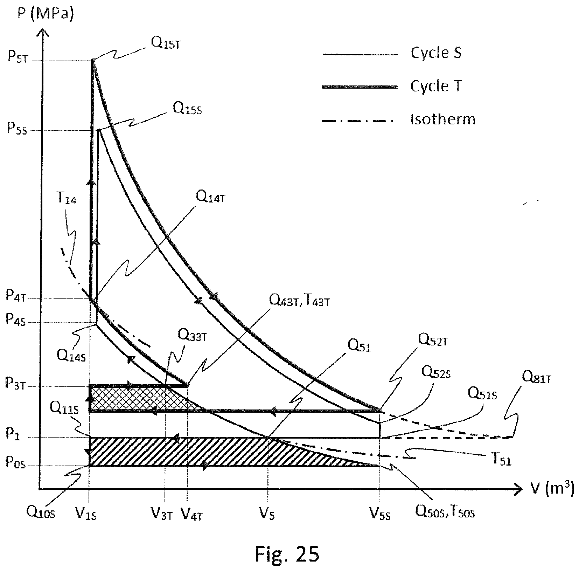

On va maintenant décrire en référence à la Figure 25 des exemples d'application de l'invention à un moteur à allumage commandé, par exemple un moteur fonctionnant à l'essence.

Contrairement à un moteur à allumage spontané, ou moteur diésel, il ne suffit pas de régler la quantité de carburant pour faire varier la charge du moteur. Il est nécessaire de faire également varier la quantité d'air de façon à conserver la stœchiométrie au moins approximative du mélange air-carburant pour que l'inflammation (dite « déflagrante » dans ce cas) puisse se produire. Par ailleurs il est impératif qu'au moment de l'allumage la température du mélange air-carburant n'ait pas dépassé la température de l'auto-inflammation. Il n'est donc pas possible d'échauffer à volonté l'air ou autre mélange comburant (tel que air + gaz d'EGR) en cours de compression et notamment entre pré-compression et compression supplémentaire.

Le réglage de la charge du moteur à allumage commandé classique s'opère par un réglage conjoint de la pression dans la chambre de travail au PMB précédant la compression, de façon à régler la masse de gaz comburant, et de la masse de carburant ajoutée au gaz comburant. L'ajout de carburant au comburant s'opère dans l'admission du moteur pour les moteurs à carburateur ou à injection indirecte, et dans la chambre de travail en cours de compression pour les moteurs à injection directe.

Dans le diagramme de la Figure 25, la pression est cette fois représentée en fonction du volume réel V de la chambre de travail, et non plus en fonction du volume massique du gaz. Le cycle S illustre un exemple de fonctionnement à charge partielle d'un moteur à allumage commandé classique. La compression dans la chambre de travail commence en un point $Q_{50S}$ où la pression $P_{0S}$ est inférieure à la pression de référence $p_1$ (pression atmosphérique) et la température $T_{50S}$ est inférieure à la température atmosphérique $T_{51}$. La compression se termine en un point $Q_{14S}$, où la température $T_{14S}$ est significativement inférieure à la température $T_{14}$ choisie comme limite pour éviter l'auto-inflammation (sans quoi cette température serait dépassée en fin de compression lorsque le moteur fonctionne sous plus forte charge).

La combustion considérée comme entièrement isochore (c'est l'usage pour la schématisation des cycles de moteurs à allumage commandé) se termine au point $Q_{15S}$, puis la détente adiabatique se termine au point $Q_{52S}$ au même volume $V_{5S}$ que le début de la compression, et à un niveau de pression $P_{2S}$ supérieur à la pression de référence $p_1$.

Au point $Q_{52S}$, le gaz de travail est relâché dans l'échappement et la pression tombe à $p_1$, le piston chasse le gaz jusqu'au point $Q_{11S}$, au PMH, puis le piston aspire le gaz entrant, du point $Q_{10S}$ jusqu'au point $Q_{50S}$ de début de compression. Ainsi non seulement l'énergie résiduelle du gaz de travail en fin de détente est perdue mais en outre le cycle comporte une partie à travail fourni négatif (reconnaissable au fait que cette partie du cycle est parcourue par le point Q en sens inverse des aiguilles d'une montre), visualisée par des hachures simples à la Figure 25.

Le cycle T illustre deux améliorations apportées par l'invention.

Selon une première amélioration, à un stade intermédiaire de la compression, où la pression est $p_{3T}$, le gaz est chauffé à pression constante du point $Q_{33T}$ au point $Q_{43T}$ de façon que la deuxième partie de la compression se termine au point $Q_{14T}$ sur l'isotherme $T_{14}$ de la température limite de fin de compression, au même volume $V_{1T}$ que le volume $V_{1S}$ du cycle S, et donc à une pression $p_{4T}$ supérieure à la pression $P_{4S}$ du cycle S. Le point de fin de combustion $Q_{15T}$ est donc placé à une pression $p_{5T}$ supérieure à la pression $p_{5S}$ de fin de combustion du cycle S.

Toute la détente adiabatique $Q_{15T}$-$Q_{52T}$ dans la chambre de travail se produit également sous une pression qui est supérieure pour chaque valeur du volume. Au total, il est visible sur la figure 25 que toute la partie principale du cycle a été agrandie par la première modification proposée selon l'invention. Le chauffage entre les points $Q_{33T}$ et $Q_{43T}$ est de préférence obtenu par la chaleur disponible au refoulement du moteur, grâce à un échangeur tel que 23 des exemples précédents. On pourra réguler avec précision la température $T_{43T}$ au point $Q_{43T}$ par tout moyen, de préférence en ne préchauffant dans l'échangeur tel que 23 qu'une fraction dosée de l'air pré-comprimé disponible au point $Q_{33T}$, puis en mélangeant la fraction préchauffée et la fraction non-préchauffée, comme décrit en référence à la Figure 21 pour la tranche intermédiaire inférieure des niveaux de charge.

Dans une réalisation, le carburant n'est ajouté au gaz de travail qu'au point $Q_{43T}$, ou entre le point $Q_{43T}$ de fin de chauffage et le point de déclenchement de la combustion, qui précède en général le point de fin de compression $Q_{14T}$ pour tenir compte du délai d'inflammation. En introduisant le carburant dans la chambre de travail et pas avant, on évite tout risque d'auto-inflammation du gaz de travail dans l'échangeur tel que 23 en cas de dysfonctionnement qui induirait une surchauffe dans l'échangeur.

De préférence, à partir d'un niveau de charge non représenté à la Figure 25, on ne préchauffe plus le gaz de travail en cours de compression car compte-tenu de la température en début de compression, on sait que la température en fin de compression sera voisine de la température limite $T_{14}$. Typiquement ce niveau de charge est un niveau de charge intermédiaire. Au niveau de charge maximal le gaz de travail passe de préférence dans un inter-refroidisseur. Dans une tranche intermédiaire supérieure des niveaux de charge, située entre le niveau intermédiaire et le niveau supérieur, le gaz de travail entrant dans le mécanisme volumétrique à la pression $p_3$ est un mélange dosé de gaz de travail inter-refroidi et de gaz de travail qui n'est passé ni par le réchauffage ni par l'inter-refroidissement.

Selon un deuxième perfectionnement apporté par l'invention au cycle S du moteur à allumage commandé, on utilise l'énergie résiduelle du gaz en fin de détente dans le mécanisme volumétrique pour pré-comprimer le gaz de travail au-delà de la pression théorique de début de compression dans le mécanisme volumétrique à partir du PMB compte-tenu de la charge du moteur. Autrement dit, comme décrit en référence aux Figures 1 à 7, on admet dans la chambre de travail un gaz assez fortement pré-comprimé mais sur seulement une partie de la course d'augmentation de volume où se produit l'admission, du PMH jusqu'au point 27 en référence à la Figure 7.

De préférence on utilise toute l'énergie de pression encore disponible dans le gaz de travail au point $Q_{52T}$ de fin de détente adiabatique dans la chambre de travail pour pré-comprimer autant que possible le gaz avant son entrée dans la chambre de travail. Comme le gaz de travail sortant de la chambre de travail au point $Q_{52T}$ est bien plus chaud que le gaz de travail à pré-comprimer, l'énergie disponible permet de pré-comprimer le gaz de travail à une pression $p_{3T}$ bien supérieure à la pression $p_{2T}$ de fin de détente dans la chambre de travail.

Ainsi, la partie négative du cycle S (visualisée par des hachures simples à la Figure 25) est remplacée dans le cycle T par une partie à travail fourni positif (parcourue par le point Q dans le sens des aiguilles d'une montre), visualisée par des hachures croisées.

Si comme dans l'exemple du cycle T le gaz est réchauffé à un stade intermédiaire de sa compression (entre les points $Q_{33T}$ et $Q_{43T}$), la pré-compression s'opère du point $Q_{51}$ (conditions atmosphériques) au point $Q_{33T}$.

Pour la réalisation concrète d'un cycle où le volume de gaz de travail à admettre dans la chambre de travail, tel que mesuré devant la soupape d'admission 4a juste avant son ouverture, est faible, on utilise avantageusement une commande d'ouverture de la soupape d'admission 4a sur une plage courte avec ouverture au PMH et fermeture lorsque le volume de la chambre de travail 1 est égal à $V_{4T}$. Une commande variable du point de fermeture permet de régler la quantité de gaz admise en fonction du point de fonctionnement du moteur.

Dans une réalisation, le moteur à allumage commandé selon l'invention n'a pas besoin de papillon des gaz pour restreindre le débit massique de gaz de travail dans le trajet d'admission. La masse de gaz admise à chaque cycle est réglée par réglage du point de fermeture de la soupape d'admission 4a.

D'une manière générale, un moteur à allumage commandé perfectionné selon l'invention peut être conforme à la figure 21. Toutefois, dans certaines réalisations, lorsque le moteur est chaud, la vanne 38 ne ferme jamais complètement l'accès à la branche 39 et/ou à l'inter-refroidisseur 57, pour éviter de trop réchauffer le gaz d'admission. La vanne 38 ne ferme cet accès que pour le démarrage à froid, dans une version perfectionnée.

Pour une charge maximale, une réalisation du moteur selon l'invention peut fonctionner en moteur turbocompressé inter-refroidi avec une puissance par litre de cylindrée augmentée par rapport à un moteur classique grâce à l'augmentation de rendement procurée par l'admission à haute pression (supérieure à la pression en fin de détente dans la chambre de travail).

On peut aussi envisager un moteur à allumage commandé selon l'invention dans lequel le cycle à partir d'un certain niveau de charge est semblable à celui d'un moteur turbocompressé classique. Il suffit pour cela de n'utiliser qu'une partie de l'énergie disponible au refoulement pour actionner le compresseur de pré-compression. L'avantage est d'éviter de devoir prévoir le trajet d'admission (inter-refroidisseur, soupape 4a, turbocompresseur, tubulures) pour les pressions relativement élevées qui sont générées dans le cas où la très haute pression d'admission selon l'invention est appliquée à forte ou pleine charge.

Des modes de réalisation intermédiaires sont possibles, où la pression d'admission à forte ou pleine charge est limitée tout en étant supérieure à la pression au point de début de compression dans la chambre de travail, par exemple égale ou supérieure à la pression en fin de détente dans la chambre de travail (dans un esprit semblable à l'exemple de la Figure 22).

On choisit entre les différents modes de réalisation en réglant à 100 % ou à une valeur choisie à moins de 100 % la fraction d'énergie de refoulement que l'on utilise pour pré-comprimer le gaz d'admission. Ce réglage peut se faire au moyen d'un by-pass réglable permettant à une partie du gaz de travail refoulé de contourner la turbine du turbocompresseur. Un tel by-pass réglable existe sur les turbocompresseurs classiques.

Dans un autre mode de réalisation, le moteur à allumage commandé utilise au moins deux turbocompresseurs en cascade comme représenté en référence à la Figure 17 ou 20, avec de préférence un inter-refroidisseur 53 (Figures 17 et 19), 53A, 53B (Figure 20) entre compresseurs successifs. Ces inter-refroidisseurs augmentent encore la pression d'admission qu'il est possible de générer avec une énergie donnée dans le refoulement. En outre, si un réchauffage de l'admission est prévu après la pré-compression, la température de fin de réchauffage pourra être plus élevée en correspondance avec la pression plus élevée, la compression additionnelle dans la chambre de travail ayant alors un rapport de pression moindre pour respecter la température limite $T_{14}$.

Si l'on souhaite limiter la pression de pré-compression pour certains niveaux de charge, par exemple les niveaux de charge élevés, ou encore rendre la pré-compression plus efficace par exemple pour un faible niveau de charge, on prévoit des moyens, par exemple les vannes 54A, 54B, 56A, 56B illustrées à la Figure 20, pour désactiver sélectivement une partie des turbocompresseurs dans le cas d'un tel niveau de charge.

Le mode de réalisation de la Figure 26 ne sera décrit que pour ses différences avec celui de la Figure 1 en utilisant autant que possible les mêmes références qu'à la Figure 1, ou des références suivies de la lettre « U » pour les composants qui ne sont que partiellement analogues à ceux de la Figure 1 ou qui présentent des analogies fonctionnelles avec des composants d'autres modes de réalisation décrits précédemment.

Dans les exemples précédents on a considéré des turbocompresseurs parfaits qui transfèrent efficacement à l'admission l'enthalpie libre théoriquement disponible à l'échappement. Or, comme l'on sait, le rendement d'un turbocompresseur est au mieux de l'ordre de 50%. Les pertes se traduisent par de la chaleur en plus à la sortie de la turbine (la température du gaz de travail refoulé chute moins dans la turbine que si la détente était isentropique) et par un surcroît de chaleur et un déficit de pression à la sortie du compresseur (la température à la sortie du compresseur est plus élevée, et la pression moindre, que si la compression était isentropique).

Grâce à l'invention, et contrairement aux moteurs turbocompressés classiques, le surcroît de chaleur en sortie de turbine n'est pas perdu puisque l'échangeur 23 réinjecte très avantageusement cette chaleur dans le cycle thermodynamique. Cependant, le déficit d'énergie mécanique dû au rendement imparfait du turbocompresseur se répercute sur la pression réelle à l'admission d'un moteur selon l'invention. Autrement dit, la pression réelle est significativement réduite par rapport à la pression théorique pour une énergie donnée disponible dans le gaz refoulé par le mécanisme volumétrique.

Le mode de réalisation de la Figure 26 remédie à cet inconvénient en prévoyant au moins deux étages de pré-compression, avec au moins un étage constitué par le compresseur 18 du turbocompresseur 19 et au moins un étage constitué par un compresseur 18U qui utilise une source d'énergie autre que celle du gaz de travail refoulé par le mécanisme volumétrique. Un tel compresseur sera appelé ci-après « compresseur autonome ».

Dans l'exemple représenté, le compresseur autonome 18U est attelé directement ou indirectement, par exemple par l'intermédiaire d'une courroie (non représentée) ou d'un variateur de vitesse (non représenté), à l'arbre moteur 11 du mécanisme volumétrique 3.

En variante, le compresseur autonome 18U pourrait aussi être entraîné par un moteur électrique alimenté par une génératrice et/ou une batterie, par exemple la génératrice et/ou la batterie du véhicule lorsque le moteur est installé sur un véhicule. Pour un moteur fixe ou un moteur de navire le moteur électrique entraînant le compresseur autonome peut être alimenté par un réseau d'énergie par exemple électrique. Notamment pour un moteur d'engin de travaux publics ou agricole le compresseur autonome 18U peut être entraîné par un moteur hydraulique alimenté par la pompe hydraulique de l'engin. Ce ne sont que des exemples, sachant que les cycles thermodynamiques présentés ici considèrent l'énergie consommée par le compresseur autonome comme fournie par le cycle lui-même. Autrement dit il ne s'agit nullement ici d'améliorer artificiellement le rendement du cycle en y injectant de l'énergie extrinsèque.

Le compresseur autonome 18U est de tout type approprié, comme par exemple une turbomachine, un compresseur à palettes, un compresseur Rootes, un compresseur à spirales (« Twin scroll »), à piston, à vis etc.

De préférence le moteur selon l'invention équipé d'un compresseur autonome comprend un moyen pour régler la puissance du compresseur autonome en fonction d'au moins un paramètre de fonctionnement du moteur. Le moyen de réglage peut être un moyen pour régler la puissance motrice appliquée au compresseur autonome, par exemple la puissance du moteur électrique entraînant le compresseur autonome. Le moyen de réglage peut être un moyen pour régler la vitesse de rotation de l'arbre du compresseur autonome, par exemple au moyen d'une transmission à rapport variable entre l'arbre 11 du mécanisme volumétrique 3 et l'arbre (non représenté) du compresseur autonome. Le moyen de réglage peut être un moyen de réglage du débit et/ou du rapport volumétrique ou barométrique du compresseur autonome.

Le réglage de puissance est en général opéré de façon à réaliser, à chaque instant à l'admission 4 du mécanisme volumétrique, une pression d'admission aussi proche que possible d'une pression de consigne définie en fonction du point de fonctionnement courant, tout en faisant en sorte que le compresseur 18 du turbocompresseur 19 utilise aussi complètement que possible l'énergie des gaz refoulés par le mécanisme volumétrique.

Dans une réalisation avantageuse, le compresseur autonome 18U fixe le débit de gaz d'admission renouvelé (c'est-à-dire le débit hors EGR, s'il est prévu un EGR) en fonction du point de fonctionnement. Pour ce point de fonctionnement, le turbocompresseur 19 est capable de fournir une certaine élévation de pression au gaz renouvelé, en faisant chuter au maximum la pression des gaz brûlés dans la turbine 21. L'unité de calcul règle la puissance du compresseur autonome 18U pour que ce dernier fournisse au gaz d'admission qui le traverse le complément de pression nécessaire pour réaliser le point de fonctionnement défini par la cartographie du moteur selon l'invention.

Le rendement théorique d'un moteur selon l'invention avec compresseur autonome 18U attelé à l'arbre moteur 11 du mécanisme volumétrique 3 est le même que celui d'un moteur selon l'invention où la même pré-compression est entièrement assurée par un ou plusieurs turbocompresseurs. Mais le rendement réel du moteur à compresseur autonome peut être supérieur car la puissance nécessaire pour l'entraînement du compresseur autonome 18U est générée par un complément de détente volumétrique dans la chambre de travail 1 avec un meilleur rendement que dans la turbine d'un turbocompresseur.

En outre, le compresseur autonome 18U, avec sa faculté de réglage sans déperdition d'énergie du gaz de travail (contrairement aux turbocompresseurs), permet un contrôle efficace du point de fonctionnement.

Il peut être prévu deux compresseurs autonomes en cascade. Dans ce cas il peut suffire qu'un seul des deux soit pilotable en puissance.

Il est possible qu'un moteur selon l'invention assure la totalité de la pré-compression avec un ou plusieurs compresseurs autonomes tout en exploitant complètement l'énergie mécanique du gaz dans la chambre de travail. Cette solution n'est pas préférée car elle nécessite un grand volume de la chambre de travail au PMB, donc une cylindrée très grande par rapport à la puissance du moteur, en plus d'un coût élevé en compresseurs autonomes.

Dans l'exemple représenté, le compresseur 18 du turbocompresseur 19 est le premier étage de pré-compression, tandis que le compresseur autonome 18U constitue le deuxième étage de pré-compression. Cela permet d'utiliser un turbocompresseur du commerce ou proche de ceux du commerce en termes de gammes de débit volumiques et de gammes de pressions, et d'utiliser un compresseur autonome 18U de plus petite taille car comprimant un gaz déjà comprimé une fois. En outre, dans ce mode réalisation, la puissance du compresseur autonome 18U est réduite car comme on le verra plus loin le compresseur autonome 18U est partiellement ou totalement désactivé pour les niveaux de charge élevés.

On a vu plus haut que la température réelle du gaz sortant de la turbine 21 du turbocompresseur 19 est plus élevée que la température théorique à la fin d'une détente isentropique correspondante. Dans un moteur selon l'invention, cela peut conduire à augmenter de façon correspondante la pression du gaz à l'admission 4 du mécanisme volumétrique 3. Le compresseur autonome 18U permet cela sans que l'on doive augmenter la puissance de turbocompresseur, ce qui aboutirait à un nouveau surcroît de chaleur en sortie de turbine. Au contraire, une partie de la pré-compression étant assurée par le compresseur autonome, le phénomène de surcroît de température du côté chaud de l'échangeur 23 en raison du rendement médiocre des turbines de turbocompresseur est amoindri.

Par contre il peut y avoir intérêt à pré-comprimer l'admission du moteur au-delà de ce que permet le turbocompresseur, pour tenir compte du déficit de pression précité en sortie du compresseur 18 du turbocompresseur 19, et aussi pour élever plus que selon le calcul théorique le niveau de pression à l'admission du mécanisme volumétrique, en correspondance avec le surcroît de température en sortie chaude de l'échangeur 23, en raison de la moindre chute de température du gaz de travail refoulé à son passage dans la turbine.

Par ailleurs on a vu en référence à la Figure 9 qu'il pouvait en pratique être avantageux de choisir une température maximale modérée dans la chambre de travail, et que cela pouvait conduire à élever la pression de fin de pré-compression. Le compresseur autonome 18U permet cela avec un meilleur rendement et une meilleure efficacité, ainsi qu'un meilleur contrôle, que si toute la pré-compression était assurée par turbocompresseur.

Dans le mode de réalisation de la Figure 26, le compresseur autonome 18U est installé entre le compresseur 18 du turbocompresseur 19 et l'entrée froide de l'échangeur 23.

Dans une réalisation le compresseur autonome 18U est à rapport de compression et débit variables pilotés par l'unité de pilotage du moteur pour optimiser à la fois i) l'utilisation de toute la puissance disponible dans le gaz de travail refoulé arrivant au turbocompresseur 19, ii) la pression à la sortie du compresseur autonome 18U, et iii) la pression à l'entrée du mécanisme volumétrique, tout cela en fonction des paramètres de fonctionnement du moteur, tels que charge, température réelle à la sortie chaude de l'échangeur 23, pression réelle à l'entrée du compresseur autonome 18U, etc.. Le rapport de compression est réglable soit directement s'il s'agit par exemple d'un compresseur volumétrique à rapport volumétrique réglable, soit indirectement par variation de sa vitesse ou de son débit.

Avec ce dernier type de réglage du rapport de compression du compresseur autonome 18U, la pression à l'admission du mécanisme volumétrique augmente si le débit du compresseur autonome excède, même de très peu, le débit de gaz renouvelé (c'est-à-dire hors EGR, si EGR il y a) passant par l'admission 4 du mécanisme volumétrique.

Chaque point de fonctionnement du moteur a pour conséquence une valeur de l'énergie mécanique disponible dans les gaz refoulés par le mécanisme volumétrique, ayant à son tour pour conséquence une certaine valeur de pression à la sortie du compresseur 18, et donc à l'entrée du compresseur autonome 18U. La pression et la température à l'entrée du compresseur autonome 18U sont mesurables par des capteurs (non représentés) permettant à l'unité de pilotage 43 de déterminer le débit volumique que l'admission du compresseur autonome 18U doit assurer pour réaliser le débit massique de gaz renouvelé associé au point de fonctionnement courant. L'unité de pilotage 43 règle la vitesse du compresseur autonome 18U pour réaliser le débit volumique ainsi déterminé. Autour de cette valeur, l'unité de pilotage 43, renseignée par un capteur de pression 78 sensible à la pression du gaz de travail arrivant à l'entrée du mécanisme volumétrique 3, procède à une régulation fine qui ajuste le débit du compresseur autonome 18U pour stabiliser la pression à l'admission 4 du mécanisme volumétrique aussi près que possible de la pression théorique pour le point de fonctionnement courant.

Pour le réglage de la vitesse de rotation du compresseur autonome 18U, un système de variation de vitesse (non représenté) pilotable par l'unité de pilotage 43 peut être installé dans la liaison mécanique 71 entre le compresseur 18U et le mécanisme volumétrique 3.

Un inter-refroidisseur 57U est interposé entre la sortie du compresseur 18 et l'entrée du compresseur autonome 18U.

Le trajet calo-récepteur 24 de l'échangeur 23 est monté entre la sortie du compresseur autonome 18U en amont, et l'admission 4 du mécanisme volumétrique en aval.

Le trajet calo-cédant 26 de l'échangeur 23 est monté entre la sortie de la turbine 21 du turbocompresseur 19 en amont et l'échappement 25 du moteur en aval.

Dans la réalisation représentée, une vanne à trois voies 81 pilotée par l'unité de pilotage est placée entre la sortie du compresseur autonome 18U et l'entrée froide de l'échangeur 23. La vanne 81 oriente le gaz de travail sortant du compresseur autonome 18U soit vers le trajet calo-récepteur 24 de l'échangeur 23, soit vers une branche non-chauffée 39U, de préférence adiabatique, qui contourne l'échangeur 23 jusqu'à un point de raccordement 41U avec la sortie chaude de l'échangeur 23. De préférence la vanne 81 est capable de positions intermédiaires définies par l'unité de pilotage 43 en fonction du point de fonctionnement courant. Dans ces positions intermédiaires le gaz de travail sortant du point de raccordement 41U en direction du mécanisme volumétrique 3 est un mélange dosé de gaz de travail ayant traversé l'échangeur 23 et de gaz de travail moins chaud passé par la branche adiabatique 39U. La température de ce mélange est intermédiaire entre celle de la sortie du compresseur 18U et celle plus élevée de la sortie chaude de l'échangeur 23. Un capteur de température 79 placé entre le point de raccordement 41U et l'admission 4 du mécanisme volumétrique 3 renseigne l'unité de pilotage 43 sur la température réelle à l'entrée du mécanisme volumétrique 3. L'unité de pilotage 43 ajuste la vanne 81 dans le sens tendant à ramener cette température réelle vers une valeur optimale pour le point de fonctionnement courant.

Dans la version perfectionnée représentée, une vanne à trois voies 73 pilotée de façon binaire par l'unité de pilotage 43 permet au gaz sortant de l'inter-refroidisseur 57U de pénétrer dans le compresseur 18U comme décrit jusqu'à présent ou sélectivement de contourner le compresseur autonome 18U pour aller directement rejoindre la branche adiabatique 39U et de là le point de raccordement 41U.

Des clapets anti-retours 80 empêchent le gaz de travail de circuler à contre-sens dans les différentes branches du trajet du gaz de travail.

On va maintenant décrire en référence aussi à la Figure 27 un procédé possible pour utiliser le moteur selon la Figure 26, considéré jusqu'ici comme ne comportant pas de dispositif EGR.

Dans cet exemple le point de sollicitation maximale $Q_{25}$ est le même pour tous les points de fonctionnement. Cela simplifie la compréhension mais ne constitue nullement une obligation, comme déjà exposé en référence à des modes de réalisation précédents.

Pour une tranche basse des niveaux de charge, le cycle U1 est mis en œuvre. Tout le gaz de travail passe par les compresseurs 18 et 18U puis par l'échangeur 23 pour arriver au point de raccordement 41U (point $Q_{43U1}$) à une température $T_{81}$ égale à la température de sortie de la turbine 21. Le cycle est par exemple identique au cycle C de la figure 7 sauf que la pré-compression fractionnée avec inter-refroidissement intermédiaire améliore le rendement théorique déjà élevé du cycle C, tandis que le rendement réel est amélioré par le rendement amélioré de la pré-compression partiellement réalisée par le compresseur autonome 18U.

Pour des raisons exposées précédemment, la pression de pré-compression $p_{3U1}$ augmente avec le niveau de charge. Pour un certain niveau de charge (non représenté) qui constitue le sommet de la tranche inférieure et le début d'une tranche intermédiaire, la pression $p_{3U}$ atteint une valeur $p3_{Um}$ que l'on s'impose de ne pas dépasser pour limiter la complexité et le coût de réalisation.

Dans la tranche intermédiaire (cycle U2 à la Figure 27, représenté en tirets mais uniquement là où il diffère du cycle U1), tout le gaz de travail passe par le compresseur 18, l'inter-refroidisseur 57U et le compresseur autonome 18U. L'unité de pilotage 43 régule la puissance du compresseur autonome 18U pour que la pression à sa sortie soit stabilisée au niveau $p_{3Um}$. En outre, l'unité de pilotage 43 positionne la vanne 81 dans une position intermédiaire. En conséquence une partie du gaz de travail pré-comprimé passe par l'échangeur 23 et une autre partie du gaz de travail pré-comprimé passe par la branche adiabatique 39U. On obtient ainsi au point de raccordement 41U un mélange qui est à la pression $p_{3Um}$ et à une température $T_{43U2}$ (point $Q43L2$) intermédiaire entre la température $T_{33U2}$ (point $Q_{33U2}$) de sortie du compresseur autonome 18M et la température $T_{81}$ de sortie de l'échangeur 23.

Plus le niveau de charge augmente à l'intérieur de la tranche intermédiaire, et plus le point $Q_{43U2}$ se rapproche du point $Q_{33U2}$, en même temps que celui-ci se décale vers la gauche de la Figure 27 car le rapport de compression du compresseur autonome 18U diminue à mesure que celui du compresseur 18 augmente avec l'augmentation de l'énergie disponible au refoulement.

Pour un certain niveau de charge correspondant au sommet de la tranche intermédiaire et au début de la tranche supérieure, le point $Q_{43U2}$ vient coïncider avec le point $Q_{33U2}$ en un point $Q_{33U3}$, autrement dit la vanne 81 ferme l'entrée à l'échangeur 23 et tout le gaz de travail passe par la branche adiabatique 39U.

Cette situation est illustrée par le cycle U3, qui est représenté en pointillés là où il diffère du cycle U2. On est alors dans la tranche supérieure des niveaux de charge.

La Figure 27 permet d'apprécier que dans la tranche supérieure il est indifférent pour le cycle théorique, que la pré-compression continue après la sortie de l'inter-refroidisseur 57U jusqu'à la pression $p_{3Um}$, ou au contraire que le gaz de travail aille directement de l'inter-refroidisseur 57U au mécanisme volumétrique 3 en contournant le compresseur autonome 18U.

C'est pourquoi selon un perfectionnement on neutralise alors le compresseur autonome 18U. Dans le cas où on a prévu la vanne 73 et le raccordement entre celle-ci et la branche adiabatique 39U, la neutralisation consiste à faire en sorte que la totalité du gaz de travail contourne le compresseur autonome 18U par une commande appropriée appliquée par l'unité de pilotage 43 à la vanne 73. Le moteur fonctionne alors avec un cycle proche de celui d'un moteur turbocompressé inter-refroidi classique.

La neutralisation du compresseur autonome 18U à la transition entre la tranche intermédiaire et la tranche supérieure, et/ou sa réactivation pour la transition en sens inverse, peuvent se faire progressivement : Dès lors que le gaz de travail ne passe plus par l'échangeur 23, le cycle théorique est le même si le compresseur autonome 18U fait une partie de la compression en aval de l'inter-refroidisseur ou si au contraire toute la compression en aval de l'inter-refroidisseur a lieu dans la chambre de travail 1. Pour que la transition progressive soit correcte, Il suffit que le point 27 de fermeture de la soupape d'admission 4a soit ajusté conjointement avec la variation du volume massique du gaz de travail arrivant à l'admission 4 pour que la masse de gaz voulue soit admise à chaque cycle dans le mécanisme volumétrique pour le point de fonctionnement courant.

On notera que dans le mode de réalisation particulièrement avantageux de la Figure 26 l'inter-refroidisseur 57U fonctionne à la fois pour améliorer l'efficacité de la pré-compression pour les niveaux de charge inférieurs ou intermédiaires et pour inter-refroidir de façon quasiment classique le gaz de travail pour les niveaux de charge supérieurs.

Dans la partie supérieure (cycle non représenté) de la tranche intermédiaire, le point $Q_{43U2}$ peut se trouver à gauche du prolongement de la courbe de compression adiabatique à partir du point $Q_{51}$ (pression et volume massique de référence). Dans ce cas le gaz de travail pré-comprimé est globalement inter-refroidi par rapport à ce qu'aurait été une compression adiabatique à partir du point $Q_{51}$. L'inter-refroidissement complet dans l'inter-refroidisseur 57U puis le réchauffage partiel après passage dans le compresseur 18U permettent de gagner en rendement, par rapport à ce qu'aurait été un simple refroidissement mitigé comme décrit en référence aux Figures21, 22 grâce aux positions intermédiaires de la vanne 58.

On comprendra que le fonctionnement qui vient d'être décrit en référence à la Figure 27 n'est pas intrinsèquement lié à l'utilisation d'un compresseur autonome 18U, mais pourrait être transposé à une réalisation à deux turbocompresseurs. On comprendra aussi que l'utilisation d'un compresseur autonome dans le cadre de l'invention n'est pas limitée à la structure de la Figure 26 ni aux cycles de la Figure 27, un compresseur autonome pouvant remplacer par exemple l'un des compresseurs des modes réalisation des Figures 13, 17 19, 20, ou encore le compresseur 18 de la Figure 11, ou assurer une partie de la pré-compression dans les modes de réalisation des Figures 1, 14, 16, 21

Dans l'exemple représenté à la Figure 26, on a également prévu un trajet de recirculation d'une partie du gaz de travail refoulé. Le trajet de recirculation passe par un compresseur d'EGR 37 comme à la figure 14. On l'a ici représenté entraîné par une liaison mécanique 91 avec l'arbre moteur 11 du mécanisme volumétrique 3. Il y a dans le trajet de recirculation en amont du compresseur de recirculation 37 un radiateur de recirculation 74 qui refroidit le gaz de recirculation au moins pour les niveaux de charge les plus élevés. Ceci réduit la puissance consommée par le compresseur 37 et évite que le gaz de travail arrivant de la branche adiabatique 39U soit désavantageusement réchauffé par le gaz de recirculation.

Pour les niveaux de charge inférieurs où tout le gaz de travail entrant passe par l'échangeur 23, le gaz de recirculation contourne le radiateur de recirculation 74 grâce à un by-pass 76 commandé par une vanne 77 pilotée par l'unité de pilotage 43, de façon que le gaz de recirculation arrive aussi chaud que possible au point où il se mélange avec le gaz de travail issu de la sortie chaude de l'échangeur 23. On évite ainsi de dissiper dans l'inter-refroidisseur 74 des calories qui sont utilisables dans le cycle selon l'invention. Le gaz de recirculation, non détendu (donc non refroidi à la température $T_{81}$) dans la turbine 21 puis chauffé par la compression dans le compresseur 37 est à une température supérieure à $T_{81}$. En conséquence le mélange obtenu au point 40U de mélange entre le gaz de recirculation et le gaz pré-comprimé provenant du point de raccordement 41U sont à une température supérieure à $T_{81}$. Ceci peut être pris en compte dans le pilotage du moteur en choisissant pour chaque niveau de charge une pression de pré-compression supérieure à celle qui serait optimale en l'absence de recirculation.

Une autre solution consiste à prévoir que la vanne 77 puisse prendre des positions intermédiaires pour ne refroidir que partiellement le gaz de recirculation, de façon que le gaz de recirculation arrive au point de mélange 40U à une température voulue, par exemple la même que celle à la sortie du point de raccordement 41U.

Les modes de réalisation des Figures 26 et 27 sont compatibles avec divers types de modes d'inflammation et de combustion.

Dans les diagrammes de la Figure 27 on s'est plutôt référé à un mode d'inflammation par compression (type diesel). Si l'inflammation est obtenue par allumage commandé (typiquement par bougie d'allumage), les vannes 73 et 81, et 77 si la recirculation est prévue, sont réglées de façon à faire passer suffisamment de gaz de travail par la branche adiabatique 39U de façon que la température vers la fin de la compression supplémentaire ne dépasse pas la température limite à respecter pour éviter l'auto-inflammation.

Au vu des divers exemples décrits, on comprendra que dans le moteur à combustion interne selon l'invention le temps d'admission du mécanisme volumétrique constitue aussi un temps moteur d'une machine thermique à deux temps, à savoir un temps de compression qui est constitué par la pré-compression selon l'invention, et un temps de détente qui est constitué par le temps d'expansion incluant la phase d'admission dans le mécanisme volumétrique. Entre ces deux temps de la machine thermique, le gaz de travail est chauffé dans l'échangeur 23 par le refoulement du mécanisme volumétrique, ce qui permet au temps de détente (admission du moteur à combustion) de produire plus d'énergie mécanique que celle consommée pour la pré-compression.

Bien entendu, l'invention n'est pas limitée aux exemples décrits et représentés.

LISTE DES REPÈRES

    1-...Chambre de travail
    2-...Bloc-moteur
    3-...Mécanisme volumétrique
    4-...Admission, orifice d'admission
    4a-Soupape d'admission
    4b-Came
    6-...Moyens de combustion
    7-...Refoulement, orifice de refoulement
    7a-Soupape de refoulement
    7b-Came
    8-...Organe mobile, piston
    9-...Face de travail du piston
    11-.Arbre moteur
    12-.Transformateur de mouvement
    13-.Cylindre
    14-. Vilebrequin
    16-.Bielle
    17-.Maneton
    18, 18A, 18B, 18C-.Compresseur
    18U-.Compresseur autonome
    19, 19A, 19B, 19C-.Turbocompresseur
    20-Arrivée d'air
    21, 21A, 21B, 21C-.Turbine

22-.Conduit de refoulement

23-.Echangeur de chaleur

24-.Trajet calo-récepteur

25-Échappement

26-.Trajet calo-cédant

27-.Position intermédiaire du piston

28-.Système de dépollution

29-.Compresseur d'entrée

30-.Aller-retour du piston au-dessous de la position 27

31- .Inter-refroidisseur

32-.Flux d'air de refroidissement

33-.Turbocompresseur d'entrée

34-.Turbine

36-.Echangeur à contre-courant

37-.Compresseur d'EGR

38-.Vanne à trois voies

39, 39U-.Branche adiabatique, non chauffée

40, 40U-.Point de mélange

41, 41U-.Point de raccordement

42-.Capteur de température

43-.Unité de pilotage

44-.Brûleur de préchauffage

46-.Arrivée d'air

47-.Foyer

48-.Sortie de fumée

49-.Echangeur

51-.Capteur de pression

52-.Capteur de température

53, 53M-.Inter-refroidisseur

54-.Vanne

55-.Entrée de l'unité de pilotage 43

56-.Vanne

57, 57U-.Inter-refroidisseur

58-.Deuxième vanne à trois voies

59-.Capteur

66-.Ressort de soupape

67-.Tige de soupape

68-.Epaulement

69-.Guide de soupape

71-Liaison mécanique

73-.Vanne à trois voies

74-.Radiateur de recirculation

76-. By-pass

77-.Vanne à trois voies

78-.Capteur de pression

79-.Capteur de température

80-Clapets anti-retour

81-Vanne à trois voies

91-.Liaison mécanique

**Revendications**

1. Moteur à combustion interne comprenant :

   un arbre moteur (11)
   des moyens (18, 18A, 18B, 18C, 18U) de pré-compression avec réduction de volume massique pour opérer la pré-compression et la réduction de volume massique d'un gaz de travail, de façon à obtenir un gaz de travail pré-comprimé se trouvant à une première pression ;
un mécanisme volumétrique (3) possédant une chambre de travail (1) partiellement définie par un organe mobile (8) couplé à un arbre moteur (11), et dans laquelle le gaz de travail pré-comprimé subit successivement :

- un chauffage par combustion au voisinage d'un point mort haut de l'organe mobile, où le volume de la chambre de travail est minimal,
- au moins une partie initiale de détente, pendant que l'organe mobile se déplace vers un point mort bas,

un refoulement,
des moyens de transfert thermique (23) qui, en fonctionnement moteur chaud dans une tranche inférieure des niveaux de charge, pour laquelle le moteur produit un couple moteur sur l'arbre moteur, prélèvent de la chaleur au gaz de travail refoulé se trouvant en aval du refoulement (7) du mécanisme volumétrique (3) à une deuxième pression inférieure à la première pression et fournissent ladite chaleur au gaz de travail pré-comprimé, de façon que la température du gaz de travail pré-comprimé soit plus élevée à la sortie des moyens de transfert thermique (23) qu'à la sortie des moyens de pré-compression,
moteur dans lequel le gaz de travail pré-comprimé et chauffé par les moyens de transfert thermique (23) à une première température à une sortie chaude des moyens de transfert thermique subit au moins en partie dans la chambre de travail (1) une compression supplémentaire avec réduction de volume massique et élévation de température au-delà de la première température dans la chambre de travail (1) avant le début du chauffage par combustion
**caractérisé en ce que** hormis le cas échéant dans au moins un appareil de dépollution (28), le gaz de travail refoulé est dans des conditions essentiellement adiabatiques entre le refoulement (7) du mécanisme volumétrique et une entrée chaude dans les moyens de transfert thermique (23), **en ce que** le moteur comprend des moyens d'ajustement thermique (38, 39, 57, 58, 39U) pour modérer la température du gaz de travail pré-comprimé arrivant au mécanisme volumétrique (3) par rapport à la température du gaz de travail refoulé disponible en amont des moyens de transfert thermique (23) lorsque le niveau de charge est dans des tranches moyenne et supérieure, et **en ce que** dans la tranche supérieure les moyens d'ajustement thermique refroidissent le gaz de travail envoyé au mécanisme volumétrique (3), par rapport à la température de fin de pré-compression.

2. Moteur selon la revendication 1, **caractérisé en ce que** les moyens de pré-compression comprennent deux étages (18, 18U) séparés par un inter-refroidisseur (57U), et **en ce que** lorsque le niveau de charge est dans la tranche supérieure des niveaux de charge, les moyens de modération thermique permettent sélectivement au gaz de travail pré-comprimé d'aller à l'admission du mécanisme volumétrique (3) sensiblement dans son état thermodynamique tel qu'à la sortie de l'inter-refroidisseur (57U) en passant par une branche de contournement (39U) des moyens de transfert thermique (23).

3. Moteur selon la revendication 2, **caractérisé en ce que** dans la tranche moyenne des niveaux de charge le gaz de travail sortant de l'inter-refroidisseur (57U) passe par l'étage de pré-compression supérieur (18U) puis en partie par les moyens de transfert thermique (23) et en partie par la branche de contournement (39U).

4. Moteur selon la revendication 2 ou 3, **caractérisé en ce qu'**à la transition entre la tranche moyenne et la tranche supérieure, l'étage de pré-compression supérieur (18U) est progressivement neutralisé, et inversement à la transition entre la tranche supérieure et la tranche moyenne l'étage de pré-compression supérieur (18U) est progressivement activé.

5. Moteur selon la revendication 1, **caractérisé en ce que** les moyens d'ajustement thermique comprennent, pour la circulation du gaz de travail pré-comprimé, en plus d'une branche de chauffage passant par les moyens de transfert thermique (23), au moins une branche de contournement (39, 39U, 57) qui contourne les moyens de transfert thermique, et des moyens distributeurs (38, 58, 81) pour faire sélectivement passer au moins une partie du gaz de travail pré-comprimé par au moins une branche de contournement.

6. Moteur selon la revendication 5, **caractérisé en ce que** les moyens distributeurs (38, 58, 81) sont capables d'au moins une position intermédiaire pour faire passer le gaz de travail pré-comprimé simultanément dans deux branches en parallèle pour obtenir à un point de raccordement (41, 41U) des deux branches un gaz de travail pré-comprimé ayant une température intermédiaire entre celles des deux branches à leur arrivée au point de jonction.

7. Moteur selon la revendication 5 ou 6, **caractérisé en ce que** l'au moins une branche de contournement comprend une branche refroidie, en particulier équipée d'un inter-refroidisseur (57).

8. Moteur selon l'une des revendications 5 à 7, **caractérisé en ce que** la branche de chauffage reçoit la totalité du gaz de travail pré-comprimé lorsque le niveau de charge est dans la tranche inférieure des niveaux de charge.

9. Moteur selon l'une des revendications 5 à 7, **caractérisé en ce que** la totalité du gaz de travail refoulé passe par les moyens de transfert thermique (23) même pour des points de fonctionnement où le gaz de travail pré-comprimé passe en partie ou en totalité par l'au moins une branche de contournement (39, 39U, 57).

10. Moteur selon l'une des revendications 1 à 9, **caractérisé par** un moyen de chauffage additionnel (44) capable de réchauffer le gaz de travail sur son trajet entre la sortie chaude des moyens de transfert thermique (23) et l'admission (4) dans le mécanisme volumétrique (3), et par des moyens pour activer le chauffage additionnel pendant une phase initiale de démarrage à froid.

11. Moteur selon l'une des revendications 1 à 10, **caractérisé en ce qu'**il comprend pour une partie du gaz de travail refoulé par le mécanisme volumétrique (3) au moins un trajet de recirculation allant d'un point de partage situé entre le refoulement (7) du mécanisme volumétrique (3) et l'entrée chaude des moyens de transfert thermique (23), jusqu'à un point de mélange (40, 40U) situé entre la sortie chaude des moyens de transfert thermique (23) et l'admission (4) du mécanisme volumétrique (3).

12. Moteur selon l'une des revendications 1 à 11, **caractérisé en ce que** le mécanisme volumétrique (3) est capable de mettre fin à une phase de refoulement du gaz de travail avant le point mort haut de l'organe mobile (8), de façon à soumettre à une recirculation interne la partie du gaz brûlé piégée dans la chambre de travail (1) à la fin de la phase de refoulement.

13. Moteur selon l'une quelconque des revendications 1 à 12, **caractérisé en ce qu'**un rapport volumétrique effectif de compression entre la sortie chaude des moyens de transfert thermique (23) et le point mort haut dans le mécanisme volumétrique (3) est inférieur à un rapport volumétrique de l'expansion dans le mécanisme volumétrique à partir du point mort haut.

14. Moteur selon l'une quelconque des revendications 1 à 13, **caractérisé en ce que** le mécanisme volumétrique (3) est du type à quatre temps comprenant un temps d'augmentation de volume au cours duquel le gaz de travail à la première pression pénètre dans la chambre de travail (1) puis se détend dans la chambre de travail jusqu'à atteindre à la fin dudit temps d'augmentation de volume une troisième pression inférieure à ladite première pression.

15. Moteur selon la revendication 14, **caractérisé en ce qu'**un point de fermeture (27), par rapport au point mort haut et au point mort bas, d'un orifice d'admission (4) de gaz de travail dans le mécanisme volumétrique (3), est piloté en temps réel en fonction d'au moins un paramètre de fonctionnement du moteur.

16. Moteur selon l'une des revendications 1 à 14, **caractérisé en ce que** le point de fermeture (27), par rapport au point mort haut et au point mort bas, d'un orifice d'admission (4) du mécanisme volumétrique (3) est invariable.

17. Moteur selon l'une quelconque des revendications 1 à 16, **caractérisé en ce que** les moyens de transfert thermique comprennent un échangeur de chaleur (23) dans lequel le gaz de travail refoulé par le mécanisme volumétrique circule essentiellement à contre-courant du gaz de travail pré-comprimé.

18. Moteur selon l'une des revendications 1 à 17, **caractérisé en ce que** les réglages pour différents niveaux de charge du moteur sont tels que, en fonctionnement moteur chaud, la température de l'entrée chaude des moyens de transfert thermique (23) varie peu, typiquement de moins de 100 K, quel que soit le niveau de charge du moteur au moins dans une plage de niveaux de charge usuels.

19. Moteur selon la revendication 18, **caractérisé en ce que** les réglages sont tels que les courbes de détente du gaz brûlé dans un diagramme donnant la pression du gaz de travail en fonction de son volume massique pour différents niveaux de charge sont sensiblement superposables au moins dans leur zone correspondant aux faibles pressions.

20. Moteur selon l'une quelconque des revendications 1 à 19, **caractérisé en ce que** le chauffage est opéré par combustion homogène d'un mélange préconstitué d'air, de combustible et de gaz de recirculation.

**21.** Moteur selon l'une des revendications 1 à 20, **caractérisé en ce qu'**au moins dans une tranche de niveaux de charge la pression de pré-compression augmente lorsque la charge augmente, la pression de pré-compression n'augmentant de préférence que jusqu'à un plafond ($p_{3Um}$) puis restant inférieure ou sensiblement égale audit plafond quand le niveau de charge est supérieur à la valeur pour laquelle le plafond est atteint.

**22.** Moteur selon l'une des revendications 1 à 21, **caractérisé en ce que** les moyens de pré-compression (18A, 18B, 18C, 18U) comprennent au moins deux étages de pré-compression, et des moyens pour désactiver sélectivement au moins un étage de pré-compression.

**23.** Moteur selon l'une des revendications 1 à 22, **caractérisé en ce qu'**il comprend des moyens de pilotage (43) qui font varier la pression de pré-compression en fonction du point de fonctionnement courant.

**24.** Moteur selon l'une quelconque des revendications 1 à 23, **caractérisé par** des moyens (31, 36, 53, 53A, 53B, 53U) pour refroidir le gaz de travail au cours de ladite pré-compression, dans lesquels le gaz de travail situé entre deux étages de pré-compression est refroidi par du gaz de travail issu de la sortie froide des moyens de transfert thermique (23) puis détendu dans un appareil (34) servant à la motorisation de l'un au moins (29) des étages de pré-compression.

**25.** Moteur selon l'une quelconque des revendications 1 à 24, **caractérisé en ce que** les moyens de pré-compression comprennent un compresseur dit « autonome » (18U) entraîné indépendamment du gaz de travail refoulé, et qui est de préférence monté en série avec un compresseur (18) de turbocompresseur (19), de préférence en aval de ce dernier.


**Patentansprüche**

**1.** Interner Verbrennungsmotor, der aufweist:

eine Motorwelle (11)
Vorverdichtungsmittel (18, 18A, 18B, 18C, 18U) zur Vorverdichtung eines Arbeitsgas mit Verringerung dessen spezifischen Volumens, um ein vorverdichtetes Arbeitsgas bei einem ersten Druck zu erhalten;
ein volumetrisches System (3), das einen Arbeitsraum (1) besitzt, der teilweise durch ein an die Motorwelle (11) gekuppeltes mobiles Element (8) bestimmt wird, und in dem das vorverdichtete Arbeitsgas nacheinander

- einer Erwärmung durch Verbrennung im Bereich eines oberen Totpunktes des mobilen Elements, an dem das Volumen des Arbeitsraums minimal ist, sowie
- zumindest einem ersten Teil einer Expansion, während das mobile Element sich in Richtung eines unteren Totpunktes bewegt, unterzogen wird;

eine Ausstoßanordnung,
thermische Transfermittel (23), die bei Warmbetrieb des Motors in einem unteren Bereich der Lastniveaus, bei dem der Motor ein Antriebsmoment auf der Motorwelle erzeugt, Wärme vom ausgestoßenen Arbeitsgas abnehmen, das sich stromabwärts der Ausstoßanordnung (7) des volumetrischen Systems (3) bei einem zweiten Druck, der geringer als der erste Druck ist, befindet, und die dem vorverdichteten Arbeitsgas diese Wärme übertragen, sodass die Temperatur des vorverdichteten Arbeitsgases am Ausgang der thermischen Transfermittel (23) höher ist als am Ausgang der Vorverdichtungsmittel,
wobei das vorverdichtete und durch die thermischen Transfermittel (23) auf eine erste Temperatur an einem heißen Ausgang der thermischen Transfermittel erwärmte Arbeitsgas zumindest teilweise in dem Arbeitsraum (1) einer zusätzlichen Verdichtung mit Verringerung des spezifischen Volumens und Erhöhung der Temperatur oberhalb der ersten Temperatur in dem Arbeitsraum (1) vor dem Beginn der Erwärmung durch Verbrennung unterzogen wird,
**dadurch gekennzeichnet, dass**
ausgenommen ggf. in einer etwaigen Reinigungsvorrichtung (28), sich das ausgestoßene Arbeitsgas zwischen der Ausstoßanordnung (7) des volumetrischen Systems und einem heißen Eingang in den thermischen Transfermitteln (23) unter im Wesentlichen adiabatischen Bedingungen befindet, dass der Motor thermische Anpassungsmittel (38, 39, 57, 58, 39U) aufweist, um die Temperatur des am volumetrischen System (3) ankommenden, vorverdichteten Arbeitsgases im Vergleich zu dem an die thermischen Transfermitteln (23) ankommenden, ausgestoßenen Arbeitsgas zu minden, wenn das Lastniveau in dem mittleren und oberen Bereich ist, und dass die thermischen Anpassungsmittel in dem oberen Bereich das in das volumetrische System (3) geleitete Arbeitsgas im Vergleich zu der Temperatur des Endes der Vorverdichtung abkühlen.

2. Motor nach Anspruch 1, **dadurch gekennzeichnet, dass** die Vorverdichtungsmittel zwei Stufen (18, 18U) aufweisen, die durch einen Zwischenkühler (57U) getrennt sind, und dass, wenn das Lastniveau in dem oberen Bereich der Lastniveaus ist, die thermischen Minderungsmittel dem vorverdichteten Arbeitsgas selektiv ermöglichen, zum Einlass des volumetrischen Systems (3) unter Durchlauf eines die thermischen Transfermittel (23) umlaufenden Bypasszweigs (39U) zu gelangen, im Wesentlichen in dem thermodynamischen Zustand, der dem am Ausgang des Zwischenkühlers (57U) entspricht.

3. Motor nach Anspruch 2, **dadurch gekennzeichnet, dass** in dem mittleren Bereich der Lastniveaus das aus dem Zwischenkühler (57U) austretende Arbeitsgas die obere Vorverdichtungsstufe (18U), dann teilweise die thermischen Transfermittel (23) und teilweise den Bypasszweig (39U) durchläuft.

4. Motor nach Anspruch 2 oder 3, **dadurch gekennzeichnet, dass** an dem Übergang zwischen dem mittleren Bereich und dem oberen Bereich die obere Vorverdichtungsstufe (18U) allmählich deaktiviert wird, und umgekehrt an dem Übergang zwischen dem oberen Bereich und dem mittleren Bereich die obere Vorverdichtungsstufe (18U) allmählich aktiviert wird.

5. Motor nach Anspruch 1, **dadurch gekennzeichnet, dass** die thermischen Anpassungsmittel für die Zirkulation des vorverdichteten Arbeitsgases zusätzlich zu einem Erwärmungszweig durch die thermischen Transfermittel (23) hindurch zumindest einen Bypasszweig (39, 39U, 57) der die thermischen Transfermittel umläuft, sowie Verteilermittel (38, 58, 81) aufweisen, um selektiv zumindest einen Teil des vorverdichteten Arbeitsgases durch zumindest einen Bypasszweig zu leiten.

6. Motor nach Anspruch 5, **dadurch gekennzeichnet, dass** die Verteilermittel (38, 58, 81) für zumindest eine Zwischenposition ausgebildet sind, um das vorverdichtete Arbeitsgas gleichzeitig in zwei parallele Zweige zu leiten, um an einem Anschlusspunkt (41, 41U) der beiden Zweige ein vorverdichtetes Arbeitsgas mit einer Zwischentemperatur zu erhalten, die zwischen der Temperatur der beiden Zweige bei ihrem Erreichen des Anschlusspunktes liegt.

7. Motor nach Anspruch 5 oder 6, **dadurch gekennzeichnet, dass** der zumindest eine Bypasszweig einen abgekühlten Zweig aufweist, der insbesondere mit einem Zwischenkühler (57) ausgestattet ist.

8. Motor nach einem der Ansprüche 5 bis 7, **dadurch gekennzeichnet, dass** der Erwärmungszweig die Gesamtheit des vorverdichteten Arbeitsgases empfängt, wenn das Lastniveau in dem unteren Bereich der Lastniveaus ist.

9. Motor nach einem der Ansprüche 5 bis 7, **dadurch gekennzeichnet, dass** die Gesamtheit des ausgestoßenen Arbeitsgases die thermischen Transfermittel (23) durchläuft, selbst bei Betriebspunkten, bei denen das vorverdichtete Arbeitsgas teilweise oder ganz den zumindest einen Bypasszweig (39, 39U, 57) durchläuft.

10. Motor nach einem der Ansprüche 1 bis 9, **gekennzeichnet durch** ein zusätzliches Erwärmungsmittel (44), das eingerichtet ist, um das Arbeitsgas auf seinem Weg zwischen dem heißen Ausgang der thermischen Transfermittel (23) und dem Einlass (4) in das volumetrische System (3) zu erwärmen, sowie durch Mittel, um die zusätzliche Erwärmung während einer zum Kaltstart entsprechenden Initialphase zu aktivieren.

11. Motor nach einem der Ansprüche 1 bis 10, **dadurch gekennzeichnet, dass** er für einen Teil des durch das volumetrische System (3) ausgestoßenen Arbeitsgases zumindest eine Rückführungstrecke aufweist, die sich von einem sich zwischen der Ausstoßanordnung (7) des volumetrischen Systems (3) und dem heißen Eingang der thermischen Transfermittel (23) befindlichen Aufteilungspunkt bis zu einem sich zwischen dem heißen Ausgang der thermischen Transfermittel (23) und dem Einlass (4) des volumetrischen Systems befindlichen Mischpunkt (40, 40U) erstreckt.

12. Motor nach einem der Ansprüche 1 bis 11, **dadurch gekennzeichnet, dass** das volumetrische System (3) eingerichtet ist zum Beenden einer Ausstoßphase des Arbeitsgases vor dem oberen Totpunkt des mobilen Elements (8), um den in dem Arbeitsraum (1) eingeschlossenen Teil des verbrannten Gases am Ende der Ausstoßphase einer internen Rückführung zu unterziehen.

13. Motor nach irgendeinem der Ansprüche 1 bis 12, **dadurch gekennzeichnet, dass** ein effektives Verdichtungsvolumenverhältnis zwischen dem heißen Ausgang der thermischen Transfermittel (23) und dem oberen Totpunkt im volumetrischen System (3) kleiner ist als ein Expansionsvolumenverhältnis im volumetrischen System ab dem oberen Totpunkt.

14. Motor nach irgendeinem der Ansprüche 1 bis 13, **dadurch gekennzeichnet, dass** das volumetrische System vom Viertakt-Typ ist, das eine Volumenanstiegszeit aufweist, während derer das Arbeitsgas in den Arbeitsraum (1) bei dem ersten Druck eintritt, sich dann in dem Arbeitsraum ausdehnt, bis es am Ende dieser Volumenanstiegszeit einen dritten Druck erreicht, der kleiner ist als der erste Druck.

15. Motor nach Anspruch 14, **dadurch gekennzeichnet, dass** ein Schließpunkt (27) einer Einlassöffnung (4) zum Einlass des Arbeitsgas in das volumetrische System (3) in Bezug auf den oberen Totpunkt und den unteren Totpunkt als Funktion zumindest eines Motorbetriebsparameters in Echtzeit gesteuert ist.

16. Motor nach einem der Ansprüche 1 bis 14, **dadurch gekennzeichnet, dass** der Schließpunkt (27) einer Einlassöffnung (4) zum Einlass in das volumetrische System (3) in Bezug auf den oberen Totpunkt und den unteren Totpunkt invariabel ist.

17. Motor nach irgendeinem der Ansprüche 1 bis 16, **dadurch gekennzeichnet, dass** die thermischen Transfermittel einen Wärmetauscher (23) aufweisen, in dem das durch das volumetrische System ausgestoßene Arbeitsgas im Wesentlichen gegen die Richtung des vorverdichteten Arbeitsgases fließt.

18. Motor nach einem der Ansprüche 1 bis 17, **dadurch gekennzeichnet, dass** die Einstellungen für unterschiedliche Lastniveaus des Motors solcherart sind, dass sich die Temperatur des heißen Eingangs der thermischen Transfermittel (23) bei Warmbetrieb des Motors kaum ändert, typischerweise um weniger als 100 K, für irgendwelches Lastniveau des Motors zumindest in einer Spanne von üblichen Lastniveaus.

19. Motor nach Anspruch 18, **dadurch gekennzeichnet, dass** die Einstellungen solcherart sind, dass die Expansionskurven des Arbeitsgases, die den Arbeitsgasdruck als Funktion dessen spezifischen Volumens aufzeichnen, für unterschiedliche Lastniveaus zumindest in ihrer den niedrigen Drücken entsprechenden Zone im Wesentlichen überlagerbar sind.

20. Motor nach einem der Ansprüche 1 bis 19, **dadurch gekennzeichnet, dass** die Erwärmung durch homogene Verbrennung eines im Voraus vorbereiteten Gemischs aus Luft, Brennstoff und Rückführungsgas betrieben ist.

21. Motor nach einem der Ansprüche 1 bis 20, **dadurch gekennzeichnet, dass** der Vorverdichtungsdruck zumindest in einem Bereich der Lastniveaus steigt, wenn die Last steigt, wobei der Vorverdichtungsdruck vorzugsweise nur bis zu einer Obergrenze ($p_{3Um}$) steigt, dann geringer als die oder im Wesentlichen gleich der Obergrenze bleibt, wenn das Lastniveau den Lastwert übersteigt, bei dem die Obergrenze erreicht ist.

22. Motor nach einem der Ansprüche 1 bis 21, **dadurch gekennzeichnet, dass** die Vorverdichtungsmittel (18A, 18B, 18C, 18U) zumindest zwei Vorverdichtungsstufen aufweisen, sowie Mittel, um selektiv zumindest eine Vorverdichtungsstufe zu deaktivieren.

23. Motor nach einem der Ansprüche 1 bis 22, **dadurch gekennzeichnet, dass** er Steuermittel (43) aufweist, die den Vorverdichtungsdruck als Funktion des laufenden Betriebspunktes variieren.

24. Motor nach einem der der Ansprüche 1 bis 23, **gekennzeichnet durch** Mittel (31, 36, 53, 53A, 53B, 53U) zum Abkühlen des Arbeitsgases im Verlauf der Vorverdichtung, in denen das zwischen zwei Vorverdichtungsstufen befindliche Arbeitsgas durch Arbeitsgas abgekühlt wird, das aus dem kalten Ausgang der thermischen Transfermittel (23) austritt, und das dann in einer der Motorisierung der zumindest einen (29) der Vorverdichtungsstufen dienenden Vorrichtung (34) expandiert wird.

25. Motor nach einem der Ansprüche 1 bis 24, **dadurch gekennzeichnet, dass** die Vorverdichtungsmittel einen als "autonom" bezeichneten Kompressor (18U) aufweisen, der unabhängig von dem ausgestoßenen Arbeitsgas angetrieben ist, und vorzugsweise mit einem Kompressor (18) eines Turbokompressors (19) in Reihe montiert ist, vorzugsweise dem Turbokompressor nachgeschaltet ist.

**Claims**

1. An internal combustion engine comprising:

   - A power shaft (11) ;
   - means for pre-compression and volume reduction (18, 18A, 18B, 18C, 18U) for effecting pre-compression and reduction of volume per mass unit of a working gas, thereby to obtain a pre-compressed working gas at a first pressure;
   - a positive displacement mechanism (3) having a working chamber (1) partly defined by a movable member (8) coupled to the power shaft (11), and in which the pre-compressed working gas is successively subjected to:

     - a heating by combustion near a top dead center of the movable member, at which the volume of the working chamber is minimal;
     - at least an initial part of an expansion-depressurization, while the movable member moves towards a bottom dead center;
     - a discharge;

   - heat transfer means (23) which, during warm engine operation in a lower range of the load levels in which the engine produces driving torque on the power shaft, withdraw heat from the discharged working gas travelling downstream of the discharge (7) of the positive displacement mechanism (3) at a second pressure lower than the first pressure, and yield said heat to the pre-compressed working gas, thereby to cause the temperature of the pre-compressed working gas to be higher at the outlet of the heat transfer means (23) than at the outlet of the pre-compression means;
   - wherein the pre-compressed working gas, heated in the heat transfer means (23) at a first temperature at a hot outlet of the heat transfer means, is subjected, at least in part in the working chamber (1), to an additional compression with reduction of its volume per mass unit and increase of its temperature beyond the first temperature in the working chamber (1) before beginning of the heating by combustion,
   - **characterized in that** except possibly in at least one depollution apparatus (28), the discharged working gas is in essentially adiabatic conditions between the discharge (7) of the positive displacement mechanism and a hot inlet of the heat transfer means (23), **in that** said engine comprises thermal adjustment means (38, 39, 57, 58, 39U) for moderating the temperature of the pre-compressed working gas reaching the positive displacement mechanism (3) by comparison with the temperature of the discharged working gas available upstream of the heat transfer means (23) when the load level is in intermediate and upper ranges, and **in that** in the upper range the thermal adjustment means cool down the working gas sent to the positive displacement mechanism (3), relatively to the temperature of the end of pre-compression.

2. The engine according to claim 1, **characterized in that** the pre-compression means comprise two stages (18, 18U) separated by an intercooler (57U), and **in that** when the load level is in the upper range of the load levels, the thermal adjustment means allow the pre-compressed working gas selectively to go to the intake of the positive displacement mechanism (3) substantially in its thermodynamic condition of its exit from the intercooler (57U) through a by-pass branch (39U) by-passing the heat transfer means (23).

3. The engine according to claim 2, **characterized in that** in the intermediate range of the load levels, the working gas exiting the intercooler (57U) travels through the upper pre-compression stage (18U) and then for one part through the heat transfer means (23) and for another part through a by-pass branch (39U).

4. The engine according to claim 2 or 3, **characterized in that**, at the transition from the intermediate range to the upper range, the upper pre-compression stage (18U) is progressively de-activated, and conversely at the transition from the upper range to the intermediate range, the upper pre-compression stage (18U) is progressively activated.

5. The engine according to claim 1, **characterized in that** the thermal adjustment means include, for the travel of the pre-compressed working gas, in addition to a heating branch passing through the heat transfer means (23), at least one by-pass branch (39, 39U, 57) which by-passes the heat transfer means, and distribution means (38, 58, 81) in order selectively to cause at least part of the pre-compressed working gas to travel through at least one by-pass branch.

6. The engine according to claim 5, **characterized in that** the distribution means (38, 58, 81) are capable of at least one intermediate position to cause the pre-compressed working gas simultaneously to travel into two parallel branches thereby to obtain at a junction (41, 41U) of the two branches a pre-compressed working gas having a temperature intermediate between those of the two branches at their arrival at the junction.

7. The engine according to claim 5 or 6, **characterized in that** the at least one by-pass branch comprises a cooled-down branch, especially a branch equipped with an intercooler (57).

8. The engine according to one of claims 5 -7, **characterized in that** the heating branch receives the entirety of the pre-compressed working gas when the load level is in the lower range of the load levels.

9. The engine according to one of claim 5 - 7, **characterized in that** the entirety of the discharged working gas travels through the heat transfer means (23) even for operation points where part or the entirety of the pre-compressed working gas travels through the at least one by-pass branch (39, 39U, 57).

10. The engine according to one of claims 1 - 9, **characterized by** an additional heating means (44) capable of heating up the working gas in its path between the hot outlet of the heat transfer means (23) and the intake (4) of the positive displacement mechanism (3), and by means for activating the additional heating means during an initial phase of cold start.

11. The engine according to one of claims 1 - 10, **characterized by** comprising for part of the working gas discharged by the positive displacement mechanism (3) at least one recirculation path extending from a derivation location located between the discharge (7) of the positive displacement mechanism (3) and the hot inlet of the heat transfer means (23), up to a mixture location (40, 40U) located between the hot outlet of the heat transfer means (23) and the intake (4) of the positive displacement mechanism (3).

12. The engine according to one of claims 1 - 11, **characterized in that** the positive displacement mechanism (3) is capable of terminating a discharge phase of the working gas before the top dead center of the movable member (8), thereby to subject to an internal recirculation the part of the working gas trapped in the working chamber (1) at the end of the discharge phase.

13. The engine according to anyone of claims 1 - 12, **characterized in that** an effective volume ratio of the compression between the hot outlet of the heat transfer means (23) and the top dead center in the positive displacement mechanism (3) is smaller than a volume ratio of the expansion in the positive displacement mechanism starting from the top dead center.

14. The engine according to anyone of claims 1 - 13, **characterized in that** the positive displacement mechanism (3) is of the four stroke type comprising a volume increase stroke during which the working gas at the first pressure enters the working chamber (1) and then expands in the working chamber until reaching at the end of said volume increase stroke a third pressure smaller than the first pressure.

15. The engine according to claim 14, **characterized in that** a point of closure (27), with respect to the top dead center and the bottom dead center, of an intake orifice (4) for intake of the working gas into the positive displacement mechanism (3) is controlled in real time as a function of at least one operational parameter of the engine.

16. The engine according to one of claims 1 - 14, **characterized in that** the closure point (27), with respect to the top dead center and the bottom dead center, of an intake orifice (4) of the positive displacement mechanism (4) is invariable.

17. The engine according to one of claims 1 - 16, **characterized in that** the heat transfer means comprise a heat exchanger (23) in which the working gas discharged by the positive displacement mechanism and the pre-compressed working gas flow in essentially opposed directions.

18. The engine according to one of claims 1 - 17, **characterized in that** the adjustments for different engine load levels are such that, in warm engine operation, the temperature of the hot inlet of the heat transfer means (13) does not vary a lot, typically by less than 100K, whatever the load level of the engine, at least in a usual range of load levels.

19. The engine according to claim 18, **characterized in that** the adjustments are such that the expansion curves of the burnt gas in a diagram of the working gas pressure as a function of its volume per mass unit for different load levels are substantially superposed at least in their portion corresponding to the low pressures.

48

**20.** The engine according to anyone of claims 1 - 19, **characterized in that** the heating is operated by homogenous combustion of a pre-constituted mixture of air, fuel and recirculation gas.

**21.** The engine according to one of claims 1 - 20, **characterized in that** at least in a range of load levels the pre-compression pressure increases as the load increases, wherein the pre-compression pressure preferably increases only up to a top value ($p_{3Um}$) and then remains below or substantially equal to the top value when the load exceeds the level for which the top value has been reached.

**22.** The engine according to one of claims 1 - 21, **characterized in that** the pre-compression means (18A, 18B, 18C, 18U) comprise at least two pre-compression stages, and means for selectively deactivating at least one pre-compression stage.

**23.** The engine according to one of claims 1 - 22, **characterized by** comprising control means (43) which cause the pre-compression pressure to vary as a function of the current operation point.

**24.** The engine according to anyone of claims 1 - 23, **characterized by** means (31, 36, 53, 53A, 53B, 53U) for cooling down the working gas during said pre-compression, and in the means for cooling down the working gas during pre-compression, the working gas between two pre-compression stages is cooled down by working gas coming from the cold outlet of the heat transfer means (23) and then expanded in an apparatus (34) for the energization of at least one (29) of the pre-compression stages.

**25.** The engine according to one of claims 1 - 24, **characterized in that** the pre-compression means comprise a so-called "autonomous" compressor (18U) driven independently from the discharged working gas and preferably mounted in series with a compressor (18) of a turbocharger (19), preferably downstream of said turbocharger compressor.

Fig. 1

Fig. 2    Fig. 3    Fig. 4    Fig. 5    Fig. 6

Fig. 7

Fig. 7A

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

## Fig. 21

## Fig. 22

Fig. 23

Fig. 24

Fig. 25

Fig. 26

Fig. 27

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2004270625 A
- US 4520628 A
- US 8042335 B2
- US 8037872 B2
- FR 2876418
- FR 3000140
- WO 2009086187 A
- US 4700542 A
- DE 102007005246
- FR 2308785
- DE 202013006352 U
- US 8468822 B
- DE 102012206372
- JP 2011047376 B